# EUROPÄISCHE PATENTSCHRIFT

(11) **EP 0 838 504 B1**
(45) Veröffentlichungstag und Bekanntmachung des Hinweises auf die Patenterteilung: **07.06.2000**
(21) Anmeldenummer: 97117735.7
(22) Anmeldetag: 14.10.1997
(51) Int. Cl.: C09B 62/04, C09B 62/507

(54) **Wasserlösliche faserreaktive Farbstoffe, Verfahren zu ihrer Herstellung und ihre Verwendung**
Water-soluble fiber-reactive dyes, process for their preparation and the use thereof
Colorants aquasolubles réactifs sur la fibre, procédé pour leur préparation et leur utilisation

(30) Priorität: 21.10.1996 DE 19643306
(43) Veröffentlichungstag der Anmeldung: 29.04.1998
(73) Patentinhaber: DyStar Textilfarben GmbH & Co. Deutschland KG, 60318 Frankfurt am Main (DE)
(72) Erfinder: Ehrenberg, Stefan, Dr., 60528 Frankfurt (DE); Schumacher, Christian, Dr., 65779 Kelkheim (DE)

(56) Entgegenhaltungen:
- EP-A- 0 493 759
- EP-A- 0 675 172
- EP-A- 0 685 464
- EP-A- 0 733 680

## Beschreibung

Die Erfindung liegt auf dem technischen Gebiet der faserreaktiven Farbstoffe.

Die vorliegende Erfindung betrifft neue faserreaktive Farbstoffe der allgemeinen Formel (1) 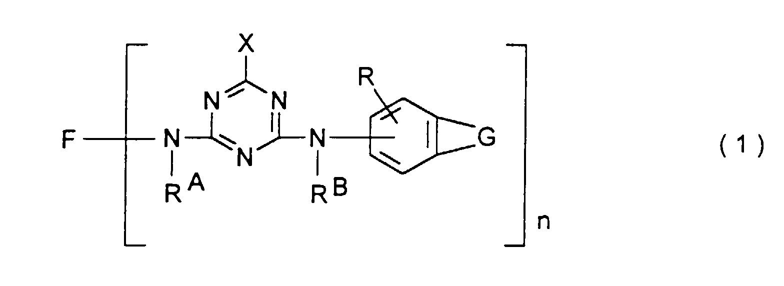 in welcher bedeuten:
- F: ist der Rest eines sulfogruppenhaltigen Mono-, Dis- oder Polyazofarbstoffes, wie Trisazofarbstoffes, oder eines Schwermetallkomplex-Mono-, -Dis- oder -Trisazofarbstoffes oder eines Anthrachinon-, Azomethin-, Phenazin-, Stilben-, Triphenylmethan-, Xanthen-, Thioxanthen-, Nitroaryl-, Naphthochinon-, Pyrenchinon-, Perylentetracarbimid-, Formazan-, Kupferformazan-, Phthalocyanin-, Kupferphthalocyanin-, Nickelphthalocyanin- oder Kobaltphthalocyanin-Farbstoffes oder Triphendioxazin-Farbstoffes;
- n: ist die Zahl 1 oder 2, bevorzugt 1;
- R^{A}: ist Wasserstoff oder Alkyl von 1 bis 4 C-Atomen, wie Methyl und Ethyl, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbethoxy und Carbomethoxy, Carboxy, Sulfamoyl, Sulfo, Sulfato oder Phosphato substituiert sein kann, und ist bevorzugt Methyl oder Ethyl und insbesondere bevorzugt Wasserstoff;
- R^{B}: ist Wasserstoff oder Alkyl von 1 bis 6 C-Atomen, bevorzugt von 1 bis 4 C-Atomen, wie insbesondere Methyl oder Ethyl, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbomethoxy und Carbethoxy, Carboxy, Sulfamoyl, Sulfo, Sulfato, Phosphato, Phenyl oder Sulfophenyl substituiert sein kann, oder ist Phenyl, das durch 1, 2 oder 3, bevorzugt 1 oder 2, Substituenten aus der Gruppe Halogen, wie Chlor und Brom, Alkyl von 1 bis 4 C-Atomen, wie Methyl, Alkoxy von 1 bis 4 C-Atomen, wie Methoxy und Ethoxy, Sulfo und Carboxy, bevorzugt durch Methyl, Methoxy und/oder Sulfo, substituiert sein kann, und ist bevorzugt Wasserstoff;
- X: ist Halogen, wie Fluor und Chlor;
- R: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor oder Brom, oder Sulfo, bevorzugt Wasserstoff;
- G: bildet zum Benzolring den Rest eines Heterocyclus, der mindestens eine Carbonamidgruppe der Formel -CO-N(¹⁰)- enthält, in welcher R¹⁰ Wasserstoff, Alkyl von 1 bis 4 C-Atomen, wie Methyl und Ethyl, oder gegebenenfalls durch 1 bis 3 Substituenten aus der Gruppe Sulfo, Carboxy, Alkoxy von 1 bis 4 C-Atomen, wie Methoxy, Alkyl von 1 bis 4 C-Atomen, wie Methyl, Halogen, wie Chlor, Cyano, Nitro und Amino substituiertes Aryl von 6 bis 10 C-Atomen, wie Phenyl oder Naphthyl, ist, und der gegebenenfalls 1 oder 2 weitere Heterogruppen aus der Reihe -O- , -S- und -N(R¹⁰)- mit R¹⁰ der oben genannten Bedeutung besitzt, und ist bevorzugt eine Gruppe der Formel (a), (b), (c), (d), (e), (f), (g), (h) oder (j) 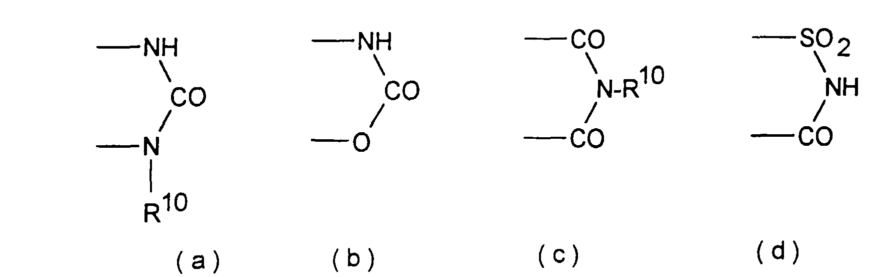 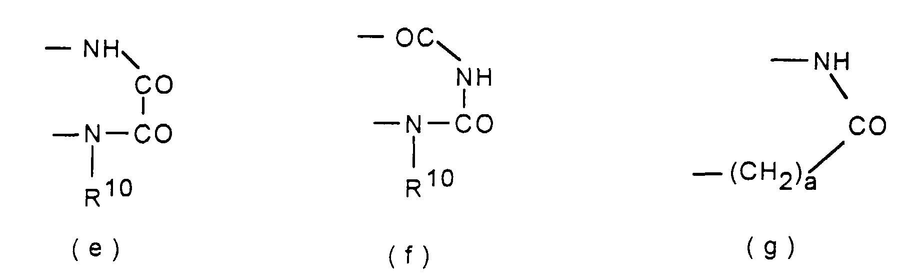 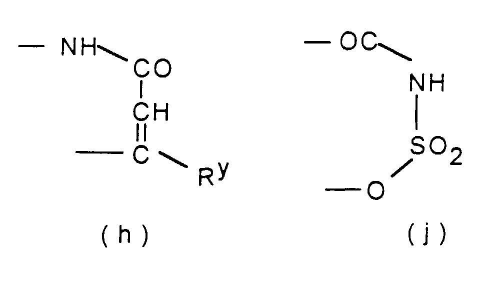 in welchen R¹⁰ die obengenannte Bedeutung hat, in Formel (g) der Index a für die Zahl 1 oder 2 steht und R^{y} Wasserstoff oder Alkyl von 1 bis 4 C-Atomen, wie Ethyl und insbesondere Methyl ist, das durch Alkoxy von 1 bis 4 C-Atomen, wie Ethoxy und Methoxy, Carboxy, Sulfo, Sulfato oder Phosphato substituiert sein kann, oder Phenyl oder Naphthyl ist;
die Verbindungen der Formel (1) besitzen mindestens eine, bevorzugt mehrere, wie zwei, drei, vier oder fünf, Sulfogruppen.

Sowohl in den oben angegebenen allgemeinen Formeln als auch in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Bevorzugt ist der Rest R¹⁰ Methyl, Ethyl, Phenyl, Monosulfophenyl, Disulfophenyl, Trisulfophenyl, Naphthyl, Monosulfonaphthyl, Disulfonaphthyl oder Trisulfonaphthyl und insbesondere bevorzugt Wasserstoff. Von den oben genannten Resten der allgemeinen Formeln (a) bis (j) sind als bevorzugt die der Formeln (a), (b), (c), (f), (e) und (h) zu nennen.

Bevorzugt ist F der Rest eines Mono- oder Disazofarbstoffes oder der Rest eines Schwermetallkomplex-Azofarbstoffes, wie eines 1:2-Chromkomplex-, 1:2-Kobaltkomplex- und insbesondere eines o,o'-1:2-Kupferkomplex-Monoazo- oder -Disazofarbstoffes, oder der Rest eines Anthrachinon- oder Kupferformazan-, eines Nickel- oder Kupferphthalocyaninfarbstoffes oder Triphendioxazinfarbstoffes.

Der Farbstoffrest F besitzt eine oder mehrere, wie 2 bis 6, Sulfogruppen. Der Rest F kann weitere bei organischen Farbstoffen übliche Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Alkanoylaminogruppen von 2 bis 5 C-Atomen, wie die Acetylamino- und Propionylaminogruppe; gegebenenfalls durch Sulfo, Carboxy, Methyl, Ethyl, Methoxy, Ethoxy und/oder Chlor substituierte Benzoylaminogruppen; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-(C₁-C₄-Alkyl)-N-phenyl-amino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkyl-sulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl-sulfamoyl-, Ureido-, Hydroxy-, Carboxy-, Sulfomethyl- und Sulfogruppen. Der Farbstoffrest F kann weiterhin eine oder zwei faserreaktive Gruppen der allgemeinen Formel Y-SO₂-W^{O}- besitzen, in welcher W^{O} einen Alkylenrest von 1 bis 4 C-Atomen oder eine Aminogruppe der Formel -N(CH₃)- oder -N(C₂H₅)- oder eine Gruppe der Formel -(C₂-C₄-alkylen)-NH- bedeutet oder für eine direkte kovalente Bindung steht und Y Vinyl ist oder β-Sulfatoethyl, β-Thiosulfatoethyl, β-Phosphatoethyl, β-(C₂-C₅-Alkanoyloxy)-ethyl, wie β-Acetyloxyethyl, β-Benzoyloxyethyl, β-(Sulfobenzoyloxy)-ethyl, β-(p-Toluolsulfonyloxy)-ethyl oder β-Halogenoethyl, wie β-Bromethyl oder β-Chlorethyl ist, und bevorzugt Vinyl und insbesondere bevorzugt β-Chlorethyl oder β-Sulfatoethyl ist.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , in welchen
- M: Wasserstoff oder ein Alkalimetall, wie Natrium, Kalium oder Lithium, oder das Moläquivalent eines Erdalkalimetalls, wie des Calciums, und bevorzugt Wasserstoff oder ein Alkalimetall ist.

Wichtige Azofarbstoffe entsprechend der allgemeinen Formel (1) sind solche, in denen F den Rest eines sulfogruppenhaltigen Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet. Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (3a), (3b) und (3c)

D¹ - N = N - (E - N = N)ᵥ - K² - Z (3a)

Z - D² - N = N - (E - N = N)ᵥ - K¹ (3b)

Z - D² - N = N - (E - N = N)ᵥ - K² - Z (3c)

und die davon abgeleiteten Schwermetallkomplex-Verbindungen, wie 1:1-Kupferkomplex-Verbindungen, in welchen
- D¹: der Rest einer Diazokomponente der Benzol- oder Naphthalinreihe ist,
- D²: der Rest einer Diazokomponente der Diaminobenzol- oder Diaminonaphthalin-Reihe ist,
- E: der Rest einer Mittelkomponente der Benzol- oder Naphthalinreihe bedeutet,
- K¹: der Rest einer Kupplungskomponente der Benzol-, Naphthalin-, Pyrazolon-, 6-Hydroxypyridon(2)- oder Acetessigsäurearylamid-Reihe ist,
- K²: der bivalente Rest einer Kupplungskomponente der Anilin-, Aminonaphthalin-, Acetessigsäure-(aminoaryl)-amid- oder 1 -Aminophenyl-pyrazolon-Reihe ist,
- wobei D¹, D², E, K¹ und K²: einen oder mehrere der für F genannten Substituenten enthalten kann, wobei die Reste D¹, D², E, K¹ und K² zusammen mindestens eine, bevorzugt mindestens zwei, Sulfogruppen besitzen,
- v: die Zahl Null oder 1 ist und
- Z: eine Gruppe der allgemeinen Formel (2) 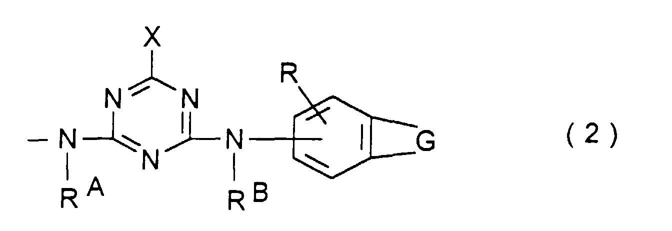 in welcher R^{A}, R^{B}, X, R und G die obengenannten Bedeutungen haben.

Bevorzugt sind weiterhin Disazofarbstoffe der allgemeinen Formel (3d) und (3e)

D¹ - N = N - K^{o} - N = N - D² - Z (3d)

Z - D² - N = N - K^{o} - N = N - D² - Z (3e)

in welchen Z, D¹ und D² die obengenannten Bedeutungen haben und K^{o} den Rest einer bivalenten Kupplungskomponente der Naphthalinreihe darstellt, wobei D¹, D² und K^{o} die für F genannten Substituenten enthalten können, wobei D¹, D² und K^{o} zusammen mindestens eine Sulfogruppe enthalten.

Azofarbstoffe der allgemeinen Formeln (3d) und (3e) sind insbesondere Farbstoffe der allgemeinen Formel (3f) 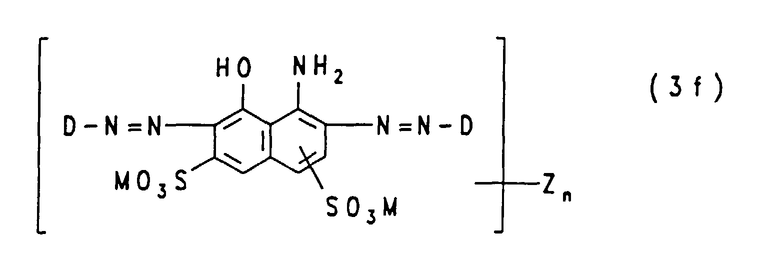 in welcher
- n: die obengenannte Bedeutung besitzt,
- M: für Wasserstoff oder Alkalimetall, wie Natrium, Kalium oder Lithium, oder das Moläquivalent eines Erdalkalimetalls, wie des Calciums, bedeutet,
- Z: für einen Rest der allgemeinen Formel (2) steht, der im Falle von n gleich 1 an einem der Reste D steht und im Falle von n gleich 2 an beide D gebunden ist, und
- D: jedes die Bedeutung von D¹ oder D² in Abhängigkeit davon, ob an D der Rest Z gebunden ist, hat.

Von den 1:1-Kupferkomplex-Azofarbstoffen sind beispielsweise solche der allgemeinen Formel (3g) und (3h) 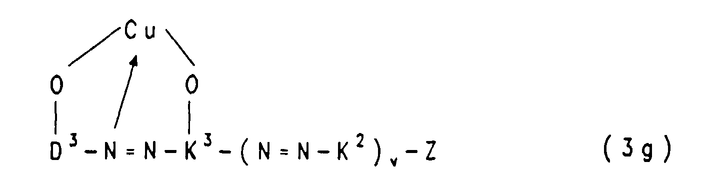 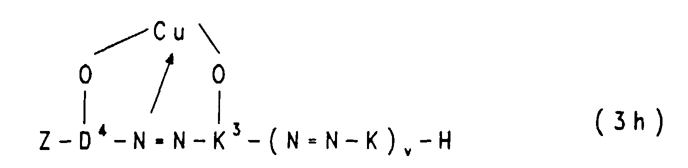 hervorzuheben, in welchen
- Z, K² und v: die obengenannten Bedeutungen haben,
- D⁴: für den Rest einer Diazokomponente steht, die in ortho-Stellung zur Azogruppe die kupferkomplexbindende Oxygruppe enthält, und
- K³: für den Rest einer Kupplungskomponente steht, die in ortho-Stellung oder vicinaler Stellung zur Azogruppe die kupferkomplexbindende Oxygruppe besitzt, und
- K: den bivalenten Rest einer Kupplungskomponente bedeutet.

Aromatische Reste von Diazokomponenten, die keine faserreaktive Gruppe der Formel (2) tragen, wie von solchen, die den allgemeinen Formeln D¹-NH₂ bzw. D³-NH₂ entsprechen, sind beispielsweise solche der allgemeinen Formeln (4a), (4b), (5a) und (5b) 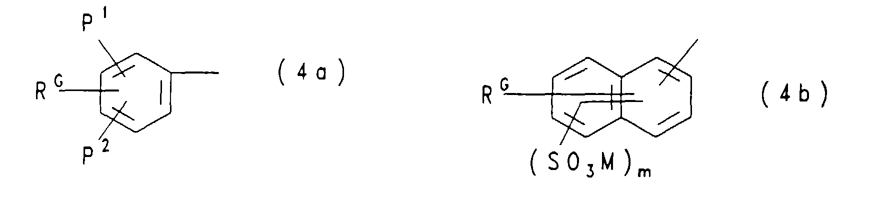 in welchen
- R^{G}: Wasserstoff, Sulfo oder eine Gruppe der Formel Y-SO₂-W^{o}- mit W^{o} und Y der obigen Bedeutung ist,
- P¹: Wasserstoff, Methyl, Ethyl, Methoxy, Ethoxy, Alkanoyl von 2 bis 5 C-Atomen, wie Acetyl und Propionyl, Cyano, Sulfo, Carboxy, Alkoxycarbonyl von 2 bis 5 C-Atomen, wie Methoxycarbonyl und Ethoxycarbonyl, Carbamoyl, N-(C₁-C₄-Alkyl)-carbamoyl, Fluor, Chlor, Brom oder Trifluormethyl ist,
- P²: Wasserstoff, Methyl, Ethyl, Methoxy, Ethoxy, Cyano, Nitro, Carboxy, Sulfo, Chlor, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-(C₁-C₄-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,
wobei der Benzolkern in Formeln (4a) und (4b) zusätzlich in ortho-Stellung zur freien Bindung, die an die Azogruppe führt, eine Hydroxygruppe enthalten kann,
- m: die Zahl Null, 1 oder 2 bedeutet (wobei diese Gruppe im Falle von m gleich Null ein Wasserstoffatom bedeutet) und
- M: die obengenannte Bedeutung hat.

Bevorzugt ist hiervon P¹ gleich Wasserstoff, Methyl, Methoxy, Brom, Chlor, Sulfo und Carboxy sowie P² gleich Wasserstoff, Methyl, Methoxy, Chlor, Carboxy, Sulfo und Acetylamino.

Gruppen der allgemeinen Formeln (4a) und (4b) sind beispielsweise: Phenyl, 2-Methyl-phenyl, 3- und 4-Methyl-phenyl, 2-Methoxy-phenyl, 3- und 4-Methoxy-phenyl, 2-Chlor-phenyl, 3- und 4-Chlor-phenyl, 2,5-Dichlor-phenyl, 2,5-Dimethyl-phenyl, 2-Methoxy-5-methyl-phenyl, 2-Methoxy-4-nitro-phenyl, 4-Phenyl-phen-1-yl, 3-Phenoxy-phenyl, 2-Sulfamoyl-phenyl, 3- und 4-Sulfamoyl-phenyl, 2-, 3- und 4-(N-Methyl-sulfamoyl)-, -(N-Ethyl-sulfamoyl)-, -(N,N-Dimethyl-sulfamoyl)- und -(N,N-Diethyl-sulfamoyl)-phenyl, 2-Sulfo-5-trifluormethyl-phenyl, 2-Nitro-phenyl, 3- und 4-Nitro-phenyl, 3-Acetylamino-phenyl, 4-Acetylamino-phenyl, 2-Carboxy-phenyl, 4-Carboxy-phenyl, 3-Carboxy-phenyl, 3-Chlor-6-carboxy-phenyl, 2-Sulfo-phenyl, 3-Sulfo-phenyl, 4-Sulfo-phenyl, 2,5-Disulfo-phenyl, 2,4-Disulfo-phenyl, 3,5-Disulfo-phenyl, 2-Methyl-5-sulfo-phenyl, 2-Methoxy-5-sulfo-phenyl, 2-Methoxy-4-sulfo-phenyl, 2-Sulfo-5-methyl-phenyl, 2-Methyl-4-sulfo-phenyl, 3-Sulfo-4-methoxy-phenyl, 5-Sulfo-2-ethoxy-phenyl, 4-Sulfo-2-ethoxy-phenyl, 2-Carboxy-5-sulfo-phenyl, 2-Carboxy-4-sulfo-phenyl, 2,5-Dimethoxy-4-sulfo-phenyl, 2,4-Dimethoxy-5-sulfo-phenyl, 2-Methoxy-5-methyl-4-sulfo-phenyl, 2-Sulfo-4-methoxy-phenyl, 2-Sulfo-4-methyl-phenyl, 2-Chlor-4-sulfo-phenyl, 2-Chlor-5-sulfo-phenyl, 2-Brom-4-sulfo-phenyl, 2,6-Dichlor-4-sulfo-phenyl, 2-Sulfo-4- und -5-chlor-phenyl, 2-Sulfo-4,5-dichlor-phenyl, 2,5-Dichlor-6-sulfo-phenyl, 2,5-Dichlor-4-sulfo-phenyl, 2-Sulfo-5-chlor-4-methyl-phenyl, 2-Sulfo-4-chlor-5-methyl-phenyl, 2-Sulfo-5-methoxy-phenyl, 2-Methoxy-5-sulfo-phenyl, 2-Methoxy-4-sulfo-phenyl, 2,4-Dimethoxy-6-sulfo-phenyl, 2-Sulfo-5-acetvlamino-4-methyl-phenyl, 2-Methyl-4,6-disulfo-phenyl, 2,5-Disulfo-4-methoxy-phenyl, 2-Sulfo-5-nitro-phenyl, 2-Sulfo-4-nitro-phenyl, 2,6-Dimethyl-3-sulfo-phenyl, 2,6-Dimethyl-4-sulfo-phenyl, 3-Acetylamino-6-sulfo-phenyl, 4-Acetylamino-2-sulfo-phenyl, 4-Sulfo-naphth-1-yl, 3-Sulfo-naphth-1-yl, 5-Sulfo-naphth-1-yl, 6-Sulfo-naphth-1-yl, 7-Sulfo-naphth-1-yl, 8-Sulfo-naphth-1-yl, 3,6-Disulfo- und 5,7-Disulfo-naphth-1-yl, 3,7-Disulfo-naphth-1-yl, 3,6,8-Trisulfo-naphth-1-yl, 4,6,8-Trisulfo-naphth-1-yl, 5-Sulfo-naphth-2-yl, 6- oder 8-Sulfo-naphth-2-yl, 3,6,8-Trisulfo-naphth-2-yl, 1,5,7-Trisulfo-naphth-2-yl, 1,7-Disulfo-naphth-2-yl, 5,7-Disulfo-naphth-2-yl, 2,5,7-Trisulfo-naphth-1-yl, 4,6,8-Trisulfo-naphth-2-yl, 6,8-Disulfo-naphth-2-yl, 1,6-Disulfo-naphth-2-yl, 1-Sulfo-naphth2-yl, 1,5-Disulfo-naphth-2-yl, 3,6-Disulfo-naphth-2-yl, 4,8-Disulfo-naphth-2-yl, 2-Hydroxy-5-sulfo-phenyl, 2-Hydroxy-4-sulfo-phenyl, 2-Hydroxy-3,5-disulfo-phenyl₁ 2-Hydroxy-5-acetylamino-3-sulfo-phenyl, 2-Hydroxy-3-acetylamino-4-sulfo-phenyl, 2-Hydroxy-5-chlor-4-sulfo-phenyl, 2-Hydroxy-5-methylsulfonyl-phenyl, 2-Hydroxy-6-nitro-4-sulfo-naphth-1-yl und 1-Hydroxy-4,8-disulfo-naphth-2-yl, 2-(β-Sulfatoethvlsulfonyl]-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(β-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl₁ 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4-oder -5-(β-sulfatoethylsulfonyl)-phenyl, 2-Chlor-4- oder -5-(β-chlorethylsulfonyl)-phenyl, 2-Hydroxy-5-(β-sulfatoethylsulfonyl)-phenyl, 2-Hydroxy-3-sulfo-5-(β-sulfatoethylsulfonyl)-phenyl, 3- oder 4-(β-Acetoxyethylsulfonyl)-phenyl, 6-Carboxy-1 -sulfo-naphth-2-yl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfonaphth-2-yl, 5-(β-Sulfatoethylsulfonyl)-1 -sulfo-naphth-2-yl, 8-(β-Sulfatoethylsulfonyl)-6-sulfo-naphth-2-yl, 4-[N-Methyl-N-(β-sulfatoethylsulfonyl]-amino-phenyl, 3-[N-Methyl-N-(β-sulfatoethylsulfonyl)]-amino-phenyl, 4-[β-(β'-Sulfatoethylsulfonyl)-ethyl]-phenyl, 3- oder 4-[β-(β'-Chlorethylsulfonyl)-ethylamino]-phenyl, 3- oder 4-[β-(β'-Sulfatoethylsulfonyl)-ethylamino]-phenyl, 3- oder 4-[y-(β'-Chlorethylsulfonyl)-propylamino]-phenyl, 3- oder 4-[γ-(β'-Sulfatoethylsulfonyl)-propylamino]-phenyl, 3- oder 4-[γ-(Vinylsulfonyl)-propylamino]-phenyl, 4-[β-(β'-Sulfatoethylsulfonyl)-ethylamino]-2- oder -3-sulfo-phenyl, 4-[β-(β'-Chlorethylsulfonyl)-ethylamino]-2- oder -3-sulfo-phenyl, 4-[γ-(β'-Sulfatoethylsulfonyl)-propylamino]-2- oder -3-sulfo-phenyl, 4-[γ-(β'-Chlorethylsulfonyl)-propylamino]-2- oder -3-sulfo-phenyl, 4-[β-(β'-Chlorethylsulfonyl)-ethylamino]-2-carboxy-phenyl, 4-[β-(β'-Sulfatoethylsulfonyl)-ethylamino]-2-carboxy-phenyl, 4-[γ-(β'-Chlorethylsulfonyl)-propylamino]-2-carboxy-phenyl und 4-[γ-(β'-Sulfatoethylsulfonyl)-propylamino]-2-carboxy-phenyl.

Gruppen entsprechend den allgemeinen Formelresten D-N = N-E- bzw. D¹-N = N-E- sind beispielsweise 4-(4'-Sulfo-phenyl)-azo-2-sulfo-phenyl, 4-(2',4'-Disulfo-phenyl)-azo-2-methoxy-5-methyl-phenyl, 4-(2',5'-Disulfo-phenyl)-azo-2-methyl-5-methoxy-phenyl, 4-(3',6',8'-Trisulfo-naphth-2'-yl)-azo-3-ureido-phenyl, 4-(4',8'-Disulfo-naphth-2'-yl]-azo-3-acetylamino-phenyl, 7-(1',5'-Disulfo-naphth-2'-yl)-azo-6-sulfo-8-hydroxy-naphth-3-yl und 4-(4'-Sulfo-phenyl)-azo-6-sulfo-naphth-1-yl, 4-[4'-(β-Sulfatoethylsulfonyl)-phenyl]-azo-2-methyl-5-methoxy-phenyl, 4-[3'-(β'-Sulfatoethylsulfonyl)-phenyl]-azo-3-methyl-phenyl, 4-[4'-(β-Sulfatoethylsulfonyl)-phenyl]-azo-3-ureido-phenyl, 4-[6'-(β-Sulfatoethylsulfonyl)-naphth-2'-yl]-azo-3-ureido-phenyl, 7-[2'-Methoxy-5'-(β-sulfatoethylsulfonyl)-phenyl]-azo-8-hydroxy-6-sulfo-naphth-3-yl, 4-(2',5'-Disulfo-phenyl)-azo-6- oder -7-sulfo-naphth-1-yl, 4-(2',4'-Disulfo-phenyl)-azo-6- oder -7-sulfo-naphth-1-yl, 4-(4',8'-Disulfo-naphth-2'-yl)-azo-6- oder -7-sulfo-naphth-1-yl, 4-(3',6',8'-Trisulfo-naphth-2'-yl)-azo-6- oder -7-sulfo-naphth-1-yl und 4-(4',6',8'-Trisulfo-naphth-2'-yl)-azo-6- oder -7-sulfo-naphth-1-yl.

Aromatische Reste Z-D²- von als Diazokomponenten dienenden Verbindungen der allgemeinen Formeln Z-D²-NH₂ oder von deren Diaminobenzol- und Diaminonaphthalin-Verbindungen entsprechend den allgemeinen Formeln H₂N-D²-NH₂ sind bevorzugt Reste der allgemeinen Formeln (6a) und (6b) 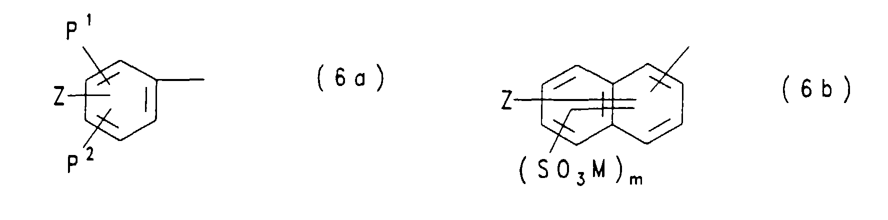 in welchen Z, M, m, P¹ und P² die oben angegebenen, insbesondere bevorzugten Bedeutungen haben, wobei der jeweilige Benzolkern in ortho-Stellung zur freien Bindung, die zur Azogruppe führt, zusätzlich eine Hydroxygruppe enthalten kann.

Aromatische Reste E einer kupplungsfähigen und diazotierbaren Verbindung der allgemeinen Formel H-E-NH₂ sind beispielsweise solche der allgemeinen Formeln (7a), (7b) und (7c) 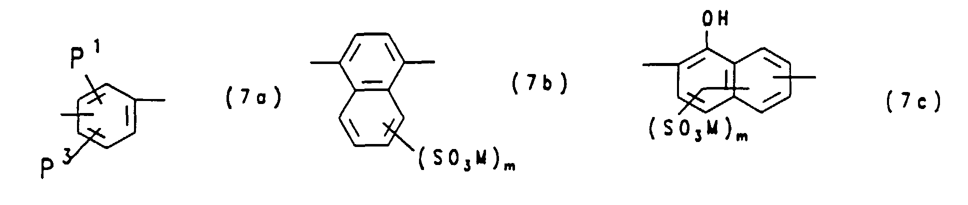 in welchen
- P¹, M und m: die oben angegebenen Bedeutungen haben und
- P³: Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Fhenylureido, Alkylureido mit 1 bis 4 C-Atomen im Alkylrest, Phenylsulfonyl oder Alkylsulfonyl von 1 bis 4 C-Atomen ist.

Reste K¹ von Kupplungskomponenten der allgemeinen Formel H-K¹ , die keine faserreaktive Gruppe der Formel (2) tragen, sind beispielsweise solche der allgemeinen Formeln (8a) bis (8h) 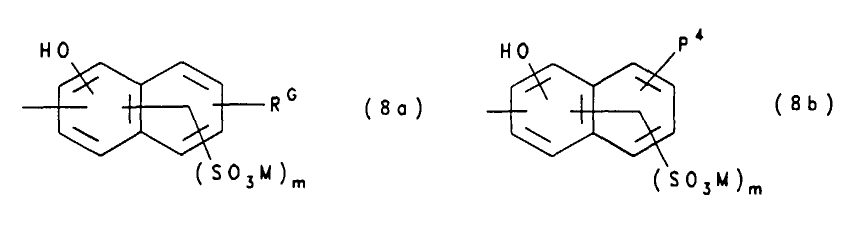 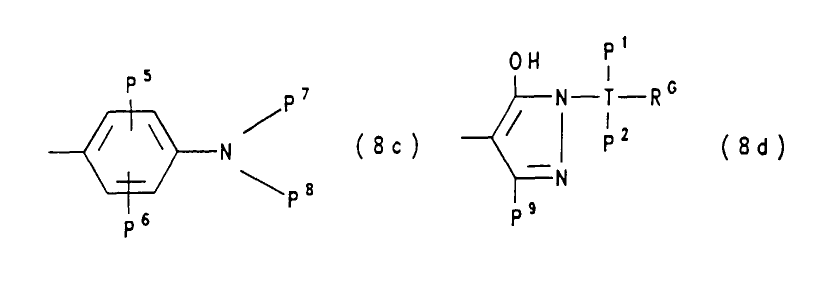 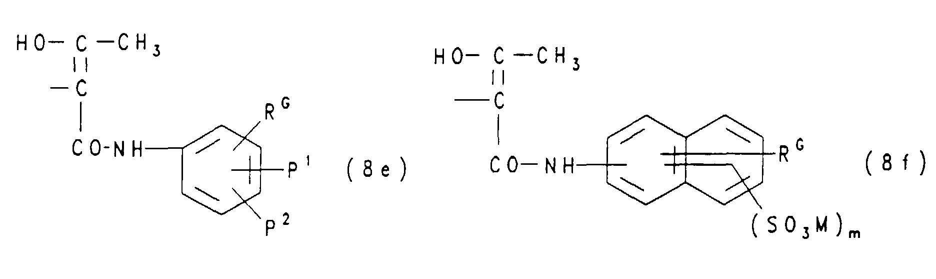 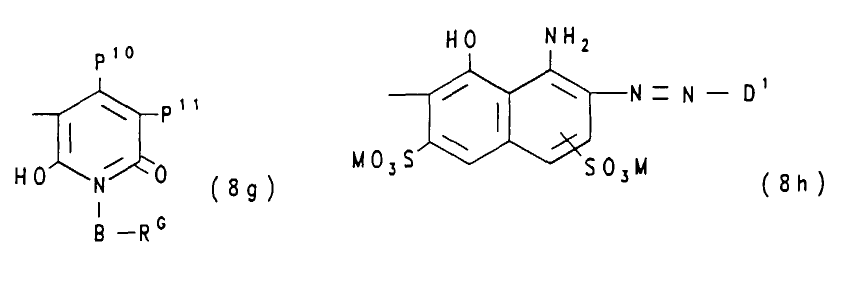 in welchen
- R^{G}, P¹, P², m und M: die obengenannten Bedeutungen haben,
- P⁴: Alkanoylamino von 2 bis 5 C-Atomen, wie Propionylamino und insbesondere Acetylamino, oder Phenylureido ist, das im Phenylrest durch Substituenten aus der Gruppe Chlor, Methyl, Methoxy, Sulfo und Carboxy und/oder durch eine Gruppe -SO₂-Y mit Y einer der obigen Bedeutungen substituiert sein kann, oder Benzoylamino ist, das im Phenylrest durch Substituenten aus der Gruppe Chlor, Methyl, Methoxy, Nitro, Sulfo und Carboxy und/oder durch eine Gruppe -SO₂-Y mit Y einer der obigen Bedeutungen substituiert sein kann,
- P⁵: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Sulfo ist,
- P⁶: Wasserstoff, Alkyl von 1 bis 4 C-Atomen, wie Methyl und Ethyl, Alkoxy von 1 bis 4 C-Atomen, wie Methoxy und Ethoxy, Chlor, Alkanoylamino von 2 bis 7 C-Atomen, wie Acetylamino und Propionylamino, Ureido oder Phenylureido ist,
- P⁷: Wasserstofff oder Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann,
- P⁸: Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist,
- P⁹: Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist
- T: für einen Benzol- oder Naphthalinring, bevorzugt Benzolring, steht,
- P¹⁰: Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen oder Phenyl ist, bevorzugt Alkyl von 1 bis 4 C-Atomen oder Phenyl ist,
- P¹¹: Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,
- B: Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und
- D¹: ein Rest der allgemeinen Formel (4a) oder (4b) ist.

Reste -K²-Z von Kupplungskomponenten der allgemeinen Formel H-K²-Z bzw. H-K²-N(R^{A})H, in die der faserreaktive Rest entsprechend der später angegebenen Gruppierung Z¹ nachträglich eingeführt werden muß, sind beispielsweise Reste der allgemeinen Formeln (9a) bis (9h) 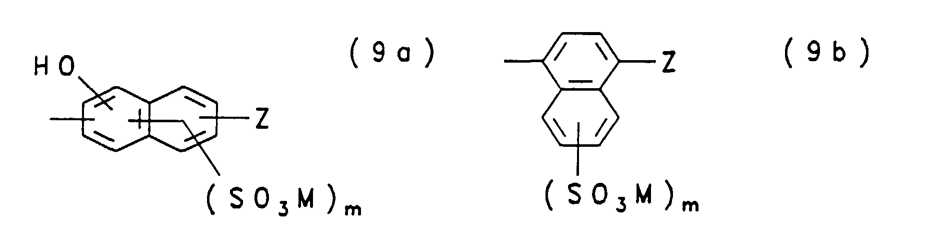 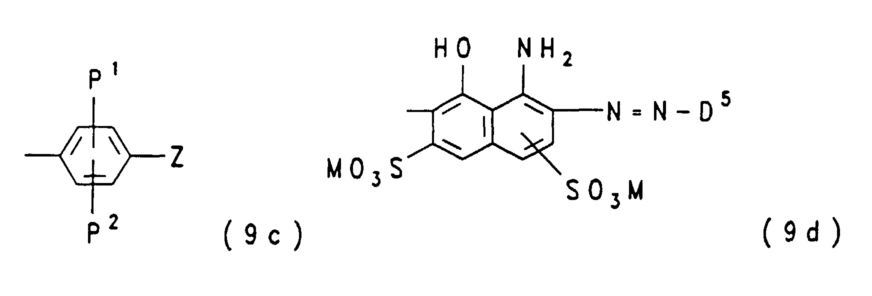 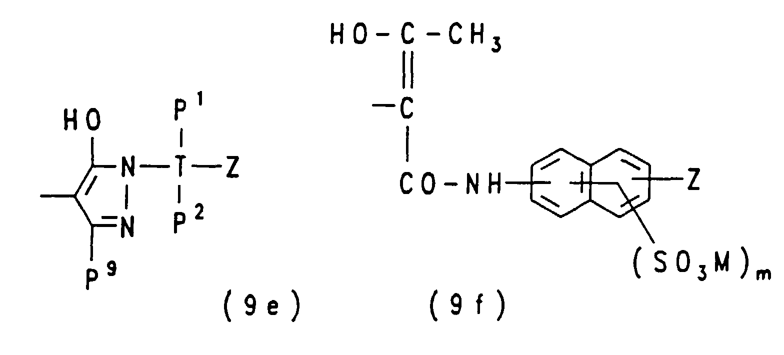 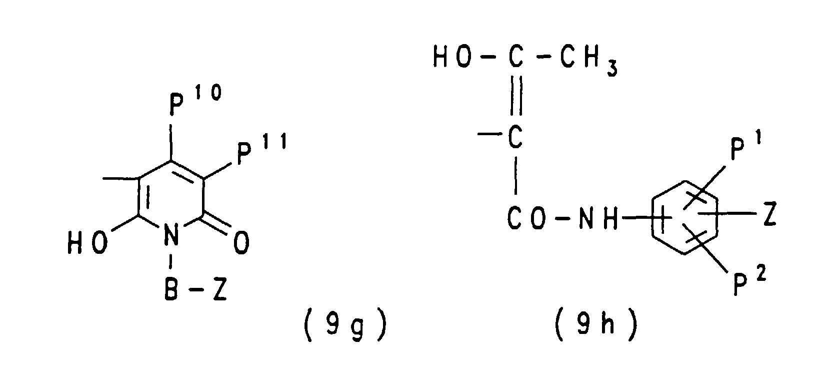 in welchen
P¹, P², P⁹, P¹⁰, P¹¹, B, T, M, m und Z die oben angegebenen, insbesondere bevorzugten, Bedeutungen haben und
- D⁵: als Rest einer Diazokomponente ein Rest der obengenannten und definierten allgemeinen Formel (6a) oder (6b) ist.

In den obigen Formeln (8a), (8b) und (9a) steht die freie Bindung, die zur Azogruppe führt, in ortho-Stellung zur Hydroxygruppe an den aromatischen Kern gebunden.

Reste K³ in den Formeln (3g) und (3h) mit einem metallkomplex-bindenden Sauerstoffatom sind insbesondere solche der Formeln (10a) bis (10e) 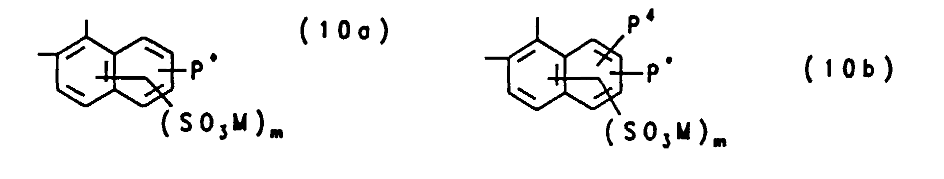 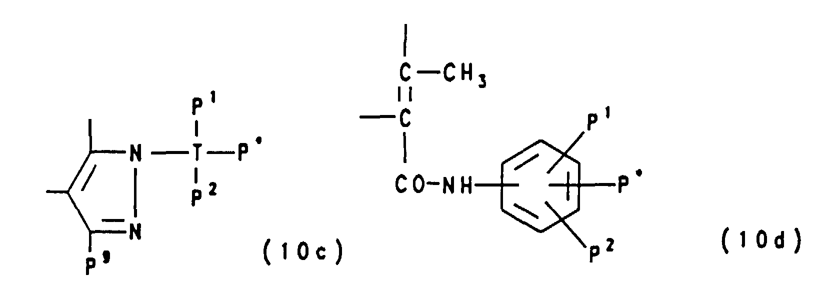 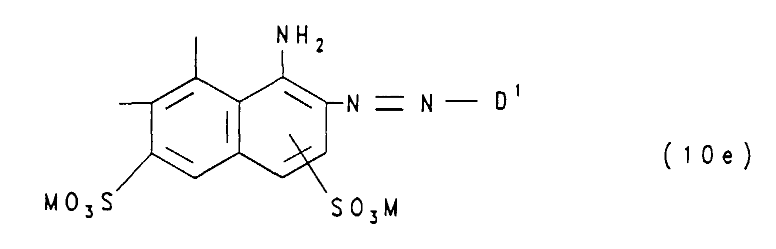 in welchen die einzelnen Formelglieder eine der obengenannten Bedeutungen haben und
- P^{∗}: Wasserstoff oder ein Rest Z oder eine Gruppierung der Formel -N = N-K²-Z oder -N = N-K-H mit K², Z und K der obengenannten Bedeutung ist.

Von den Azofarbstoffen sind weiterhin bevorzugt solche, die den allgemeinen Formeln (12A) bis (12S) 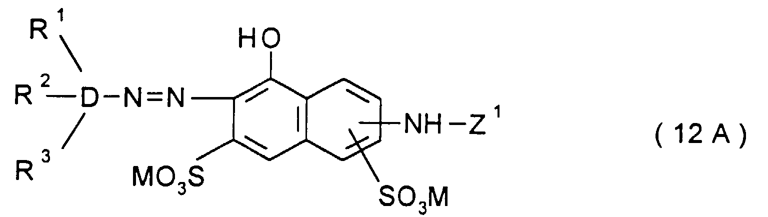 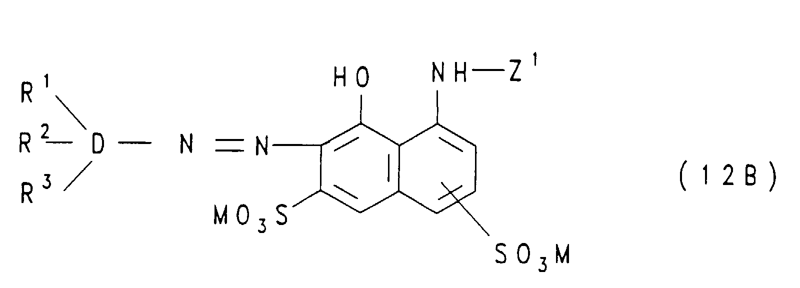 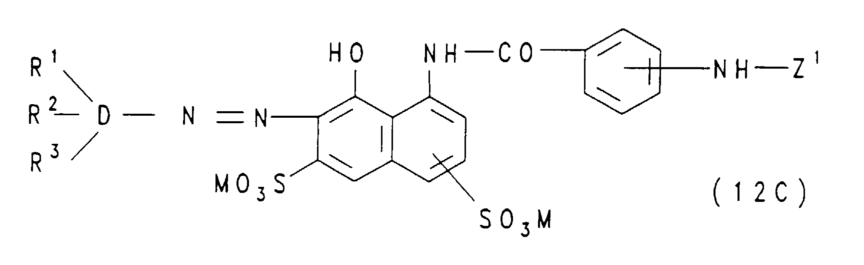 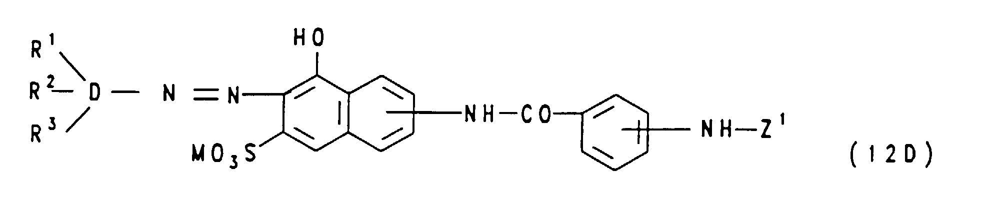 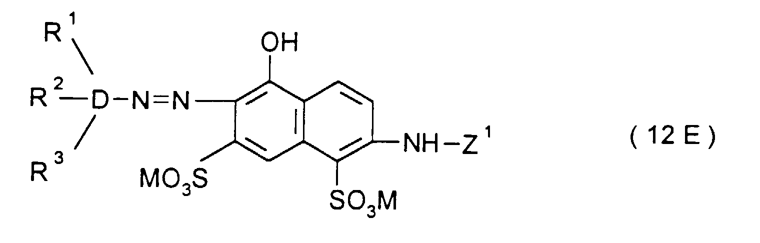 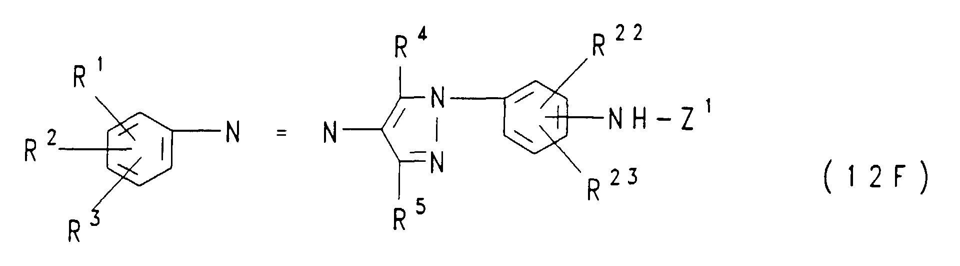 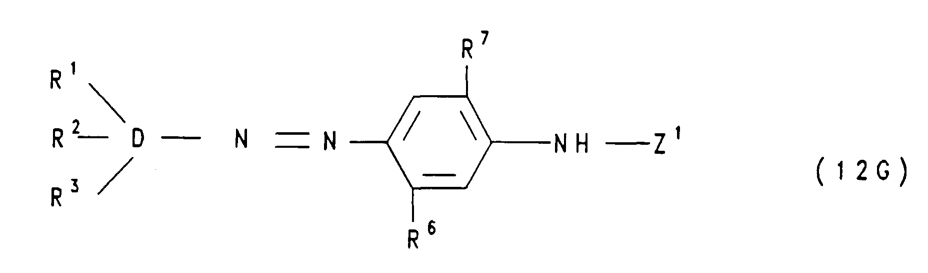 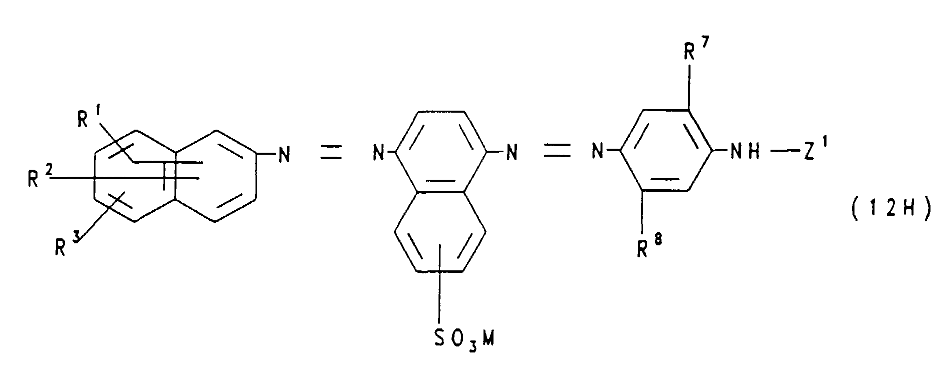 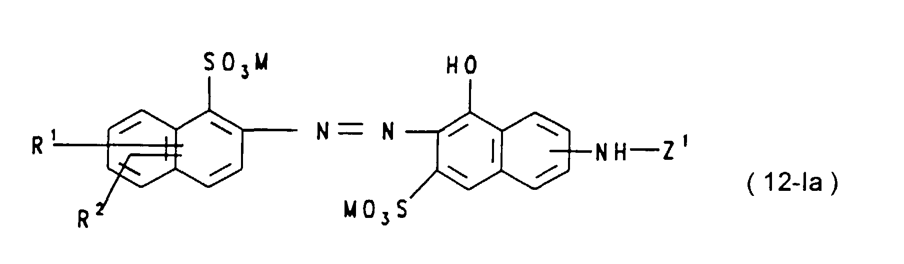 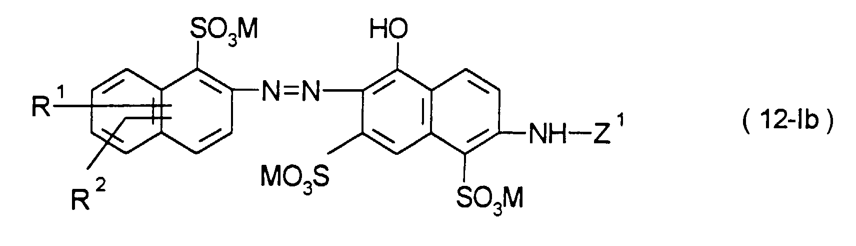 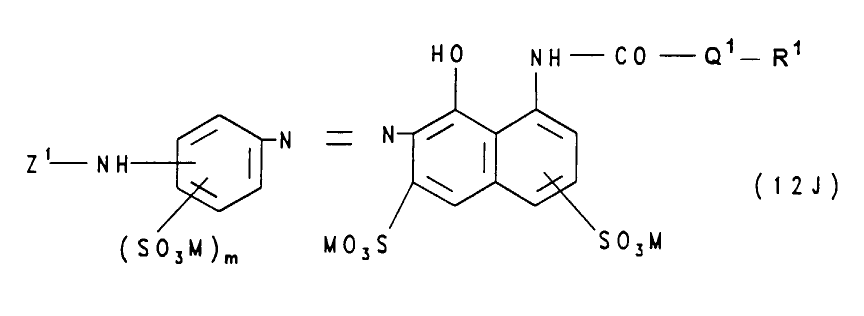 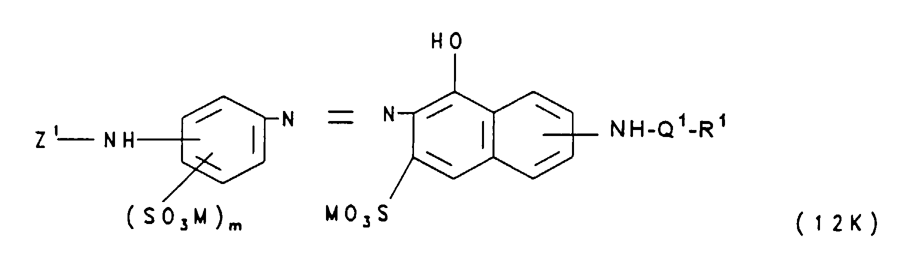 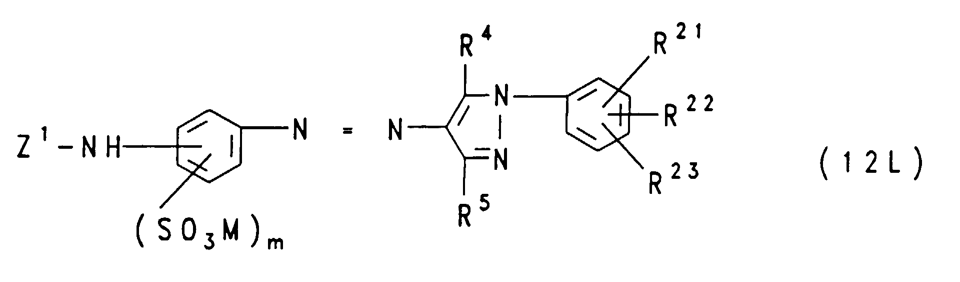 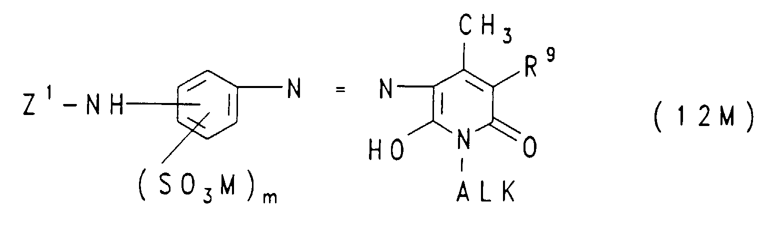 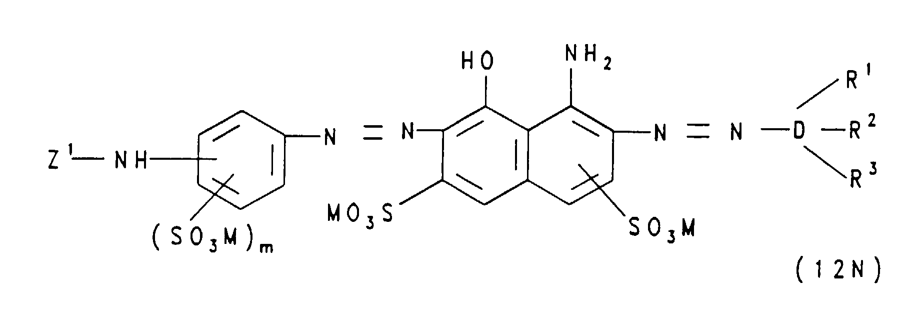 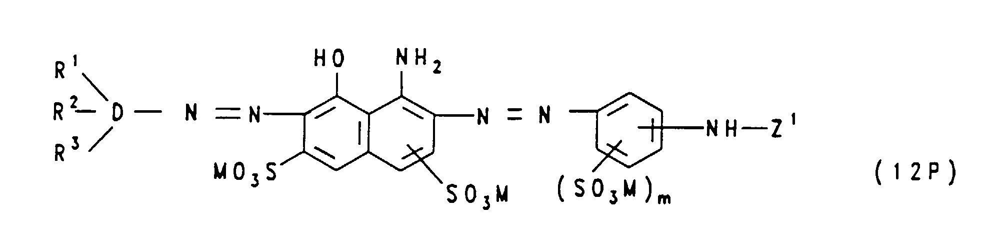 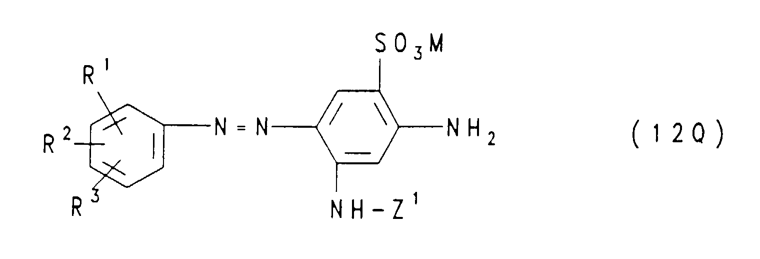 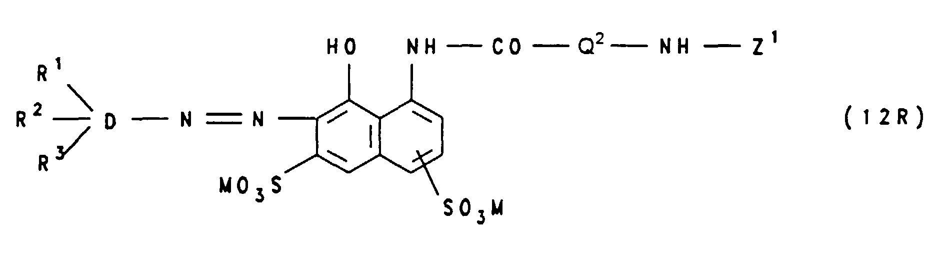 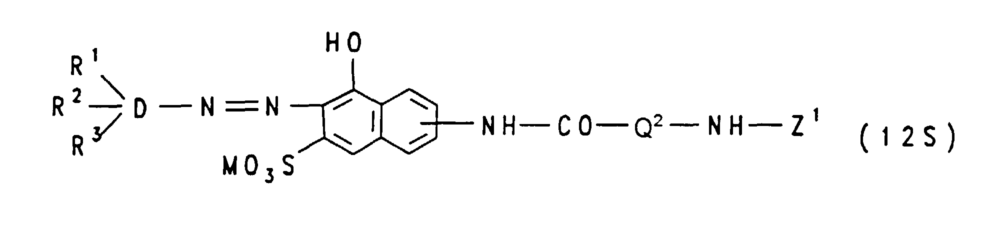 entsprechen, in welchen bedeuten:
- Z¹: ist ein Rest der allgemeinen Formel (2A) 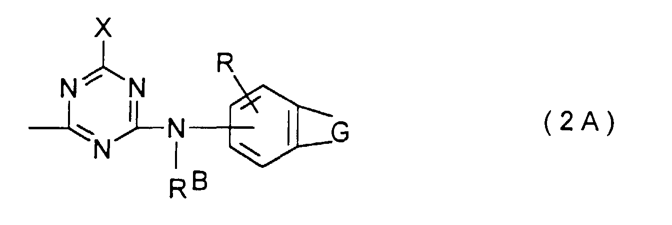 in welcher X, R, R^{B} und G die obengenannten, insbesondere bevorzugten, Bedeutungen haben;
- M: hat eine der obengenannten Bedeutungen;
- D: ist ein Benzolring oder ist ein Naphthalinring, wobei die Azogruppe an den Naphthalinring bevorzugt in β-Stellung gebunden ist und wobei im Falle, daß D den Naphthalinring bedeutet, R² und R³ bevorzugt jedes, unabhängig voneinander, ein Wasserstoffatom oder eine Sulfogruppe bedeuten;
- R¹: ist Wasserstoff oder Sulfo oder eine Gruppe Y-SO₂-W^{o}- obengenannter Bedeutung;
- R²: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo und ist bevorzugt Wasserstoff, Methyl, Methoxy, Brom, Chlor, Sulfo oder Carboxy und insbesondere bevorzugt Wasserstoff, Methoxy oder Sulfo;
- R³: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Nitro, Carboxy oder Sulfo, bevorzugt Wasserstoff, Methyl, Methoxy, Chlor, Carboxy, Sulfo oder Acetylamino und insbesondere bevorzugt Wasserstoff, Methoxy oder Sulfo;
- R⁴: ist Hydroxy oder Amino, bevorzugt Hydroxy;
- R⁵: ist Methyl, Carboxy, Carbomethoxy oder Carbethoxy, bevorzugt Methyl oder Carboxy;
- R⁶: ist Acetylamino, Propionylamino, Ureido oder Methyl;
- R⁷: ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy oder Ethoxy;
- R⁸: ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;
- R⁹: ist Wasserstoff, Cyano, Carbamoyl, Sulfamoyl oder Sulfomethyl, bevorzugt Wasserstoff oder Carbamoyl;
- R²¹: hat eine der Bedeutungen von R¹;
- R²²: hat eine der Bedeutungen von R²;
- R²³: hat eine der Bedeutungen von R³;
- ALK: ist Alkyl von 1 bis 4 C-Atomen, wie Methyl und Ethyl, oder Alkyl von 2 bis 4 C-Atomen, wie Ethyl und Propyl, das durch Hydroxy, Carboxy, Sulfo oder Sulfato substituiert sein kann;
- Q¹: ist Alkylen von 1 bis 4 C-Atomen, wie Ethylen und Propylen, oder ist Phenylen oder durch Sulfo, Carboxy und/oder Alkyl von 1 bis 4 C-Atomen, wie Methyl, substituiertes Phenylen;
- Q²: ist eine Gruppe der Formel -NH-alk- , -NH-phen- oder -alk- , in welchen alk für Alkylen von 2 bis 4 C-Atomen steht und phen Sulfo-phenylen oder Phenylen bedeutet;
- m: ist die Zahl Null, 1 oder 2 (wobei im Falle von m gleich Null diese Gruppe Wasserstoff ist);
in den Verbindungen der Formeln (12A), (12-Ia), (12K) und (12S) steht die Amino- bzw. Amidogruppierung in 2- oder 3-Stellung an den 8-Naphthol-Rest gebunden und in den Verbindungen der Formeln (12B), (12C), (12J), und (12R) steht die eine Gruppe -SO₃M in meta- oder para-Stellung zur Amino- bzw. Acylaminogruppe gebunden.

Reste entsprechend der allgemeinen Formel (13) 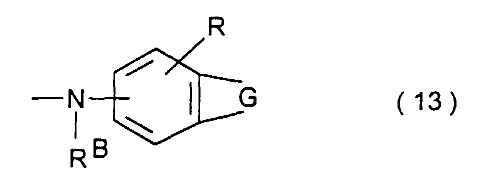 sind beispielsweise Benzimidazolin-2-on-4-yl-amino, Benzimidazolin-2-on-5-yl-amino, 1-N-(4'-Sulfophenyl)-benzimidazolin-2-on-5-yl-amino, 1-N-(3'-Sulfophenyl)-benzimidazolin-2-on-5-yl-amino, 1-N-(6',8'-Disulfo-naphth-2'-yl)-benzimidazolin-2-on-5-yl-amino, Chinoxalin-2,3-dion-6-yl-amino, 7-Methyl-chinoxalin-2,3-dion-6-yl-amino, 7-Methoxy-chinoxalin-2,3-dion-6-yl-amino, 7-Ethoxy-chinoxalin-2,3-dion-6-yl-amino, 4-N-(4'-Sulfophenyl)-chinoxalin-2,3-dion-6-yl-amino, 4-N-(3'-Sulfophenyl)-chinoxalin-2,3-dion-6-yl-amino, 4-N-(2',5'-Disulfophenyl)-chinoxalin-2,3-dion-6-yl-amino, 4-N-(6',8'-Disulfo-naphth-2'-yl)-chinoxalin-2,3-dion-6-yl-amino, 4-N-(4',6',8'-Trisulfo-naphth-2'-yl)-chinoxalin-2,3-dion-6-yl-amino, Oxazolin-2-on-4-yl-amino, 6-Chlor-oxazolin-2-on-5-yl-amino, Chinazolin-2,4-dion-6-yl-amino, Chinazolin-2,4-dion-7-yl-amino, 3,4-Dihydro-chinolin-2-on-7-yl-amino, 1,3-Dihydro-indol-2-on-6-yl-amino, 1,2-Benzisothiazolin-3-on-1,1-dioxid-5-yl-amino, 1,2-Benzisothiazolin-3-on-1,1 -dioxid-6-yl-amino, Phthalimid-5-yl-amino, N'-(4'-Sulfophenyl)-phthalimid-5-yl-amino, N'-(3'-Sulfophenyl)-phthalimid-5-yl-amino, N'-(5',7'-Disulfo-naphth-2'-yl)-phthalimid-5-yl-amino, N'-(6',8'-Disulfo-naphth-2'-yl)-phthalimid-5-yl-amino, Benzimidazolin-2-on-4-yl-(N-methyl)-amino, Chinolin-2-on-7-yl-amino, 4-Methyl-chinolin-2-on-7-yl-amino, 4-Ethyl-chinolin-2-on-7-yl-amino, 4-Phenyl-chinolin-2-on-7-yl-amino, Benzimidazolin-2-on-4-yl-(N-β-sulfoethyl)-amino, Chinolin-2-on-7-yl-(N-methyl)-amino und 3,4-Dihydro-chinolin-2-on-7-yl-(N-ethyl)-amino.

Schwermetallkomplex-Azofarbstoffe von besonderer Bedeutung sind beispielsweise die 1:2-Chromkomplex- und 1:2-Kobaltkomplex- und insbesondere die 1:1-Kupferkomplex-Monoazoverbindungen der Azoverbindungen der nachstehenden allgemeinen Formeln (12T) und (12U): 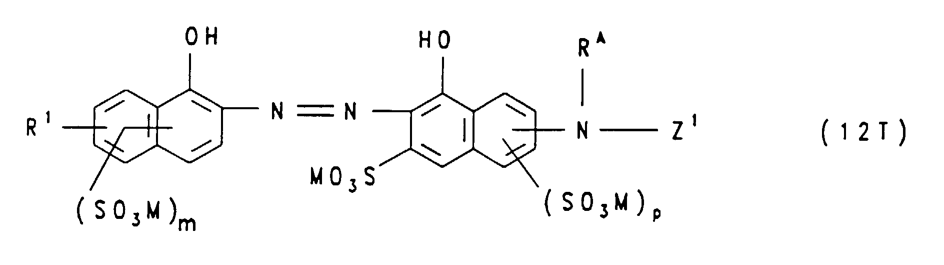 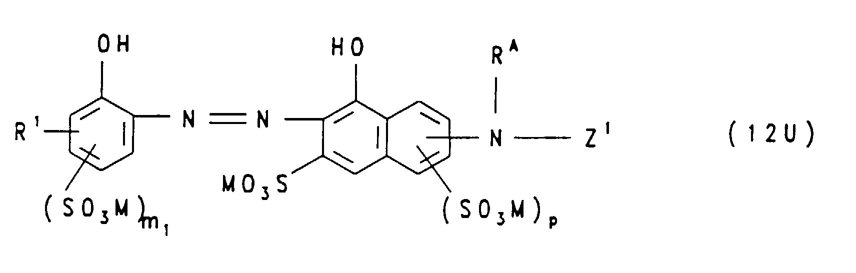 in welchen
- M, m, Z¹, R^{A} und R¹: die obengenannten, insbesondere bevorzugten, Bedeutungen haben,
- p: für die Zahl Null oder 1 steht (wobei im Falle von p gleich Null diese Gruppe Wasserstoff bedeutet) und
- m₁: die Zahl Null oder 1 ist (wobei im Falle von m gleich Null, diese Gruppe Wasserstoff bedeutet).

Von den erfindungsgemäßen Phthalocyaninfarbstoffen sind diejenigen bevorzugt, die der allgemeinen Formel (12 V) 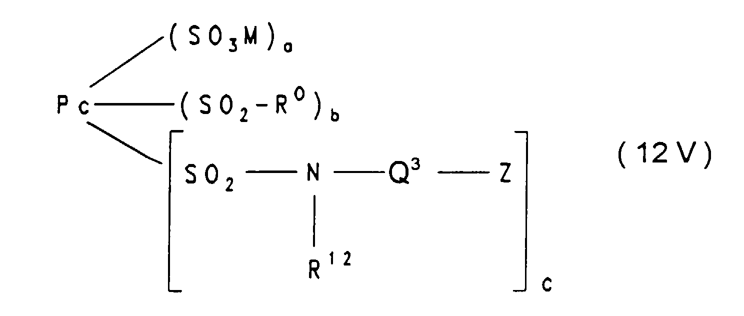 entsprechen, in welcher bedeuten:
- Pc: ist der Rest eines Nickel- oder bevorzugt Kupferphthalocyanins;
- R^{o}: ist eine Aminogruppe der Formel -NR¹³R¹⁴, in welcher R¹³ und R¹⁴ unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest, wie der Morpholino- oder Piperidino-Rest;
- R¹²: ist ein Wasserstoff oder Alkyl von 1 bis 4 C-Atomen, wie Methyl und Ethyl;
- Q³: ist Phenylen, das durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, beispielsweise Sulfophenylen, oder ist Alkylen von 2 bis 6 C-Atomen, wie Ethylen;
- Z: ist die faserreaktive Gruppe der Formel (2);
- a: ist eine Zahl von Null bis 3,
- b: ist eine Zahl von Null bis 3 und
- c: ist eine Zahl von 1 bis 2,
wobei die Summe von (a+b+c) gleich einer Zahl von 2 bis 4 ist.

Von diesen sind insbesondere diejenigen zu nennen, die den allgemeinen Formeln (12 Va) und (12 Vb) 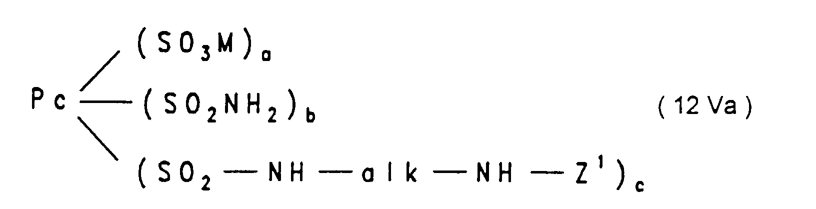 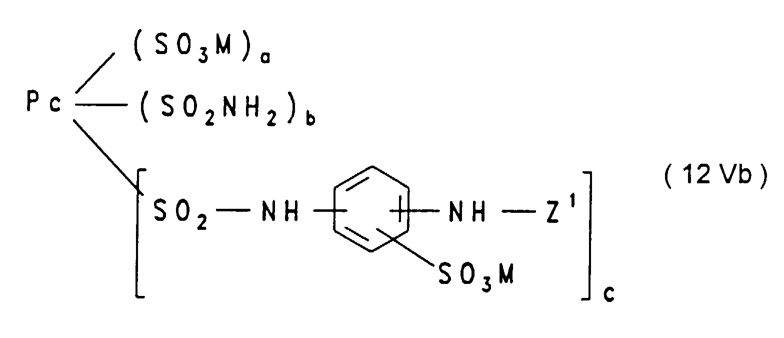 entsprechen, in welchen a für eine Zahl von 1 bis 3 steht, b eine Zahl von 0 bis 2 ist und c eine Zahl von 1 bis 2 bedeutet, wobei die Summe von (a+b+c) gleich einer Zahl von 2 bis 4 ist, Pc den Rest eines Nickel- oder bevorzugt Kupferphthalocyanins darstellt und alk Alkylen von 2 bis 4 C-Atomen, bevorzugt Ethylen, ist.

Erfindungsgemäße Kupferformazanfarbstoffe sind insbesondere diejenigen, die der allgemeinen Formel (12 W) 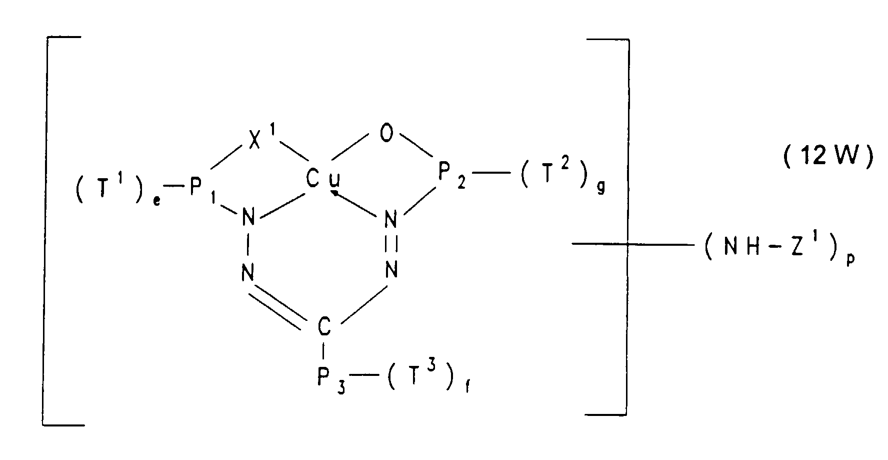 entsprechen, in welcher bedeuten:
- X¹: ist ein Sauerstoffatom oder bevorzugt die Carbonyloxygruppe der Formel -COO-;
- P₁ und P₂: bedeuten, unabhängig voneinander, jedes einen Benzol- oder Naphthalinring, wobei an P₁ das Stickstoffatom und die Gruppe X¹ ortho-ständig zueinander und an P₂ das Sauerstoffatom und das Stickstoffatom ortho-ständig zueinander gebunden sind und die Benzolkerne bzw. Napthalinkerne noch durch einen oder zwei Substituenten aus der Gruppe Halogen, wie Chlor, Nitro, Alkyl von 1 bis 4 C-Atomen, wie Methyl und Ethyl, Alkoxy von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können, wobei sowohl P₁ als auch P₂ beide bevorzugt einen Benzolring bedeuten;
- P₃: ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können, wobei P₃ bevorzugt ein Benzolring ist;
- T¹, T² und T³: bedeuten, unabhängig voneinander, jedes eine Sulfo- oder Carboxygruppe, bevorzugt Sulfogruppe;
- e, f und g: stellen, unabhängig voneinander, jedes die Zahl Null, 1 oder 2 dar, wobei die Summe von (e+f+g) eine ganze Zahl von 1 bis 4 bedeutet und vorzugsweise 2 oder 3, insbesondere 2, ist, wobei im Falle von e oder f oder g gleich Null die Gruppe T¹ bzw. T² bzw. T³ ein Wasserstoffatom bedeutet;
- p: steht für die Zahl 1 oder 2, bevorzugt 1, wobei die Gruppe -NH-Z¹ an einen aromatischen Rest von P₁, P₂ oder P₃ gebunden sein kann und bevorzugt an P₂ gebunden ist.

Bevorzugt sind von den Kupferformazanfarbstoffen der allgemeinen Formel (12W) diejenigen, in welchen P₁ und P₂ beide für einen Benzolring stehen, die Gruppe -NH-Z¹ an P₂ gebunden ist und T¹ und T² jedes eine Sulfogruppe bedeutet, wobei e und g beide für die Zahl 1 stehen. Sofern die Gruppe -NH-Z¹ an P₁ gebunden ist, ist e die Zahl Null, g die Zahl 2 und T² eine Sulfogruppe. Bevorzugt ist weiterhin die Gruppierung -P₃-(T³)_{f} der Phenyl- oder ein 2- oder 4-Sulfo-phenyl-Rest.

Hiervon sind insbesondere diejenigen Kupferformazan-Farbstoffe hervorzuheben, die der allgemeinen Formel (12 Wa) 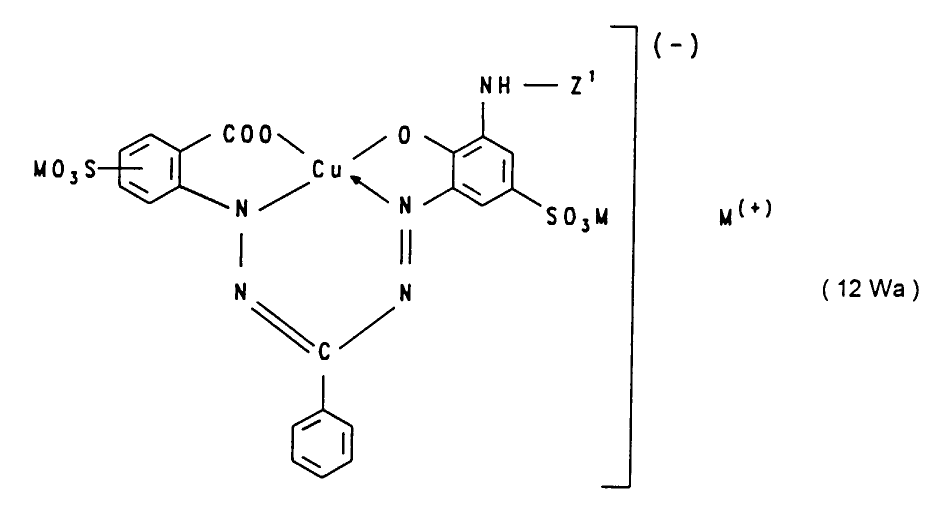 entsprechen, in welcher M und Z¹ die obengenannte, insbesondere bevorzugten Bedeutungen haben.

Von den erfindungsgemäßen Triphendioxazinfarbstoffen sind diejenigen hervorzuheben, die der allgemeinen Formel (12 X) 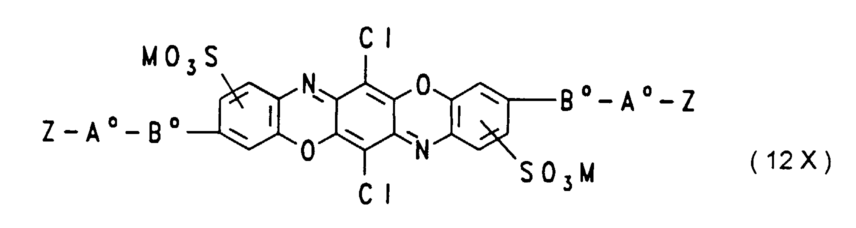 entsprechen, in welcher M und Z eine der obengenannten Bedeutungen haben, B^{o} die Oxigruppe -O- oder die Aminogruppe -NH- ist und A^{o} Alkylen von 2 bis 6 C-Atomen ist, das durch 1 oder 2 Heterogruppen, wie Gruppen der Formeln -O- , -NH- , -NH-CO- und/oder -CO-NH- , unterbrochen und/oder das substituiert sein kann, bspw. durch Hydroxy, Sulfo, Sulfato oder Carboxy, oder Cyclohexylen ist, oder in welcher die Gruppierung Z-A^{o}-B^{o}- bzw. -B^{o}-A^{o}-Z zusammen den Rest Z¹-NH- bzw. -NH-Z¹ obiger Bedeutung darstellt, und worin die beiden Sulfogruppen -SO₃M bevorzugt in ortho-Stellung zum Sauerstoffatom des heterocyclischen Ringes an den Benzolkern gebunden sind.

Von den erfindungsgemäßen Anthrachinonfarbstoffen sind insbesondere diejenigen zu erwähnen, die der allgemeinen Formel (12 Y) 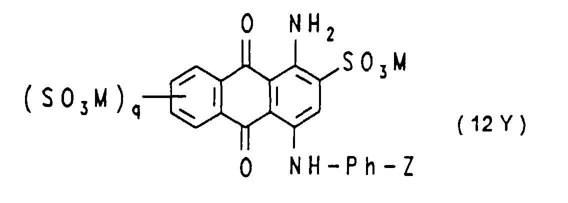 entsprechen, in welcher
- M, Z und q: eine der obengenannten Bedeutungen haben und
- Ph: Phenylen ist, das durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann, oder Phenylen ist, das durch 3 oder 4 Methylgruppen substituiert ist.

Weiterhin von Bedeutung sind asymmetrische Dioxazinfarbstoffe der allgemeinen Formel (12 Z) 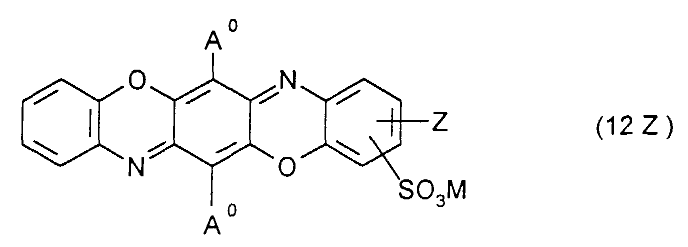 in welcher M und Z die obengenannte Bedeutung besitzt und A^{o} jedes Halogen, wie Chlor, oder Alkyl von 1 bis 4 C-Atomen, wie Methyl, ist.

Die vorliegende Erfindung betrifft weiterhin Verfahren zur Herstellung der erfindungsgemäßen Farbstoffe der allgemeinen Formel (1). Sie lassen sich in an und für sich üblicher Weise analog bekannten, für die jeweilige Farbstoffklasse spezifischen Synthesewegen herstellen, indem man für den jeweiligen Farbstoff typische Vorprodukte, von denen mindestens eines eine Gruppe der allgemeinen Formel (2) enthält, miteinander umsetzt, oder indem eine Halogen-triazin-Verbindung der allgemeinen Formel (21) 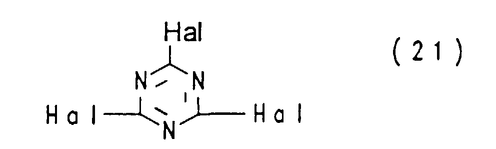 in welcher Hal für Halogen, wie Chlor oder Fluor, steht, wie beispielsweise 2,4,6-Trifluor-1,3,5-triazin (Cyanurfluorid) oder 2,4,6-Trichlor-1,3,5-triazin (Cyanurchlorid), in beliebiger Reihenfolge mit einer aminogruppenhaltigen Verbindung der allgemeinen Formel (20) 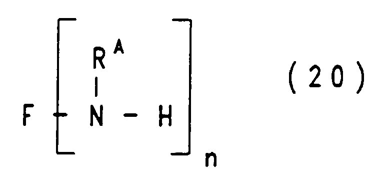 mit F, R^{A} und n der obengenannten Bedeutungen in äquimolarer Menge und einer Aminoverbindung der allgemeinen Formel (22) 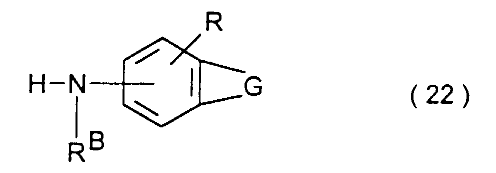 mit R^{B}, R und G der obengenannten Bedeutungen in äquimolarer Menge umsetzt.

Erfindungsgemäße Verfahrensvarianten dieser erfindungsgemäßen Verfahrensweise sind beispielsweise dadurch gekennzeichnet, daß man eine Verbindung der allgemeinen Formel (23) 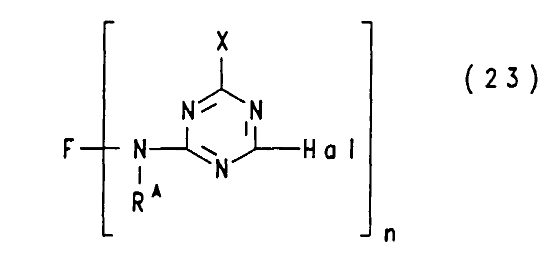 in welcher F, R^{A}, X, Hal und n die obengenannten Bedeutungen haben, mit einer Aminoverbindung der allgemeinen Formel (22) in äquimolarer Menge umsetzt, oder daß man eine Verbindung der allgemeinen Formel (24) 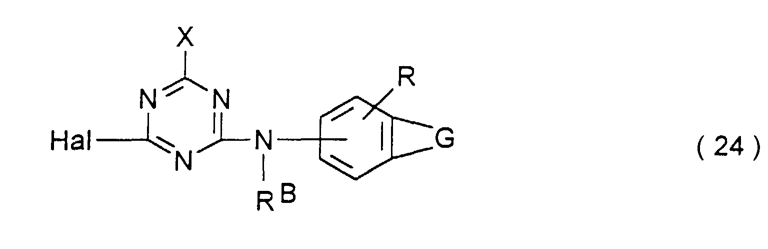 in welcher Hal, X, R^{B}, R und G die obengenannten Bedeutungen haben, mit einer Verbindung der allgemeinen Formel (20) der obengenannten Bedeutung umsetzt. Hiervon ist die Verfahrensweise der Umsetzung einer Verbindung der allgemeinen Formel (23) mit einer Verbindung der allgemeinen Formel (22) bevorzugt.

Bei den Kondensationsreaktionen ist darauf zu achten, daß die faserreaktiven Gruppierungen im alkalischen Bereich nicht geschädigt werden.

Die Umsetzungen der Ausgangsverbindungen erfolgen im wäßrigen oder wäßrig-organischen Medium in Suspension oder Lösung. Führt man die Umsetzungen in einem wäßrig-organischen Medium durch, so ist das organische Medium beispielsweise Aceton, Dimethylformamid, Dimethylsulfoxid oder N-Methyl-pyrrolidon. Vorteilhaft wird der bei der Kondensation freiwerdende Halogenwasserstoff laufend durch Zugabe wäßriger Alkali- oder Erdalkalihydroxide, -carbonate oder -bicarbonate neutralisiert. Die erste Kondensationsreaktion des Halogen-s-triazins der allgemeinen Formel (21) erfolgt in der Regel bei einer Temperatur zwischen -5°C und + 20°C, im Falle von Hal gleich Fluor bevorzugt bei einer Temperatur zwischen -5°C und + 5°C, und bei einem pH-Wert zwischen 2 und 10, bevorzugt zwischen 4 und 6. Die nachfolgende Kondensationsreaktion mit der zweiten Aminoverbindung erfolgt in der Regel bei einer Temperatur zwischen 0 und 60°C, im Falle von Hal gleich Fluor bevorzugt bei einer Temperatur zwischen 0 und 20°C, und bei einem pH-Wert zwischen 3 und 10, bevorzugt zwischen 6 und 10.

Insbesondere erfolgt die Umsetzung zwischen einer Verbindung der allgemeinen Formel (23) und einer Verbindung der allgemeinen Formel (22) bei einer Temperatur zwischen 0 und 50°C, bevorzugt zwischen 10 und 30°C, und bei einem pH-Wert zwischen 3 und 10, bevorzugt zwischen 6 und 8, wobei man im Falle, daß in der Verbindung der Formel (23) Hal ein Fluoratom ist, bevorzugt die Umsetzung bei einer Temperatur zwischen 0 und 20°C durchführt.

Ebenfalls erfolgt die Umsetzung einer Verbindung der allgemeinen Formel (24) mit einer Verbindung der allgemeinen Formel (20) bei einer Temperatur zwischen 0 und 40°C und bei einem pH-Wert zwischen 3 und 10, wobei im Falle des Einsatzes einer Verbindung der allgemeinen Formel (24) mit Hal gleich Fluor bevorzugt die Umsetzung bei einer Temperatur zwischen 0 und 20°C und einem pH-Wert zwischen 7 und 10 durchgeführt wird.

Die Ausgangsverbindungen der allgemeinen Formel (23) lassen sich, ausgehend von den Verbindungen (20), in an und für sich bekannter Verfahrensweise der Umsetzung von halogensubstituierten Triazinen mit aminogruppenhaltigen Verbindungen herstellen, wie dies beispielsweise oben für die erfindungsgemäßen Verfahrensweisen beschrieben ist, so ebenfalls in wäßrigem oder wäßrig-organischem Medium in der Regel bei einer Temperatur zwischen -5°C und +40°C, bevorzugt zwischen 0 und 30°C, und bei einem pH-Wert zwischen 2 und 10, bevorzugt zwischen 5 und 7, wobei man im Falle einer Ausgangsverbindung der Formel (21) mit Hal gleich Fluor bevorzugt eine Reaktionstemperatur zwischen -5°C und + 5°C wählt. In gleicher Weise und unter den gleichen Verfahrensbedingungen lassen sich die Ausgangsverbindungen der allgemeinen Formel (24) durch Umsetzung einer Verbindung der allgemeinen Formel (21) mit einer Verbindung der allgemeinen Formel (22) herstellen.

Die Triphendioxazinverbindungen der allgemeinen Formel (12 X) werden, sofern X gleich Chlor ist, bevorzugt in der Weise hergestellt, daß man eine Verbindung der allgemeinen Formel (23A) 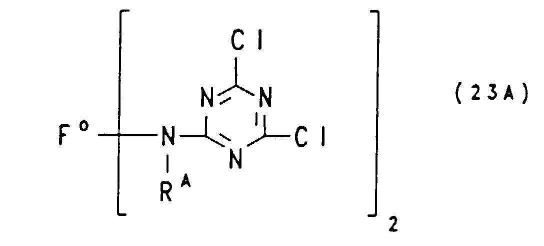 in welcher R^{A} die obengenannte Bedeutung hat und F^{o} ein Rest der allgemeinen Formel (12 X-F) 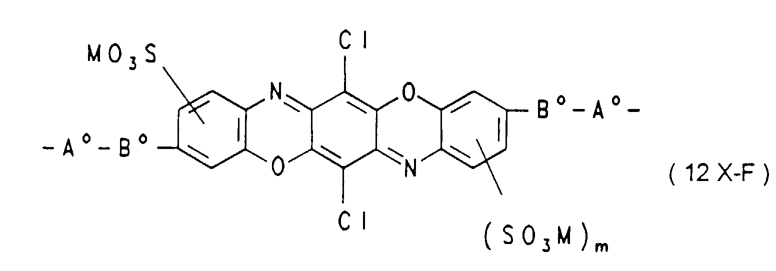 mit M, A^{o} und B^{o} der obengenannten Bedeutung ist, mit einer Aminoverbindung der allgemeinen Formel (22) obengenannter Definition in zweifach molarer Menge bei einer Temperatur zwischen 40 und 60°C und einem pH-Wert zwischen 3 und 10, bevorzugt bei einem pH-Wert zwischen 4 und 5, umsetzt. Geht man von Triphendioxazinverbindungen entsprechend der allgemeinen Formel (23) aus, in welcher F ein Rest der Formel (12 X-F), n gleich 2 und Hal gleich Fluor ist und R^{A} die obengenannte Bedeutung besitzt, erfolgt die Umsetzung mit dem Amin (22) bevorzugt bei einer Temperatur zwischen 0 und 20°C und einem pH-Wert zwischen 6 und 10.

Die Ausgangsverbindungen der allgemeinen Formel (21) und der allgemeinen Formel (20) und deren Vorprodukte sind allgemein bekannt und in der Literatur zahlreich beschrieben. Verbindungen der allgemeinen Formel (21) sind beispielsweise Cyanurchlorid und Cyanurfluorid.

Aromatische Amine, die als Diazokomponenten zur Synthese der erfindungsgemäßen Azofarbstoffe der allgemeinen Formel (1) dienen und den allgemeinen Formeln D¹-NH₂ entsprechen, sind beispielsweise: 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminodiphenyl, 1-Aminobenzol-2-, -3- oder -4-carbonsäure, 2-Aminodiphenylether, 1-Aminobenzol-2-, -3- oder -4-sulfonsäureamid, -N-methylamid, -N-ethylamid, -N,N-dimethylamid oder -N,N-diethylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4-- oder -5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure₁ 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,4-Diaminobenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 1-Aminonaphthalin-3,6- oder -5,7-disulfonsäure, 2-Amino-naphthalin-1-sulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, 3,6,8- oder -4,6,8-trisulfonsäure, 1 -Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methyl-azobenzol-2',4'-disulfonsäure, 3-Methoxy-4-amino-6-methyl-azobenzol-2',5'-disulfonsäure, 2-(β-Sulfatoethylsulfonyl)-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(sulfatoethylsulfonyl)-anilin, 2-Chlor-4-(β-sulfatoethylsulfonyl)-anilin, 2-Brom-4-(β-sulfatoethylsulfonyl)-anilin, 4-Methoxy-3-(β-sulfatoethylsulfonyl)-anilin, 4-Chlor-3-(β-sulfatoethylsulfonyl)-anilin, 2-Ethoxy-4- oder -5-(β-sulfatoethylsulfonyl)-anilin, 2-Methyl-4-(β-sulfatoethylsulfonyl)-anilin, 2-Methoxy-5- oder -4-(β-sulfatoethylsulfonyl)-anilin, 2,4-Diethoxy-5-(β-sulfato-ethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-5-(β-sulfatoethylsulfonyl)-anilin, 2-Hydroxy-3-sulfo-5-(β-sulfato-ethylsulfonyl)-anilin₁ 3- oder 4-(β-Acetoxyethylsulfonyl)-anilin, 6-Carboxy-1-sulfo-2-aminonaphthalin, 5-(β-Sulfatoethylsulfonyl)-2-aminonaphthalin, 6- oder 7- oder 8-(β-Sulfatoethylsulfonyl)-2-aminonaphthalin, 6-(β-Sulfatoethylsulfonyl)-1-sulfo-2-aminonaphthalin, 5-(β-Sulfatoethylsulfonyl)-1-sulfo-2-aminonaphthalin, 8-(β-Sulfatoethylsulfonyl)-6-sulfo-2-aminonaphthalin, 4-[N-Methyl-N-(β-sulfatoethylsulfonyl)]-amino-anilin, 3-[N-Methyl-N-(β-sulfatoethylsulfonyl)]-amino-anilin, 4-[β-(β'-Sulfatoethylsulfonyl)-ethyl]-anilin, 3- oder 4-[β-(β'-Chlorethylsulfonyl)-ethylamino]-anilin, 3- oder 4-[β-(β'-Sulfatoethylsulfonyl)-ethylamino]-anilin, 3- oder 4-[γ-(β'-Chlorethylsulfonyl]-propylamino]-anilin, 3- oder 4-[γ-(β'-Sulfatoethylsulfonyl)-propylamino]-anilin und 3- oder 4-[γ-(Vinylsulfonyl)-propylamino]-anilin.

Ausgangsverbindungen entsprechend der allgemeinen Formel H₂N-D²-NH₂ sind beispielsweise 1,4-Phenylen-diamin, 1,4-Phenylendiamin-2-sulfonsäure, 1,4-Phenylendiamin-2-carbonsäure, 1,4-Diamino-naphthalin-2-sulfonsäure, 2,6-Diamino-naphthalin-8-sulfonsäure, 2,6-Diamino-naphthalin-4,8-disulfonsäure, 1,3-Phenylen-diamin, 1,3-Phenylendiamin-4-sulfonsäure, 1,3-Phenylen-diamin-4,6-disulfonsäure, 1,4-Phenylendiamin-2,6-disulfonsäure, 1,4-Phenylendiamin-2,5-disulfonsäure, 1,4-Diamino-naphthalin-6-sulfonsäure, 4,4'-Diamino-diphenyl-3-sulfonsäure und 4,4'-Diamino-stilben-2,2'-disulfonsäure.

Ausgangsverbindungen, die zur Herstellung von erfindungsgemäßen Disazofarbstoffen der allgemeinen Formel (1) zunächst als Kupplungskomponente und sodann, in Form der gebildeten Amino-Azoverbindung, als Diazokomponente dienen und der allgemeinen Formel H-E-NH₂ entsprechen, sind beispielsweise Anilin, 3-Methyl-anilin, 2-Methoxy-5-methyl-anilin, 2,5-Dimethyl-anilin, 3-Ureido-anilin, 3-Acetylamino-anilin, 3-Propionylamino-anilin, 3-Butyrylamino-anilin, 3-Methoxy-anilin, 2-Methyl-5-acetylamino-anilin, 2-Methoxy-5-acetylamino-anilin, 2-Methoxy-5-methyl-anilin, 3-(Hydroxyacetylamino)-anilin, 1,3-Diaminobenzol-4-sulfonsäure, 1-Amino-naphthalin-6-, -7- oder -8-sulfonsäure, 1-Amino-2-methoxy-naphthalin-6-sulfonsäure, 2-Amino-5-hydroxy-naphthalin-7-sulfonsäure, 2-Amino-5-hydroxy-naphthalin-1,7-disulfonsäure, 2-Amino-8-hydroxy-naphthalin-6-sulfonsäure, 2-(4'-Amino-benzoylamino)-5-naphthol-7-sulfonsäure, 1-(4'-Amino-2'-sulfo-phenyl)-3-methyl-5-pyrazolon, 1-(4'-Amino-2'-sulfo-phenyl)-3-carboxy-5-pyrazolon und N-(Acetoacetyl)-3-sulfo-4-amino-anilid.

Ausgangsverbindungen zur Herstellung der erfindungsgemäßen Azoverbindungen der allgemeinen Formel (1), die als Kupplungskomponenten dienen können und den allgemeinen Formeln H-K¹ oder H-K²-N(R^{A})H oder H-K-H entsprechen, sind beispielsweise: Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- und 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- und 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- und -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-2')-3-methyl-5-pyrazolon, 1-(5',7'-Disulfonaphthyl-2')-3-methyl-5-pyrazolon, 1-(2',5'-Dichlor-4'-sulfophenyl)-3-methyl-5-pyrazolon, 3-Aminocarbonyl-4-methyl-6-hydroxypyridon-2, 1-Ethyl-3-cyan- oder -3-chlor-4-methyl-6-hydroxypyridon-2, 1-Ethyl-3-sulfomethyl-4-methyl-6-hydroxypyrid-2-on-2,4,6-Triamino-3-cyanpyridin, 2-(3'-Sulfophenylamino)-4,6-diamino-3-cyanpyridin, 2-(2'-Hydroxyethylamino)-3-cyan-4-methyl-6-aminopyridin, 2,6-Bis-(2'-hydroxyethylamino)-3-cyan-4-methylpyridin, 1-Ethyl-3-carbamoyl-4-methyl-6-hydroxypyridon-(2), 1-Ethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-7-(phenylazo)-naphthalin-3,6-disulfonsäure, 1-Amino-8-hydroxy-7-(4'-sulfophenylazo)-naphthalin-3,6-disulfonsäure, 1-Amino-8-hydroxy-7-(2',5'-disulfophenylazo)naphthalin-3,6-disulfonsäure, 1-[4'-(β-Sulfatoethyl-sulfonyl)-phenyl]-3-methyl-5-pyrazolon, 1-[4'-(Vinyl-sulfonyl)-phenyl]-3-methyl-5-pyrazolon, 1-[4'-(β-Sulfatoethylsulfonyl)-phenyl]-3-carboxy-5-pyrazolon, 1-[3'-[β-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]-6-sulfo-8-naphthol, 3-[3'-(β-Chlorethylsulfonyl)-benzoylamino]-6-sulfo-8-naphthol, 3-[3'-(Vinylsulfonyl)-benzoyl-amino]-6-sulfo-8-naphthol, 6-Sulfo-1-[3'-(β-chlorethylsulfonyl)-benzoylamino]-naphthol, 7-Sulfo-[3'-(vinylsulfonyl)-benzoylamino]-naphthol, 2-[N-Methyl-N-(ß-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonyl-phenyl)-ureido]-3,6-disulfo-8-naphthol, 1-[N'-(3'-Vinylsulfonyl-propyl)-ureido]-3,6-disulfo-8-naphthol, 1-[N'-(3'-β-Chlor-ethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(3'-β-Chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-Chlorethylsulfonyl-propyl)-ureido]-6-sulfo-8-naphthol, 3-[N'-(3'-β-Chlorethylsulfonyl-phenyl)-ureido]-6-sulfo-8-naphthol, 3-[N'-(3'-Vinylsulfonylpropyl)-ureido]-6-sulfo-8-naphthol, 2-Sulfo-5-[N'-(3''-β-chlorethylsulfonyl)-phenyl]-ureido-anilin, 3-[N'-(3''-β-Sulfatoethylsulfonyl)-phenyl]-ureido-anilin und 6-Sulfo-1-[N'-(3''-β-Sulfatoethylsulfonyl)-phenyl]-ureido-8-naphthol.

Kupplungskomponenten entsprechend der allgemeinen Formel H-K-N(R^{A})H , die zum Aufbau der erfindungsgemäßen Azofarbstoffe dienen können, in welchen der faserreaktive Rest Z in der Kupplungskomponente enthalten ist, wobei bei dem zunächst erhaltenen aminogruppenhaltigen Azofarbstoff entsprechend der allgemeinen Formel (20) in dessen Aminogruppe -N(R^{A})H der faserreaktive Rest Z¹ anschließend eingeführt werden kann bzw. wird, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-(Hydroxyacetylamino)-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6-sulfonsäure, 1-Amino-naphthalin-7-sulfonsäure, 4-Sulfo-1,3-diamino-benzol, 6-Sulfo-2-methoxy-1-amino-naphthalin, 5,7-Disulfo-2-aminonaphthalin, 1-Amino-8-hydroxynaphthalin-6-sulfonsäure, 1-Amino-8-hydroxynaphthalin-2,4-disulfonsäure, 1-Amino-8-naphthol-3,6-disulfonsäure, 1-Amino-8-hydroxy-4,6-disulfonsäure, 1-Amino-8-hydroxy-naphthalin-2,4,6-trisulfonsäure, 2-(Methylamino)- und 2-(Ethylamino)-5-hydroxynaphthalin-7-sulfonsäure, 2-Amino-5-hydroxynaphthalin-1,7-disulfonsäure, 2-(Methylamino)- und 2-(Ethylamino)-8-hydroxynaphthalin-6-sulfonsäure, 2-Amino-8-hydroxynaphthalin-3,6-disulfonsäure, 2-(4'-Amino-3'-sulfophenylamino)-5-hydroxynaphthalin-7-sulfonsäure, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-(β-Aminoethyl)-3-cyano-4-methyl-6-hydroxy-pyrid-2-on, 1-(γ-Aminopropyl)-3-sulfomethyl-4-methyl-6-hydroxy-pyrid-2-on, 1,3-Diaminobenzol, 3-[N,N-Di-(β-hydroxyethyl)]-amino-anilin, 3-[N,N-Di-(β-sulfatoethyl)]-amino-4-methoxy-anilin, 3-(Sulfo-benzylamino)-anilin, 3-(Sulfobenzoylamino)-4-chlor-anilin und 3-[N,N-Di-(sulfobenzyl)]-amino-anilin, 2-Sulfo-5-acetylamino-anilin, 2-Amino-5-naphthol-7-sulfonsäure, 2-Amino-8-naphthol-6-sulfonsäure, 1-(2'-Aminobenzoyl)-amino-8-hydroxy-naphthalin-3,6-disulfonsäure, 1-(2'-Aminobenzoyl)-amino-8-hydroxynaphthalin-4,6-disulfonsäure, 2-(3'-Aminobenzoyl)-amino-5-hydroxy-naphthalin-7-sulfonsäure, 2-(2'-Aminobenzoyl)-amino-5-hydroxy-naphthalin-7-sulfonsäure, 2-(4'-Aminobenzoyl)-amino-8-hydroxynaphthalin-6-sulfonsäure, 2-(3'-Aminobenzoyl)-amino-8-hydroxynaphthalin-6-sulfonsäure, 2-(2'-Aminobenzoyl)-amino-8-hydroxynaphthalin-6-sulfonsäure, 2-(4'-Aminobenzoyl)-amino-5-naphthol-7-sulfonsäure, 1-(4'-Amino- oder 1-(4'-Acetylamino-2-sulfophenyl)-3-methyl- oder -3-carboxy-5-pyrazolon, 3-Sulfo-4-amino-acetoacetylanilid, 1-Amino-8-naphthol-3,6- oder -4,6-disulfonsäure, 1-(3'-Aminobenzoylamino)- oder 1-(4'-Aminobenzoylamino)-8-naphthol-3,6- oder -4,6-disulfonsäure, 1-Acetylamino-8-naphthol-3,6- oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methyl-amino)-8-naphthol-6-sulfonsäure, 1-(3'-Amino- oder 1-(3'-Acetylamino-6'-sulfophenyl)-3-methyl- oder -3-carboxy-5-pyrazolon, 2-(N-Methyl-N-acetylamino)- oder 2-Methylamino-5-naphthol-7-sulfonsäure, N-Methyl-anilin und N-Propyl-m-toluidin.

Geht man von Diazokomponenten der Formel H₂N-D²-NH₂ aus, so können diese auch in der Form der Monoacylamino-amino-Verbindungen eingesetzt werden, wobei der Acylrest insbesondere der Acetylrest ist. Diese Monoacylamino-amino-Verbindungen werden zunächst diazotiert und mit einer kuppelfähigen Verbindung gekuppelt; anschließend wird der Acylrest hydrolytisch abgespalten, und die so nunmehr wieder frei gewordene Aminogruppe kann mit dem faserreaktiven Rest Z¹ verbunden werden. Solche monoacylierten Diamine sind beispielsweise 2-Sulfo-5-acetylamino-anilin und 2-Sulfo-4-acetylamino-anilin. In gleicher Weise können aminogruppenhaltige Kupplungskomponenten in Form des Acylamino-Derivates in die Kupplungsreaktion eingesetzt werden, wobei anschließend auch hier der Acylrest hydrolytisch abgespalten werden kann, um die freiwerdende Aminogruppe mit der faserreaktiven Gruppe Z¹ zu verbinden.

Bivalente Kupplungskomponenten, die zum Aufbau erfindungsgemäßer Disazofarbstoffe dienen können, in welchen der bivalente Kupplungsrest mit zwei Diazokomponenten verbunden ist, von denen die eine oder beide einen faserreaktiven Rest Z enthalten, beispielsweise von Farbstoffen der allgemeinen Formel (3d), sind beispielsweise Resorcin, 1,3-Diaminobenzol, 5,5'-Dihydroxy-7,7'-disulfo-2,2'-dinaphthyl-harnstoff, 1,8-Dihydroxy-3,6-disulfo-naphthalin und insbesondere 1-Amino-8-naphthol-3,6-disulfonsäure und 1 -Amino-8-naphthol-4,6-disulfonsäure.

Geht man bei der erfindungsgemäßen Synthese der Azofarbstoffe von Diazo- oder Kupplungskomponenten aus, die bereits die Gruppe der allgemeinen Formel (2) enthalten, erfolgen die Umsetzungen in der üblichen Verfahrensweise der Diazotierungs- und Kupplungsreaktionen, so die Diazotierung in der Regel bei einer Temperatur zwischen -5°C und + 15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt in wäßrigem Medium.

Bei der erfindungsgemäßen Synthese von Schwermetallkomplex-Azofarbstoffen, beispielsweise solchen entsprechend der allgemeinen Formel (3g) und (3h), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält, wobei die schwermetallfreien Ausgangs-Azoverbindungen zudem einen Acylaminorest gebunden enthalten können, wie einen Acetylaminorest. Beispielsweise kann man bei der Synthese der Kupferkomplex-Azofarbstoffe der Formel (3h) von einer Ausgangsverbindung entsprechend der allgemeinen Formel (25) 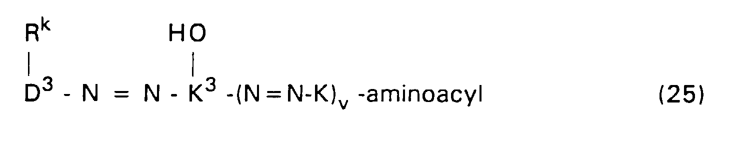 ausgehen, in welcher D³, K, K³ und v eine der obengenannten Bedeutungen haben und R^{k} ein Wasserstoffatom oder eine in ortho-Stellung zur Azogruppe an D³ gebundene Hydroxy- oder Methoxygruppe ist, und diese acylaminogruppenhaltige Ausgangs-Azoverbindung analog bekannten und üblichen Verfahrensweisen mit einem kupferabgebenden Mittel, wie einem Kupfersalz, umsetzen. Ist R^{k} ein Wasserstoffatom oder eine Methoxygruppe, so kann man die Verbindung (25) einer auf üblichen Wege durchzuführenden oxidativen oder entalkylierenden Kupferungsreaktion unterwerfen. Die nun erhaltene Kupferkomplex-Azoverbindung mit der Acylaminogruppe kann sodann analog bekannten Verfahrensweisen nach oder unter Hydrolyse der Acylaminogruppe zur Aminogruppe mit einer Verbindung der Formel (21) oder (24) zu dem erfindungsgemäßen Farbstoff der allgemeinen Formel (1) umgesetzt werden.

Die Ausgangsverbindungen der allgemeinen Formel (22) sind literaturbekannt (s. bspw. Dyes and Pigments 21 (1993), 123, und Ann. Chim. 49 (1959), 1809 sowie Europäische Patentanmeldungs-Veröffentlichung Nr. 0 629 667); sofern einzelne Verbindungen nicht beschrieben sind, können sie analog der Verfahrensweise des Standes der Technik hergestellt werden. Beispielsweise können Verbindungen der allgemeinen Formel (22), in welcher G für einen Rest der allgemeinen Formel (a) oder (e) mit R¹⁰ einer anderen der angegebenen Bedeutungen als Wasserstoff hergestellt werden, indem man von Verbindungen der nachstehend angegebenen allgemeinen Formel (14) mit R¹⁰ der obengenannten Bedeutung ausgeht (die beispielsweise aus Fierz-David & Blangley, "Farbenchemie", 8. Aufl. (1952), Springer Verlag, Tabelle 5 der Anlage, bekannt sind) und diese mit Phosgen, Dialkylcarbonat oder Chlorameisensäurealkylestern oder mit Oxalylchlorid bei einer Temperatur zwischen 0 und 100°C und einem pH-Wert zwischen 6 und 10 umsetzt und in der so erhaltenen heterocyclischen Verbindung der allgemeinen Formel (15) 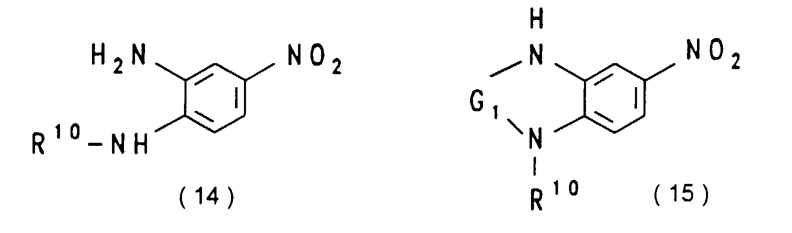 in welcher R¹⁰ die obengenannte Bedeutung besitzt und G₁ für die Gruppe -CO- bzw. -CO-CO- steht, die Nitrogruppe in bekannter Weise zur Aminogruppe reduziert, wie beispielsweise mittels Wasserstoff und einem Nickel-, Palladium- oder Platinkatalysator.

Ebenso sind die übrigen Ausgangsverbindungen, wie die Verbindungen der allgemeinen Formeln H-E-NH₂ und H-K-N(R¹)H sowie die faserreaktiven Ausgangsverbindungen der allgemeinen Formel X^{o}-Z zahlreich in der Literatur beschrieben und vielfach zur Herstellung von faserreaktiven Farbstoffen eingesetzt (s. bspw. die europäischen Patentanmeldungs-Veröffentlichungen Nrs. 0 541 057, 0 542 214 und 0 548 795) oder lassen sich analog den dort angegebenen Verfahrensweisen mit entsprechenden Ausgangsverbindungen herstellen.

Ausgangsverbindungen der allgemeinen Formel (22) sind beispielsweise 4-Amino-benzimidazolin-2-on, 5-Amino-benzimidazolin-2-on, 1-N-(4'-Sulfophenyl)-5-amino-benzimidazolin-2-on, 1-N-(3'-Sulfophenyl)-5-amino-benzimidazolin-2-on, 1-N-(6',8'-Disulfo-naphth-2'-yl)-5-amino-benzimidazolin-2-on, 6-Amino-chinoxalin-2,3-dion, 7-Methyl-6-amino-chinoxalin-2,3-dion, 7-Methoxy-6-amino-chinoxalin-2,3-dion, 7-Ethoxy-6-amino-chinoxalin-2,3-dion, 4-N-(4'-Sulfophenyl)-6-amino-chinoxalin-2,3-dion, 4-N-(3'-Sulfophenyl)-6-amino-chinoxalin-2,3-dion, 4-N-(2',5'-Disulfophenyl)-6-amino-chinoxalin-2,3-dion, 4-N-(6',8'-Disulfo-naphth-2'-yl)-6-amino-chinoxalin-2,3-dion, 4-N-(4',6',8'-Trisulfo-naphth-2'-yl)-6-amino-chinoxalin-2,3-dion, 5-Amino-oxazolin-2-on, 6-Chlor-5-amino-oxazolin-2-on, 6-Amino-chinazolin-2,4-dion, 7-Amino-chinazolin-2,4-dion, 7-Amino-3,4-dihydro-chinolin-2-on, 6-Amino-1,3-dihydro-indol-2-on, 5-Amino-1,2-benzisothiazolin-3-on-1,1-dioxid, 6-Amino-1,2-benzisothiazolin-3-on-1,1-dioxid, 5-Amino-phthalimid, 5-Amino-N'-(4'-Sulfophenyl)-phthalimid, 5-Amino-N'-(3'-sulfophenyl)-phthalimid, 5-Amino-N'-(5',7'-disulfo-naphth-2'-yl)-phthalimid, 5-Amino-N'-(6',8'-disulfo-naphth-2'-yl)-phthalimid, 7-Amino-chinolin-2-on, 7-Amino-4-methyl-chinolin-2-on, 7-Amino-4-ethyl-chinolin-2-on, 7-Amino-4-phenyl-chinolin-2-on, 4-(N-Methyl)-amino-benzimidazolin-2-on, 4-[N-(β-Sulfoethyl)-amino]-benzimidazolin-2-on, 7-(N-Ethyl-amino)-chinolin-2-on und 7-(N-Ethyl-amino)-3,4-dihydro-chinolin-2-on.

Die Abscheidung der erfindungsgemäß hergestellten Farbstoffe der allgemeinen Formel (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.

Die Farbstoffe der allgemeinen Formel (1) - im nachfolgenden Farbstoffe (1) genannt - eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die Farbstoffe (1) lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz von eines dispergierend wirkenden und die Diffusion der nicht fixierten Anteile fördernden Mittels, gründlich gespült. Diese Färbe- und Druckverfahren sind zahlreich in der allgemeinen Fachliteratur wie auch in der Patentliteratur, wie beispielsweise in den anfangs genannten Druckschriften, beschrieben.

Gegenstand der vorliegenden Erfindung ist deshalb auch die Verwendung der Farbstoffe (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff (1) als Farbmittel eingesetzt wird, indem man den Farbstoff (1) im wäßrigen Medium auf das Material appliziert und ihn mittels Wärme oder mittels einer alkalisch wirkenden Verbindung oder mittels beidem auf dem Material fixiert.

Die Farbstoffe (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können nach dem Färbeprozeß leicht ausgewaschen werden, ohne daß Weißwäsche, die sich mit in dem Waschprozeß befindet, durch den sich ablösenden Farbstoff angeschmutzt wird. Hieraus ergeben sich Vorteile für den Färbeprozeß; Waschcyclen und damit Kosten werden eingespart. Die Differenz zwischen Ausziehgrad und Fixiergrad ist bemerkenswert klein und der Seifverlust somit sehr gering.

Die Farbstoffe (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den Farbstoffen (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

a) 31,8 Teile 1-Amino-8-hydroxy-3,6-disulfo-naphthalin werden in 200 Teilen Wasser bei pH 7 gelöst. Nach Zugabe von 200 Teilen Eis und 1,7 Teilen Natriumfluorid werden unter intensivem Rühren bei 0 bis 3°C schnell 13,7 Teile Cyanurfluorid (2,4,6-Trifluortriazin) zugegeben. Die Reaktionsmischung wird anschließend mit 14,9 Teilen 5-Amino-benzimidazolin-2-on versetzt. Mit wäßriger Lithiumhydroxid-Lösung wird ein pH-Wert von 6 bis 6,5 eingestellt und gehalten. Es wird eine Stunde nachgerührt; hierbei steigt die Temperatur auf 20°C.
b) Zu der so hergestellten Lösung der Kupplungskomponente gibt man eine auf üblichem Wege aus 30,4 Teilen 2-Amino-1,5-disulfo-naphthalin in 150 Teilen Wasser unter Verwendung von 30 Vol.-Teilen 31 %iger wäßriger Salzsäure und 20,2 Vol.-Teilen einer wäßrigen 5N-Natriumnitritlösung hergestellte Diazoniumsalzlösung hinzu und führt die Kupplungsreaktion bei einem pH-Wert von 6,5 bis 7 und einer langsam von 5°C auf 20°C steigenden Temperatur durch. Man rührt noch einige Zeit nach und isoliert den erfindungsgemäßen Farbstoff, der, in Form der freien Säure geschrieben, die Formel 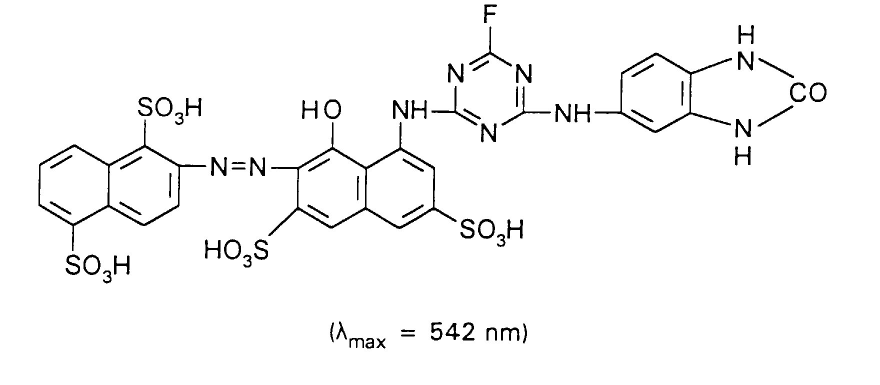 besitzt, in üblicher Weise, beispielsweise durch Aussalzen mit Natriumchlorid oder durch Sprühtrocknung der Syntheselösung.

Der erfindungsgemäße Monoazofarbstoff zeigt sehr gute faserreaktive Farbstoffeigenschaften und färbt nach den in der Technik für faserreaktive Farbstoffe üblichen Färbe- und und Druckverfahren die in der Beschreibung genannten Fasermaterialien, insbesondere Cellulosefasermaterialien, wie Baumwolle, in farbstarken roten und echten Tönen.

### Beispiel 2

Zu einer gemäß den Angaben des Beispieles 1a) hergestellten Lösung gibt man eine auf üblichem Wege mittels 20 Vol.-Teilen einer 31 %igen wäßrigen Salzsäure und 20 Vol.-Teilen einer wäßrigen 5N-Natriumnitritlösung hergestellten Diazoniumsalzlösung aus 17 Teilen 2-Sulfo-anilin, stellt den pH-Wert auf 7 und rührt noch einige Zeit unter Einhaltung des pH-Wertes bei etwa 15 bis 20°C nach. Man versetzt die so erhaltene Farbstofflösung mit einem Puffergemisch aus primärem und sekundärem Natriumphosphat und isoliert den erhaltenen erfindungsgemäßen Monoazofarbstoff der Formel (in Form der freien Säure geschrieben) 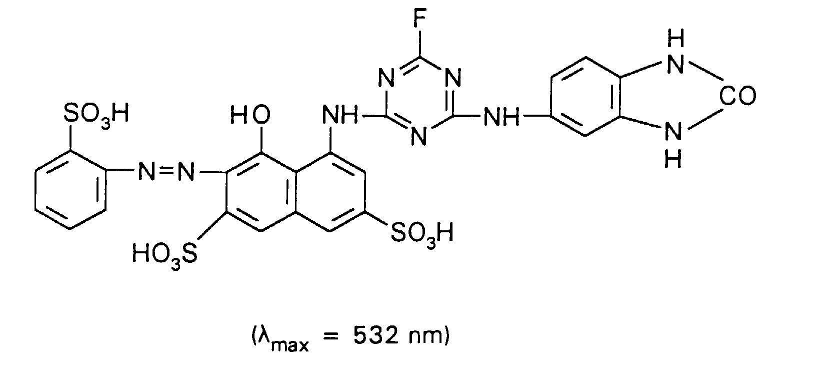 in üblicher Weise, beispielsweise durch Aussalzen mit Natriumchlorid.

Der erfindungsgemäße Farbstoff zeigt sehr gute anwendungstechnische und faserreaktive Eigenschaften und färbt die in der Beschreibung genannten Materialien, wie insbesondere Cellulosefasermaterialien, nach den in den Technik für faserreaktive Farbstoffe üblichen Färbe- und Druckverfahren in farbstarken roten Tönen mit guten Echtheitseigenschaften, von denen insbesondere die guten Chlorbadewasserechtheiten hervorgehoben werden können.

### Beispiel 3

Zu einer gemäß den Angaben des Beispieles 1a) hergestellte Lösung der Kupplungskomponente gibt man eine auf üblichem Wege mittels 30 Teilen einer 31 %igen wäßrigen Salzsäure und 20 Teilen einer wäßrigen 5N-Natriumnitritlösung hergestellte Diazoniumsalzsuspension aus 41 Teilen 1-Sulfo-6-(β-sulfatoethylsulfonyl)-2-amino-naphthalin in 1000 Teilen Wasser von 0°C hinzu, stellt den pH-Wert auf 7 und rührt noch einige Zeit unter Einhaltung des pH-Wertes bei etwa 15 bis 20°C nach. Man versetzt die so hergestellte Farbstofflösung mit 12 Teilen Dinatriumhydrogenphosphat und stellt mit Phosphorsäure einen pH-Wert von 7 ein.

Man isoliert den erhaltenen erfindungsgemäßen Azofarbstoff der Formel (in Form der freien Säure geschrieben) 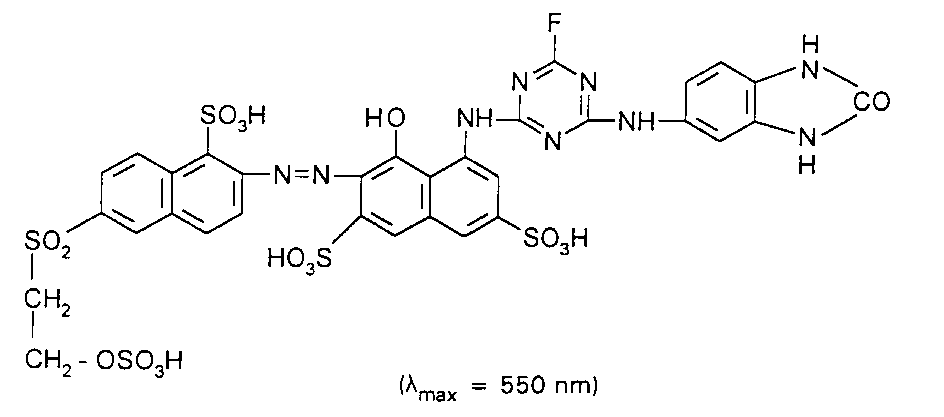 auf üblichem Wege, beispielsweise durch Eindampfen unter reduziertem Druck bei 40°C. Der Farbstoff zeigt sehr gute anwendungstechnische Eigenschaften und färbt beispielsweise Cellulosefasermaterialien bei einem hohen Fixiergrad nach den für faserreaktive Farbstoffe üblichen Anwendungsmethoden in brillanten blaustichig roten Tönen mit guten Echtheiten, von denen insbesondere die Chlorbadewasserechtheit hervorgehoben werden kann.

### Beispiel 4

Eine Lösung von 24,8 Teilen des Natriumsalzes der Monoazoverbindung 7-(2'-Sulfo-4'-methoxy-phenyl-azo)-3-amino-6-sulfo-8-naphthol in 300 Teilen Wasser wird mit 1,1 Teilen Natriumfluorid versetzt und auf Null bis 3°C abgekühlt. Nach Zugabe von 150 Teilen Eis werden 6,8 Teile Cyanurfluorid schnell unter intensivem Rühren zugegeben. Nach 10 Minuten wird die Reaktionsmischung mit 7,5 Teilen 5-Amino-benzimidazolin-2-on versetzt und de pH-Wert mit einer wäßrigen Natriumcarbonatlösung auf 7 bis 7,5 gestellt und während weiterem Rühren für eine Stunde, während die Temperatur auf 20°C steigt, gehalten.

Der erfindungsgemäße Azofarbstoff, der, in Form der freien Säure geschrieben, die Formel 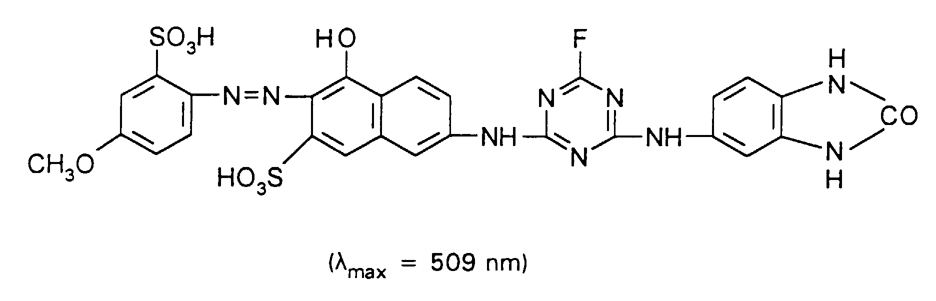 besitzt, wird in üblicher Weise, beispielsweise durch Aussalzen mit Natriumchlorid, als Alkalimetallsalz isoliert. Er zeigt sehr gute anwendungstechnische Eigenschaften und färbt die in der Beschreibung genannten Fasermaterialien, wie Wolle und insbesondere Cellulosefasermaterialien, wie Baumwolle, in farbstarken, brillanten, scharlachroten Tönen mit guten Echtheitseigenschaften.

### Beispiel 5

Unter Einhaltung eines pH-Wertes zwischen 7,5 und 8 und einer Temperatur von etwa 0°C gibt man langsam 14,2 Teile Cyanurfluorid zu einer neutralen Lösung von 54,5 Teilen der Azoverbindung 4-(3',6',8'-Trisulfo-naphth-2'-yl)-azo-3-ureido-anilin in 800 Teilen Wasser. Man rührt den Ansatz noch einige Zeit unter Einhaltung dieser Reaktionsbedingungen bis zur Beendigung der Umsetzung weiter und gibt sodann bei etwa 5°C und unter Einhaltung des pH-Wertes zwischen 6 und 7 15,6 Teile 5-Amino-benzimidazolin-2-on hinzu. Man rührt den Ansatz noch einige Zeit weiter und läßt die Reaktionstemperatur auf 20°C ansteigen.

Nach Beendigung der Umsetzung isoliert man den erfindungsgemäßen Farbstoff der Formel (in Form der freien Säure geschrieben) 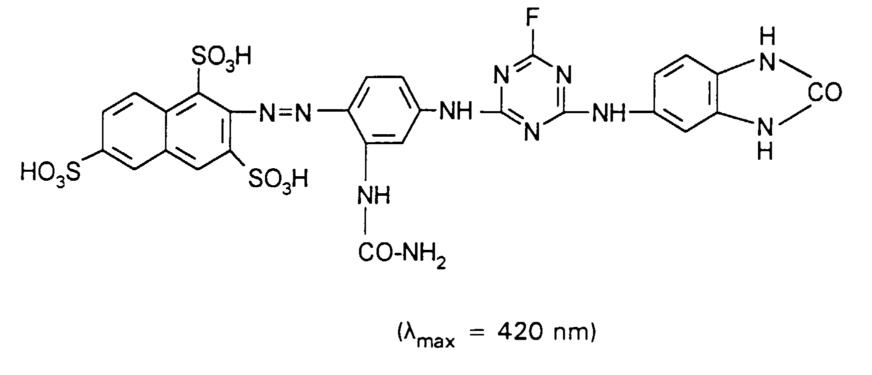 in üblicher Weise als Alkalimetallsalz (Natriumsalz). Er zeigt sehr gute faserreaktive Farbstoffeigenschaften und färbt die in der Beschreibung genannten Materialien, wie insbesondere Cellulosefasermaterialien, nach den in der Technik für faserreaktive Farbstoffe üblichen Applikations- und Fixierverfahren in farbstarken rotstichig gelben Tönen mit guten Echtheitseigenschaften.

### Beispiel 6

Eine Lösung von 21,1 Teilen 4-(4',8'-Disulfo-naphth-2'-yl)-azo-3-acetylamino-anilin in 1000 Teilen Wasser mit einer Temperatur von 0 bis 2°C und einem pH-Wert von 8,5 wird unter gutem Rühren und unter Einhaltung eines pH-Wertes zwischen 6,5 und 7 mittels einer wäßrigen Natriumcarbonatlösung mit 7,2 Teilen Cyanurfluorid versetzt. Man rührt den Ansatz noch etwa 10 Minuten nach und gibt sodann bei etwa 5°C 9,0 Teile 5-Aminobenzimidazolin-2-on in 200 Teilen Wasser hinzu und führt die Umsetzung bei einem pH-Wert von 6,5 und einer Temperatur von etwa 20°C zu Ende.

Man isoliert den erfindungsgemäßen Azofarbstoff der Formel (in Form der freien Säure geschrieben) 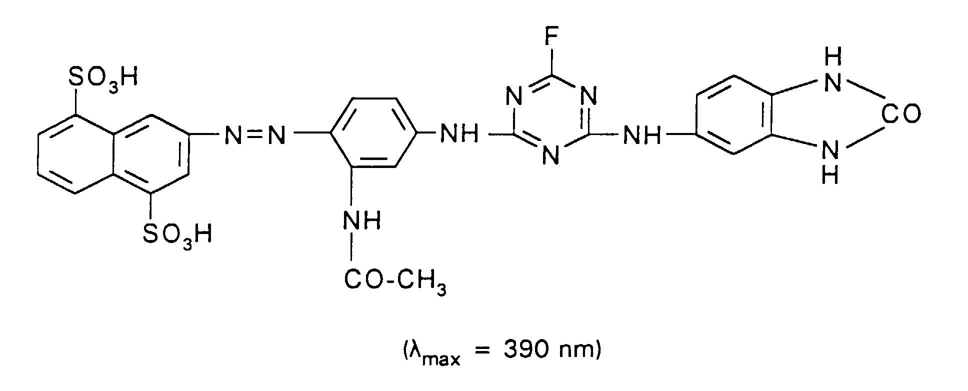 in üblicher Weise, beispielsweise durch Aussalzen mit Natriumchlorid. Er besitzt sehr gute faserreaktive, anwendungstechnische Eigenschaften und färbt die in der Beschreibung genannten Materialien, wie beispielsweise Baumwolle, in grünstichig gelben Tönen mit guten Echtheitseigenschaften.

### Beispiel 7

Eine Lösung von 21,1 Teilen 4-(4',8'-Disulfo-naphth-2'-yl)-azo-3-acetylamino-anilin in einer Mischung aus 500 Teilen Wasser und 200 Teilen Eis wird unter Einhaltung eines pH-Wertes von 7,5 innerhalb von 30 Minuten unter gutem Rühren mit einer Lösung von 10 Teilen 2,4,6-Trichlor-1,3,5-triazin (Cyanurchlorid) in 100 Teilen Aceton versetzt. Man rührt bei pH 7,5 noch etwa 10 Minuten nach und gibt sodann eine Lösung von 12,5 Teilen 7-Methoxy-6-amino-chinoxalin-2,3-dion in 200 Teilen Wasser hinzu. Man führt die Umsetzung während etwa 3 Stunden unter Einhaltung eines pH-Wertes von 6 und einer Temperatur von 35 bis 40°C zu Ende.
Man isoliert den erfindungsgemäßen Farbstoff der Formel (in Form der freien Säure geschrieben) 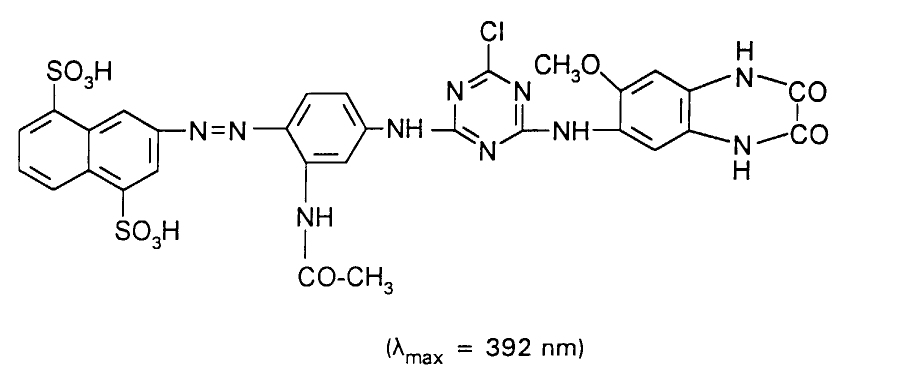 in üblicher Weise, beispielsweise durch Eindampfen der wäßrigen Syntheselösung unter reduziertem Druck bei 60°C, als Alkalimetallsalz. Der Farbstoff zeigt sehr gute anwendungstechnische Eigenschaften und färbt beispielsweise Baumwolle nach den für faserreaktive Farbstoffe üblichen Färbe- und Druckverfahren in grünstichig gelben Tönen mit guten Echtheitseigenschatten.

### Beispiel 8

Eine Lösung mit einem pH-Wert von 5,5 von 16 Teilen 1-Amino-8-hydroxy-naphthalin-3,6-disulfonsäure in 200 Teilen Wasser wird bei einer Temperatur von 0 bis 3°C mit 9,8 Teilen Cyanurchlorid bei Einhaltung eines pH-Wertes von 4 bis 4,5 unter gutem Rühren versetzt. Man rührt den Ansatz noch einige Zeit bei einem pH-Wert von 4,5 nach, erwärmt auf 25°C und gibt sodann 9,5 Teile 6-Amino-chinazolin-2,4-dion hinzu und führt die Umsetzung bei einem pH-Wert von etwa 5 und einer langsam von 5°C nach 35°C steigenden Temperatur durch. Sodann gibt man eine auf üblichem Wege aus 8,7 Teilen 2-Sulfo-anilin in 100 Teilen Wasser unter Verwendung von 10 Vol.-Teilen konzentrierter wäßriger Salzsäure und 25 Vol.-Teilen einer wäßrigen 2N-Natriumnitritlösung hergestellte Diazoniumsalzlösung hinzu und führt die Kupplungsreaktion bei einem pH-Wert von 6 und einer langsam von 5°C auf 20°C steigenden Temperatur durch. Man rührt noch einige Zeit nach und isoliert den erfindungsgemäßen Farbstoff, der, in Form der freien Säure geschrieben, die Formel 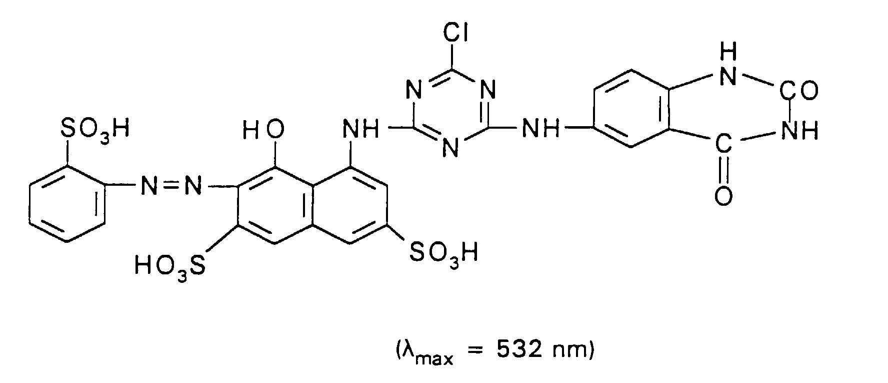 besitzt, in üblicher Weise, beispielsweise durch Aussalzen mit Natriumchlorid.

Der erfindungsgemäße Farbstoff zeigt sehr gute anwendungstechnische und faserreaktive Eigenschaften und färbt die in der Beschreibung genannten Materialien, wie insbesondere Cellulosefasermaterialien, nach den in den Technik für faserreaktive Farbstoffe üblichen Färbe- und Druckverfahren in farbstarken roten Tönen mit guten Echtheitseigenschaften, von denen insbesondere die guten Chlorbadewasserechtheiten hervorgehoben werden können.

### Beispiel 9

Man versetzt unter Einhaltung eines pH-Wertes von 5 bis 6 und einer Temperatur von 0°C eine neutrale Lösung von 18,1 Teilen der Azoverbindung 7-(2'-Sulfo-4'-methoxy-phenyl)-azo-6-sulfo-8-hydroxy-3-amino-naphthalin in 500 Teilen Wasser mit 9,5 Teilen Cyanurchlorid, rührt noch einige Zeit nach, erwärmt auf 25°C, gibt unter Einhaltung des angegebenen pH-Bereiches 10,3 Teile 5-Amino-1,2-benzisothiazolin-3-on-1,1-dioxid hinzu und erhöht die Reaktionstemperatur langsam auf 40°C. Nach Beendigung der Umsetzung wird der erhaltene erfindungsgemäße Farbstoff, der, in Form der freien Säure geschrieben, die Formel 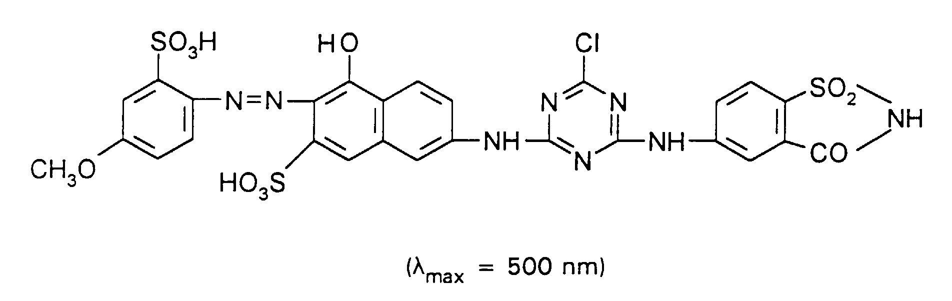 besitzt, in üblicher Weise, beispielsweise durch Aussalzen mit Natriumchlorid, als Alkalimetallsalz isoliert.

Der erfindungsgemäße Farbstoff zeigt sehr gute anwendungstechnische Eigenschaften und färbt die in der Beschreibung genannten Fasermaterialien, wie Wolle und insbesondere Cellulosefasermaterialien, wie Baumwolle, in farbstarken gelbstichig roten Tönen mit guten Echtheitseigenschaften.

### Beispiel 10

Eine Lösung von 37,3 Teilen des Natriumsalzes der Verbindung 7-(1',5'-Disulfo-naphth-2'-yl)-azo-3-amino-6-sulfo-8-naphthol in 180 Teilen Wasser wird mit 1,1 Teilen Natriumfluorid versetzt und auf 0 bis 3°C abgekühlt. Nach Zugabe von 150 Teilen Eis werden 6,8 Teile Cyanurfluorid schnell unter intensivem Rühren zugegeben. Die Reaktionsmischung wird nach 10 Minuten Rühren mit 8,8 Teilen 6-Amino-4-methyl-chinolin-2-on versetzt und der pH-Wert des Reaktionsansatzes mit wäßriger Natriumcarbonatlösung auf 7 bis 7,5 eingestellt und während der Umsetzung während einer Stunde unter Rühren, während die Temperatur auf 20°C steigt, gehalten.

Der erfindungsgemäße Azofarbstoff wird in üblicher Weise als Alkalimetallsalz (Natriumsalz) isoliert. Er besitzt, in Form der freien Säure geschrieben, die Formel

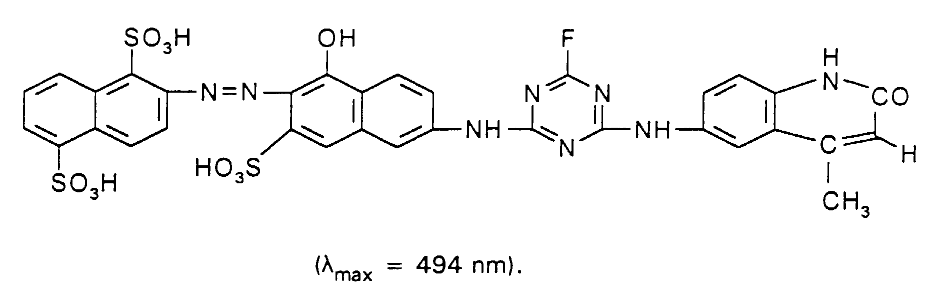

Er zeigt gute faserreaktive Farbstoffeigenschaften und färbt die in der Beschreibung genannten Materialien, wie insbesondere Cellulosefasermaterialien, wie Baumwolle, in farbstarken, leuchtend orangen Tönen.

### Beispiel 11

a) 31,8 Teile 3-Amino-8-hydroxy-4,6-disulfo-naphthalin werden in 200 Teilen Wasser bei pH 7 gelöst. Nach Zugabe von 200 Teilen Eis und 1,7 Teilen Natriumfluorid werden unter intensivem Rühren bei 0 bis 3°C schnell 15,0 Teile Cyanurfluorid (2,4,6-Trifluortriazin) zugegeben. Die Reaktionsmischung wird anschließend mit 14,9 Teilen 5-Amino-benzimidazolin-2-on versetzt. Mit wäßriger Natriumhydroxid-Lösung wird ein pH-Wert von 7 bis 7,5 eingestellt und gehalten.
   Es wird eine Stunde nachgerührt; hierbei steigt die Temperatur auf 20°C.
b) Zu der so hergestellten Lösung der Kupplungskomponente gibt man eine auf üblichem Wege aus 30,4 Teilen 2-Amino-1,5-disulfo-naphthalin in 150 Teilen Wasser unter Verwendung von 30 Vol.-Teilen 31 %iger wäßriger Salzsäure und 20,2 Vol.-Teilen einer wäßrigen 5N-Natriumnitritlösung hergestellte Diazoniumsalzlösung hinzu und führt die Kupplungsreaktion bei einem pH-Wert von 6,5 bis 7 und einer langsam von 5°C auf 20°C steigenden Temperatur durch. Man rührt noch einige Zeit nach und isoliert den erfindungsgemäßen Farbstoff, der, in Form der freien Säure geschrieben, die Formel 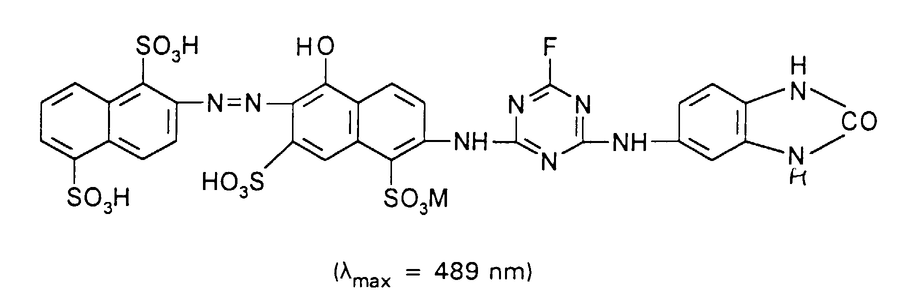 besitzt, in üblicher Weise, beispielsweise durch Aussalzen mit Natriumchlorid oder durch Spültrocknung der Syntheselösung.

Der erfindungsgemäße Monoazofarbstoff zeigt sehr gute faserreaktive Farbstoffeigenschaften und färbt nach den in der Technik für faserreaktive Farbstoffe üblichen Färbe- und und Druckverfahren die in der Beschreibung genannten Fasermaterialien, insbesondere Cellulosefasermaterialien, wie Baumwolle, in farbstarken orangen, echten Tönen.

### Beispiele 12 bis 85

In den nachfolgenden Tabellenbeispielen werden weitere erfindungsgemäße Farbstoffe entsprechend der allgemeinen Formel (A) 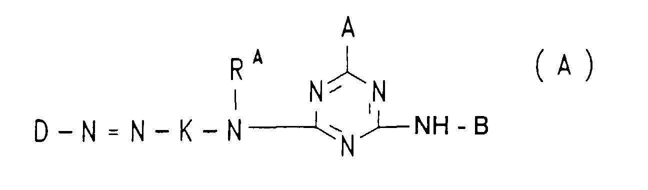 anhand ihrer Komponenten (dem Rest D der Diazokomponente D-NH₂ , dem Rest -K-N(R^{A})- der aminogruppenhaltigen Kupplungskomponente der Formel H-K-N(R^{A})H und den Substituenten A und B) beschrieben. Sie lassen sich in einer der erfindungsgemäßen Verfahrensweisen, beispielsweise analog einem der obigen Ausführungsbeispiele, herstellen. Sie besitzen sehr gute faserreaktive Farbstoffeigenschaften und färben beispielsweise Baumwolle in dem in dem jeweiligen Tabellenbeispiel angegebenen Farbton in hoher Farbstärke und guten Echtheiten.

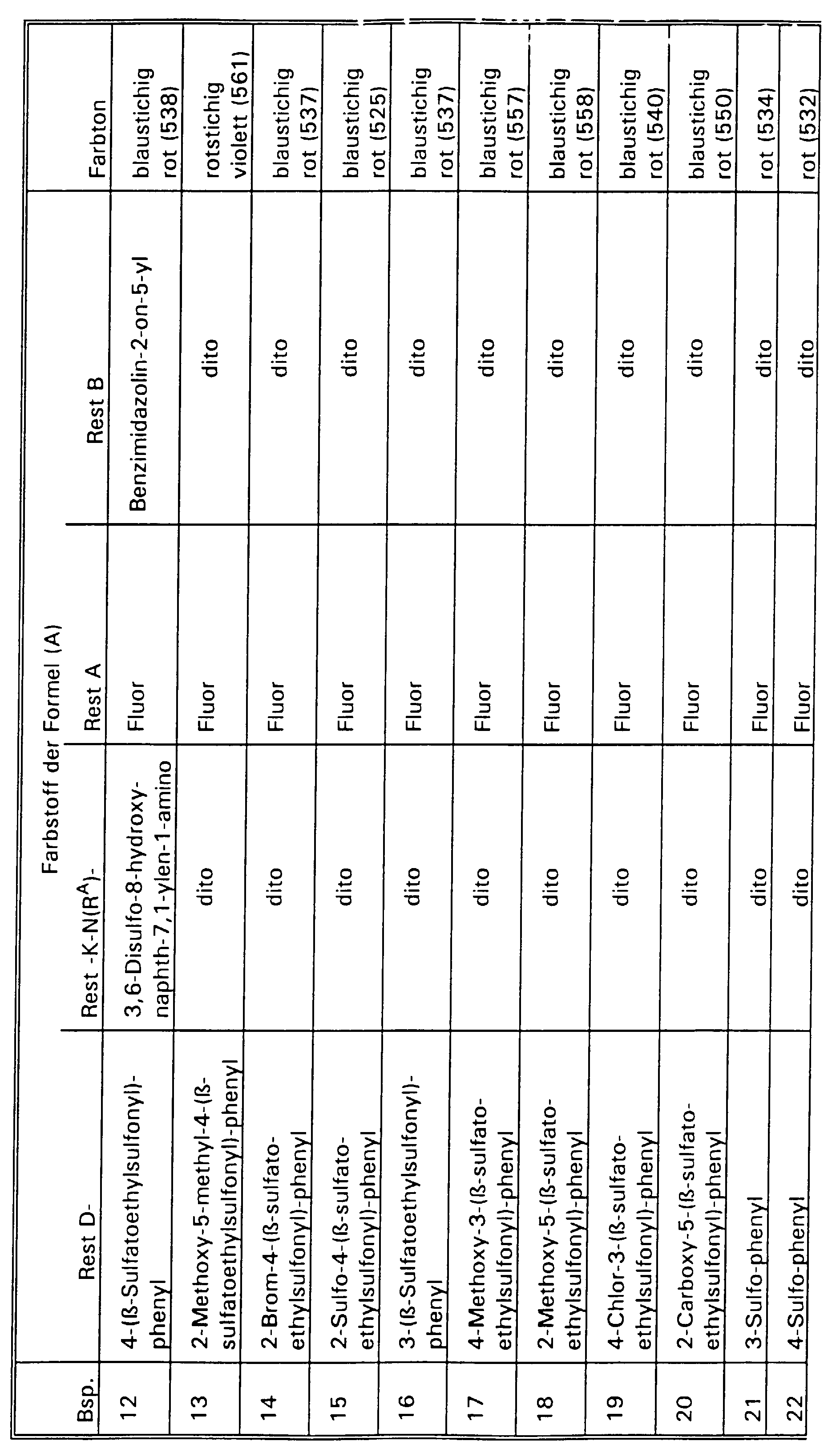

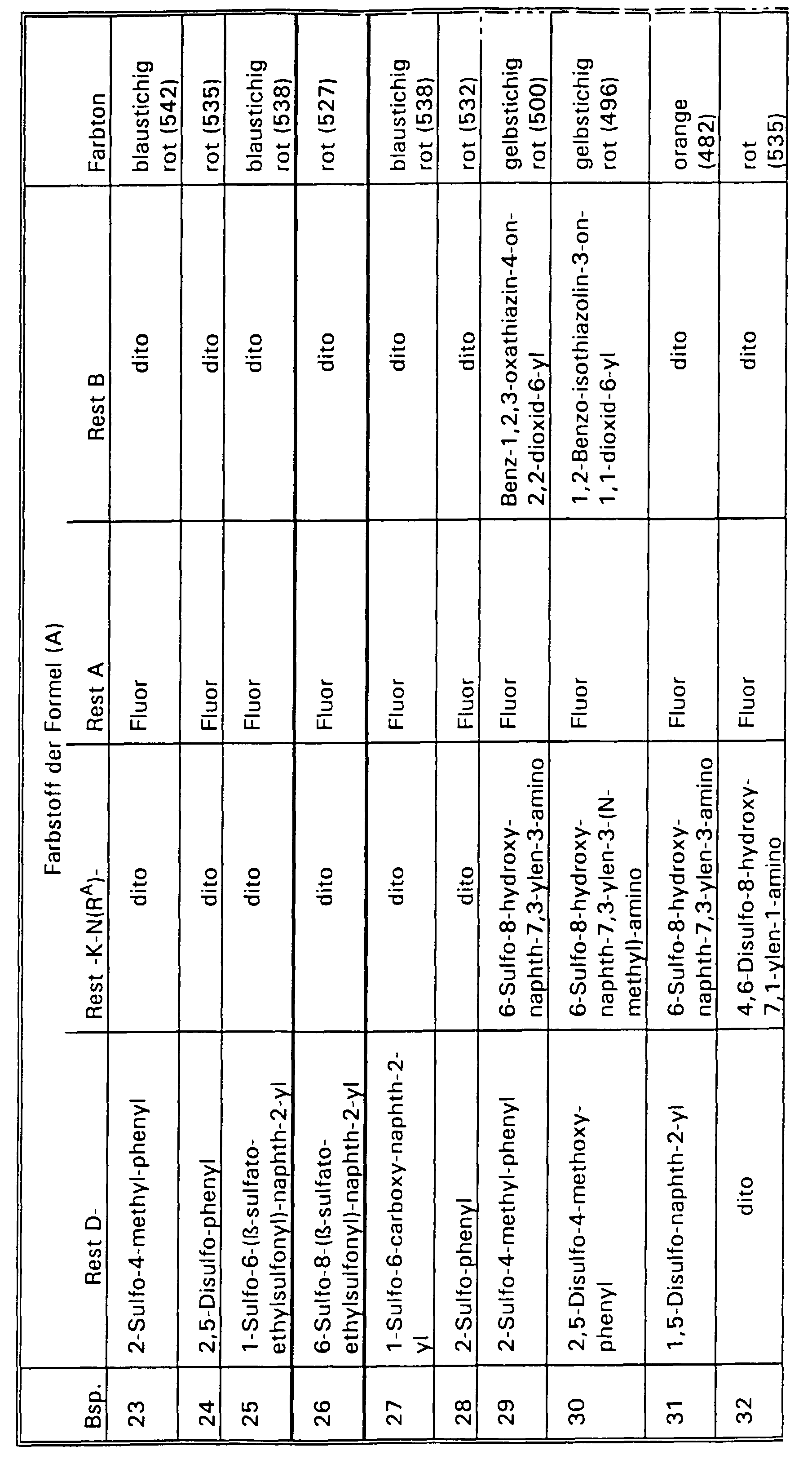

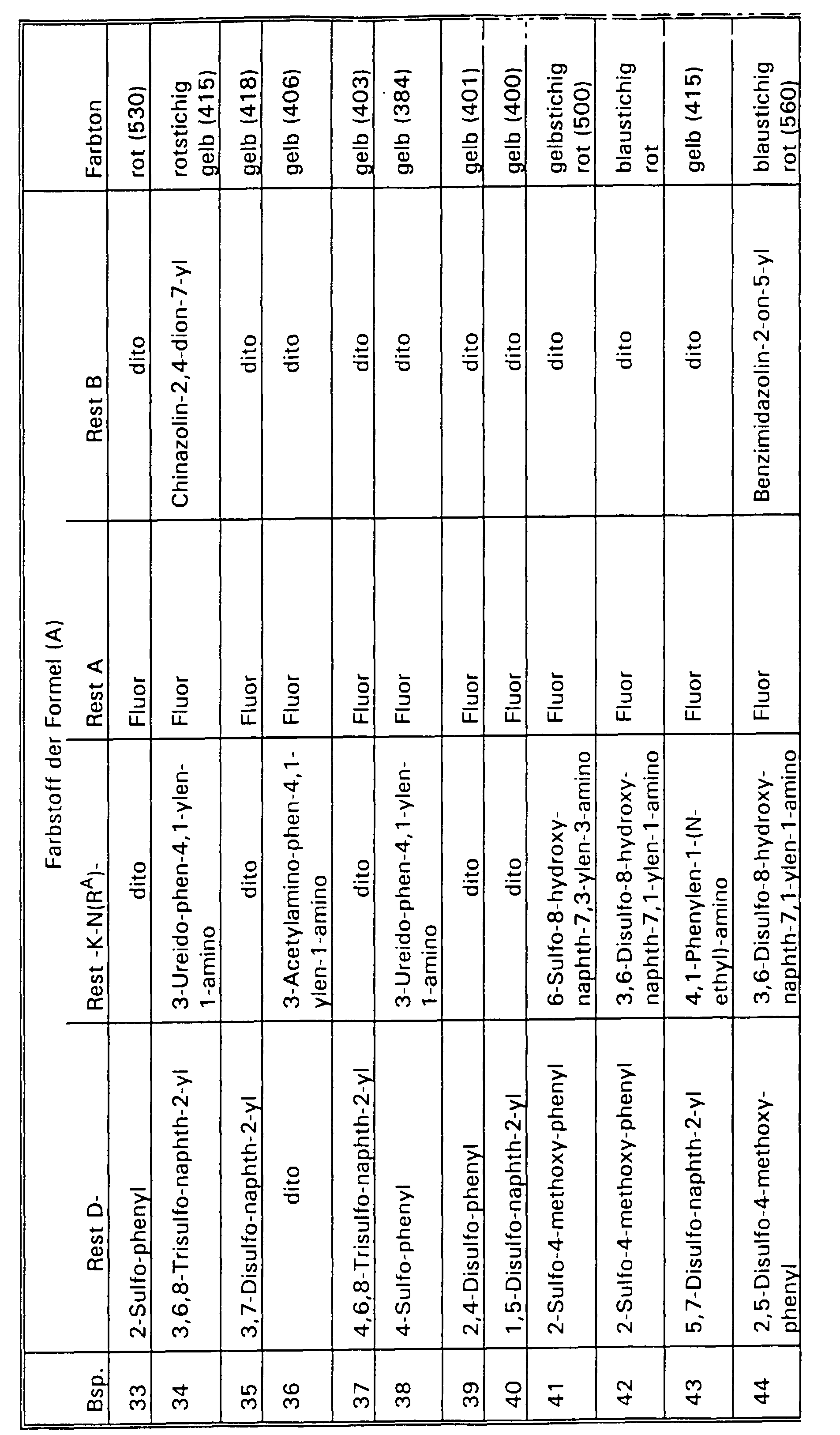

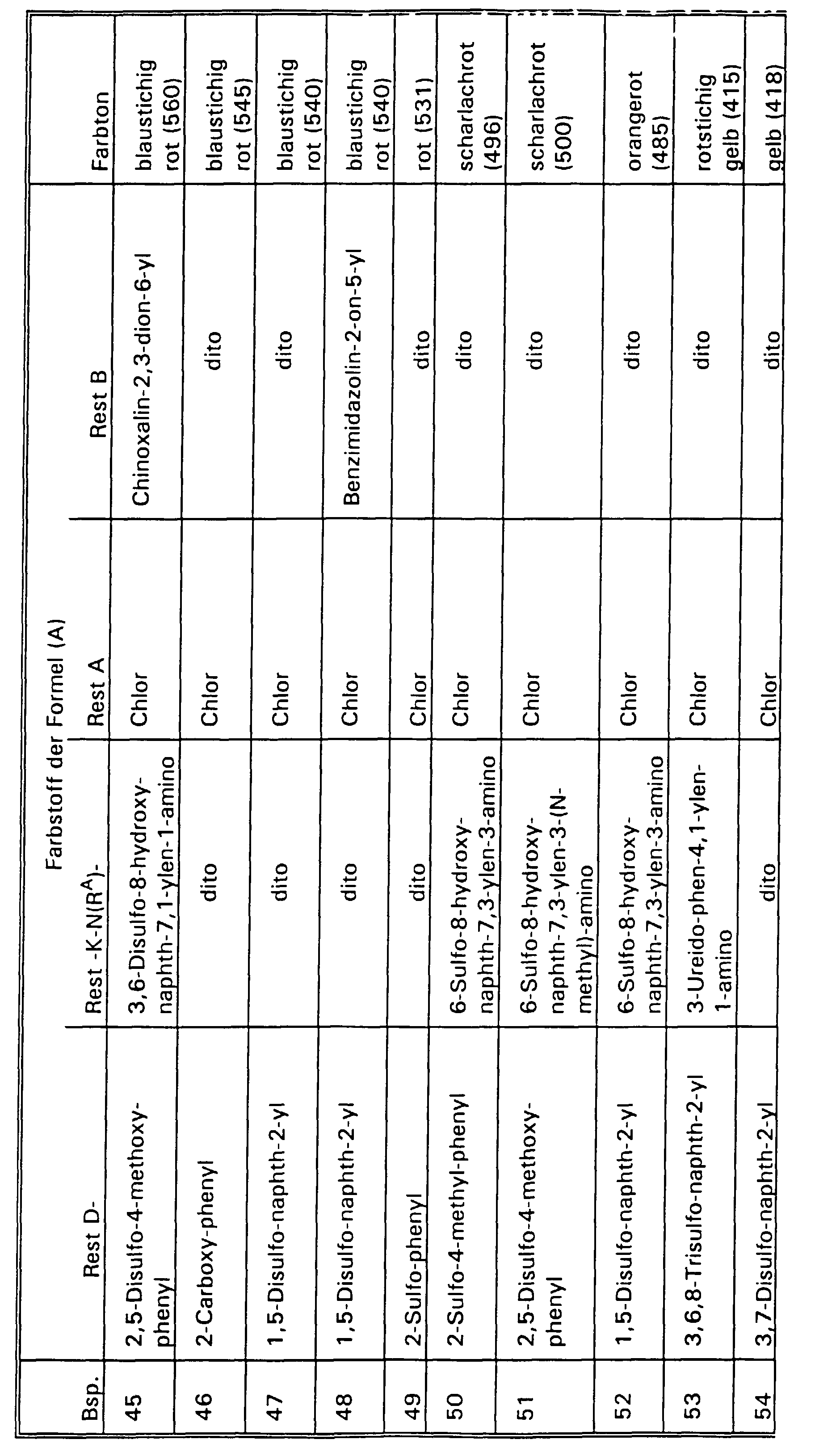

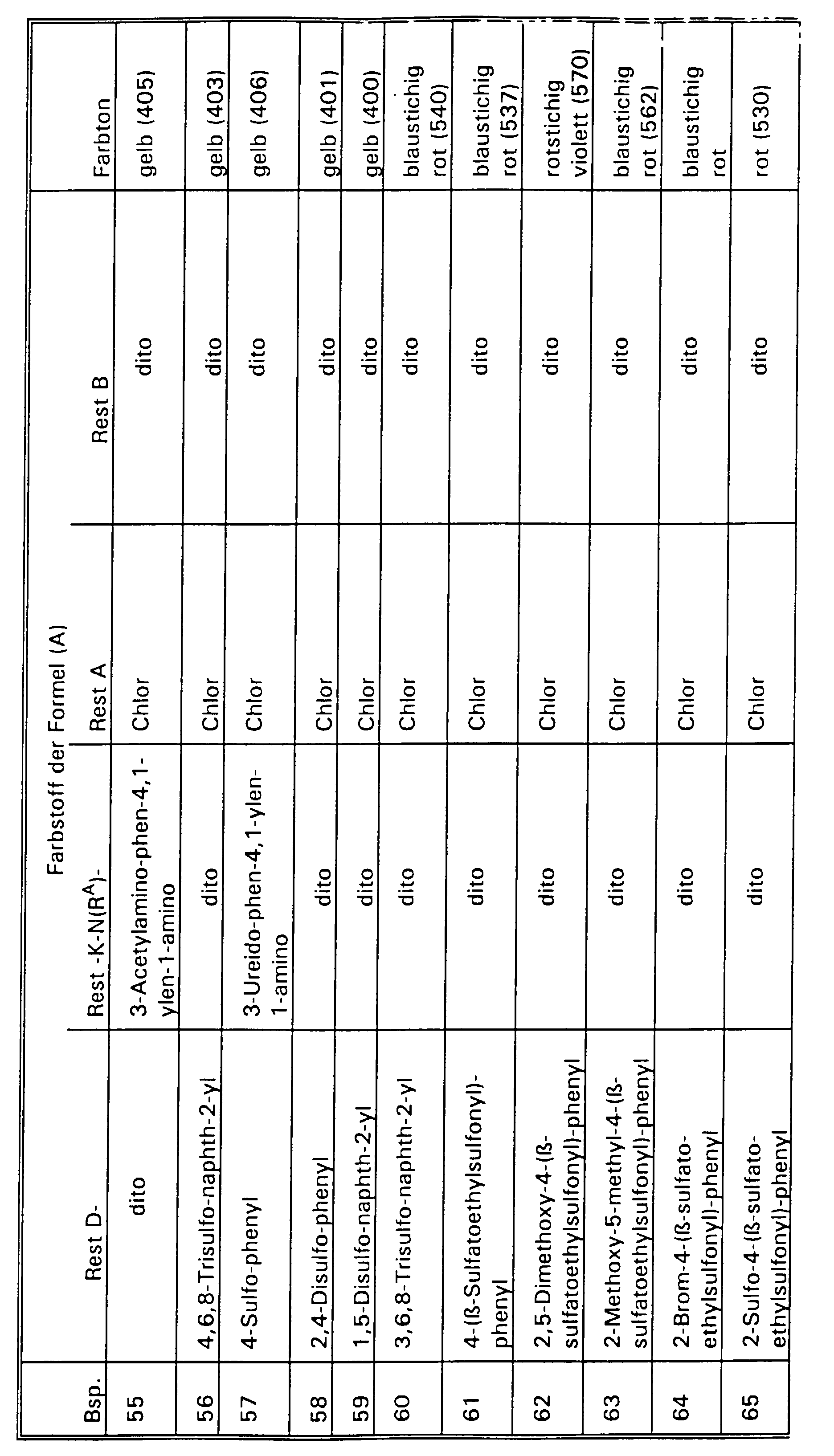

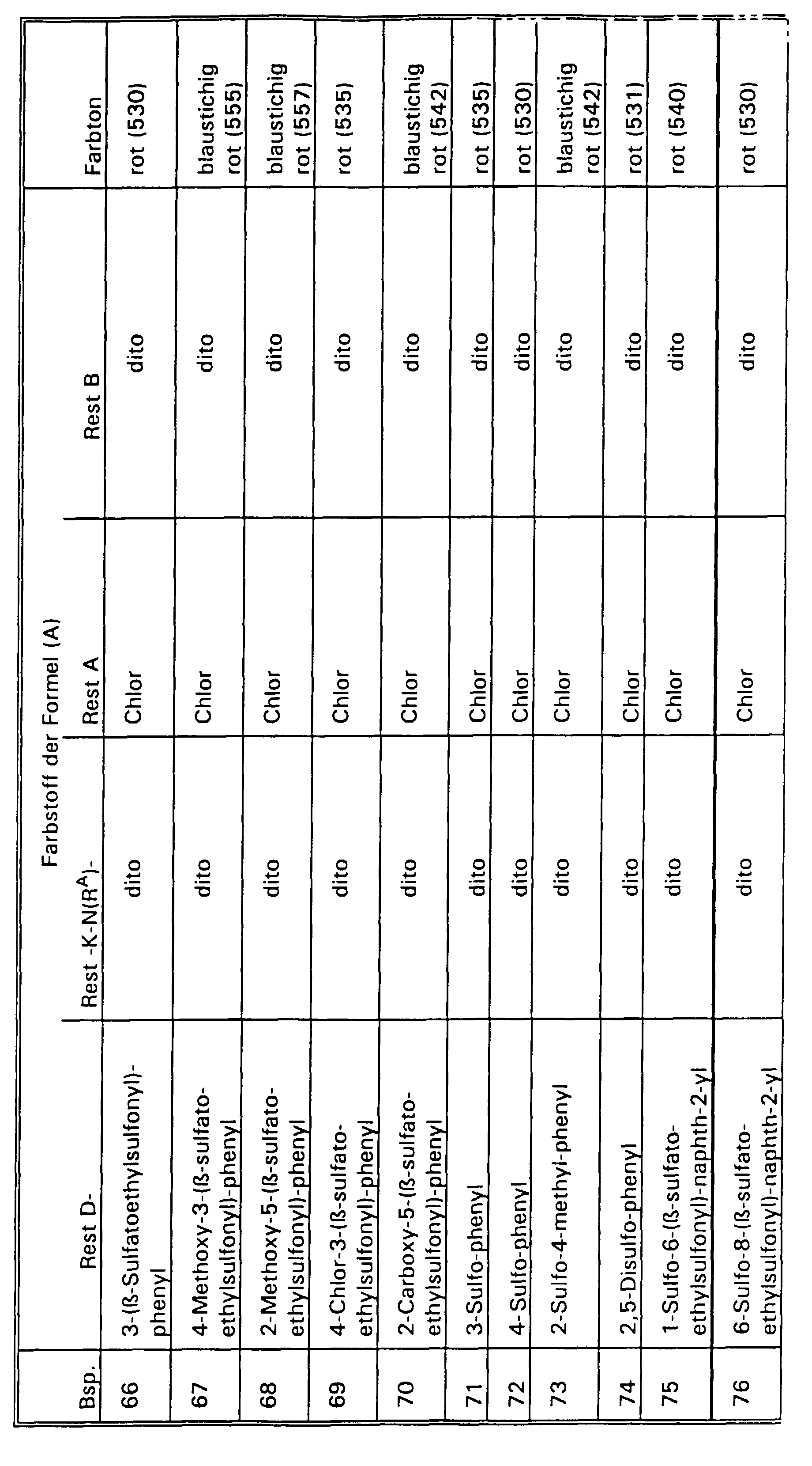

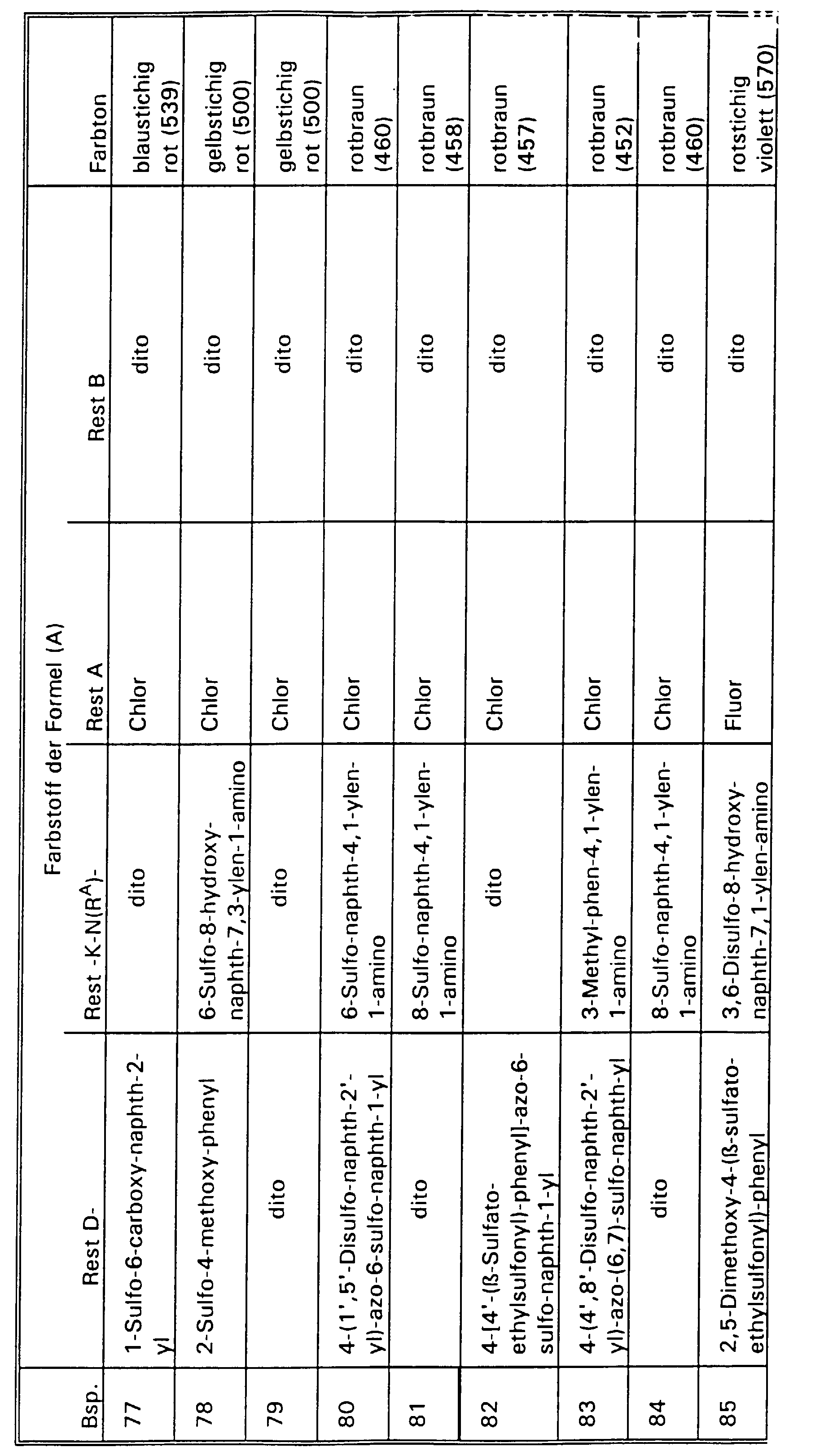

### Beispiel 86

680 Teile einer neutralen wäßrigen Lösung von 0°C von 81 Teilen der Disazoverbindung 2-[4'-(β'-Sulfatoethylsulfonyl)-phenyl]-azo-7-(2''-sulfo-5''-amino-phenyl)-azo-3,6-disulfo-1-amino-8-hydroxy-naphthalin (in üblicher Weise herstellbar durch Kupplungsreaktion von 3,6-Disulfo-1-amino-8-naphthol mit dem Diazoniumsalz von 4-(β-Sulfatoethylsulfonyl)-anilin im stark sauren Bereich und anschließende Kupplungsreaktion der erhaltenen Monoazoverbindung mit dem Monodiazoniumsalz von 1,3-Diaminobenzol-6-sulfonsäure im schwach sauren bis neutralen Bereich) in 600 Teilen Wasser werden unter Einhaltung eines pH-Wertes zwischen 5 und 5,5 und einer Temperatur von 0 bis 5°C langsam mit 15 Teilen Cyanurfluorid versetzt. Anschließend führt man die zweite Kondensationsreaktion nach Zugabe von 17,9 Teilen 5-Amino-benzimidazolin-2-on bei einer Temperatur von 0 bis 5°C und einem pH-Wert von 7 bis 7,5 durch.

Man isoliert den erfindungsgemäßen Disazofarbstoff nach Zugabe von 1 Teil Dinatriumhydrogenphosphat und 3 Teilen Natriumdihydrogenphosphat durch Eindampfen der Syntheselösung, wie beispielsweise durch Sprühtrocknung. Man erhält das Alkalimetallsalz (Natriumsalz) der Verbindung der Formel

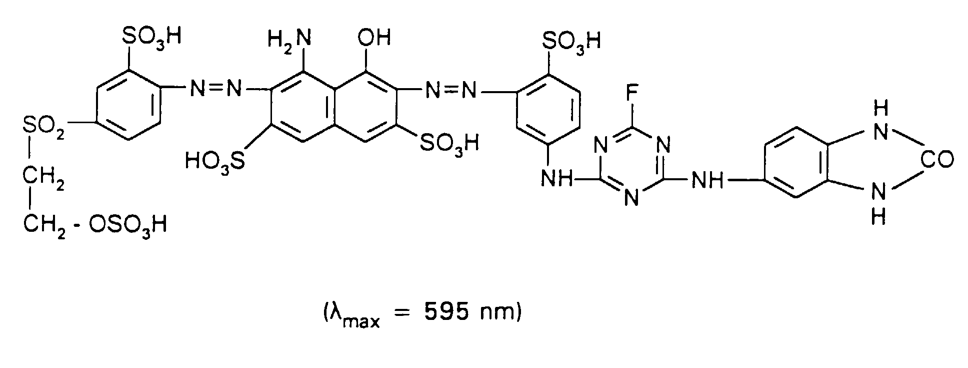

Der erfindungsgemäße Disazofarbstoff besitzt sehr gute faserreaktive Farbstoffeigenschaften und färbt nach den in der Technik für faserreaktive Farbstoffe üblichen Färbe- und Druckverfahren beispielsweise Cellulosefasermaterialien, wie Baumwolle, je nach Einsatz der Farbstoffmenge in hellblauen bis marineblauen Tönen mit guten Echtheitseigenschaften, von denen insbesondere die guten Chlorbadewasserechtheiten hervorgehoben werden können.

### Beispiel 87

Eine Lösung von 19,8 Teilen 1,3-Diaminobenzol-4-sulfonsäure in 100 Teilen Wasser und 12,9 Teilen einer 33%igen wäßrigen Natronlauge gibt man langsam bei 5 bis 10°C innerhalb von 30 Minuten in eine Suspension aus 19,7 Teilen Cyanurchlorid in 50 Teilen Wasser und 85 Teilen Eis. Mittels Natriumcarbonat stellt man den pH-Wert auf 4,0 bis 4,5 und rührt den Ansatz noch eine Stunde bei 8 bis 10°C nach.

Die erhaltene Suspension der 2-Sulfo-5-(dichlor-triazinylamino)-anilin-Verbindung vermischt man mit 6,9 Teilen Hatriumnitrit und 100 Teilen Eis und diazotiert sie bei 0 bis 5°C mittels 68,4 Teilen einer 20%igen wäßrigen Schwefelsäure. Die erhaltene Diazoniumsalzsuspension gibt man bei 10 bis 15°C und einem pH-Wert von 6,0 bis 6,5 in etwa 600 Teile einer wäßrigen Lösung von 53 Teilen der Verbindung 1-Amino-8-hydroxy-3,6-disulfo-2-[4'-(β-sulfatoethylsulfonyl)-phenyl]-azo-naphthalin. Man führt die Kupplungsreaktion unter Einhaltung dieses pH-Wertes durch, gibt anschließend 31 Teile 5-Amino-1-(4'-sulfophenyl)-benzimidazolin-2-on hinzu und führt die Kondensationsreaktion bei einem pH-Wert von 6,0 bis 6,5 und einer Temperatur von 40 bis 45°C während einer Stunde durch.

Man isoliert den erfindungsgemäßen Disazofarbstoff der Formel (in Form der freien Säure geschrieben) 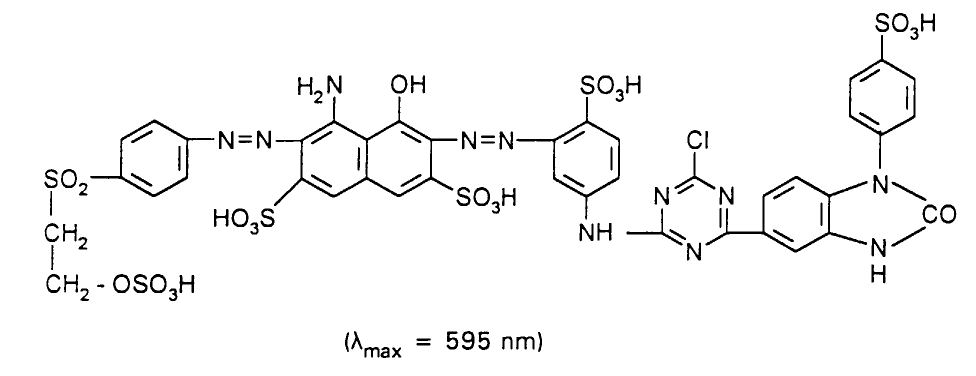 als Alkalimetallsalz (Natriumsalz) in Form eines elektrolythaltigen schwarzen Pulvers. Er zeigt sehr gute Farbstoffeigenschatten und liefert auf den in der Beschreibung genannten Materialien, wie insbesondere Cellulosefasermaterialien, marineblaue Färbungen und Drucke mit guten Echtheitseigenschaften, von denen insbesondere die Chlorbadewasserechtheit hervorgehoben werden kann.

### Beispiel 88

Zur Herstellung eines erfindungsgemäßen Azofarbstoffes diazotiert man 23,0 Teile 2-Sulfo-4-acetylamino-anilin in 100 Teilen Eiswasser, das 6,9 Teile Natriumnitrit gelöst enthält, durch Zugabe von 5 Teilen konz. wäßriger Salzsäure; die erhaltene Diazoniumsalzsuspension wird sodann bei 0 bis 5°C in eine Lösung von 30,3 Teilen 2-Aminonaphthalin-5,7-disulfonsäure in 570 Teilen Wasser eingerührt. Die Kupplungsreaktion erfolgt bei einer Temperatur von 20°C und einem pH-Wert von 4.

Nach beendeter Kupplungsreaktion werden 150 Teile einer 33%igen wäßrigen Natriumhydroxidlösung hinzugegeben und die Acetylaminogruppe bei 60°C während etwa vier Stunden alkalisch hydrolysiert. Zu der so erhaltenen Lösung der aminogruppenhaltigen Azoverbindung gibt man bei einer Temperatur von 0 bis 2°C und unter Einhaltung eines pH-Wertes von 4 bis 5 15 Teile Cyanurfluorid. Nach Beendigung dieser Kondensationsreaktion versetzt man den Ansatz mit 16,3 Teilen 5-Amino-benzimidazolin-2-on und führt die letzte Kondensationsreaktion bei einem pH-Wert von 6,5 bis 7,5 und einer Temperatur von 5 bis 10°C durch.

Man isoliert den erhaltenen erfindungsgemäßen Farbstoff der Formel (in Form der freien Säure geschrieben) 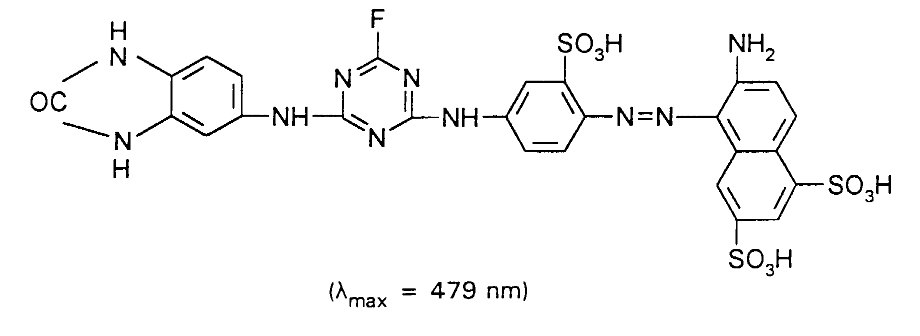 in üblicher Weise, beispielsweise durch Aussalzen mit Natriumchlorid. Er zeigt sehr gute faserreaktive Farbstoffeigenschaften und liefert beispielsweise auf Cellulosefasermaterialien farbstarke orange Färbungen mit guten Echtheiten.

### Beispiel 89

Eine unter Zusatz eines Dispergiermittels hergestellte Suspension von 18 Teilen Cyanurchlorid in 500 Teilen Wasser von 0°C wird bei einem pH-Wert zwischen 2 und 2,5 und einer Temperatur zwischen 0 bis 5°C innerhalb von 20 Minuten mit 17,5 Teilen 1,3-Diaminobenzol-4-sulfonsäure versetzt. Man rührt noch eine Stunde nach und gibt sodann eine neutrale Lösung von 16,6 Teilen 5-Amino-benzimidazolin-2-on in 200 Teilen Wasser hinzu, erwärmt den Ansatz auf 30°C und führt die Umsetzung bei einem pH-Wert von 5 während zwei Stunden zu Ende. Sodann kühlt man den Ansatz auf 0°C ab, gibt 20 Teile 31 %ige wäßrige Salzsäure hinzu, diazotiert mittels 6,9 Teilen Natriumnitrit, rührt noch zwei Stunden bei 0°C nach, gibt die erhaltene Suspension zu einer Lösung von 19,6 Teilen N-Ethyl-4-methyl-3-aminocarbonyl-2-hydroxy-pyrid-6-on in 300 Teilen Wasser und führt die Kupplungsreaktion bei 20°C und einem pH-Wert von 5 während drei Stunden zu Ende.
Der erfindungsgemäße Azofarbstoff, der, in Form der freien Säure geschrieben, die Formel 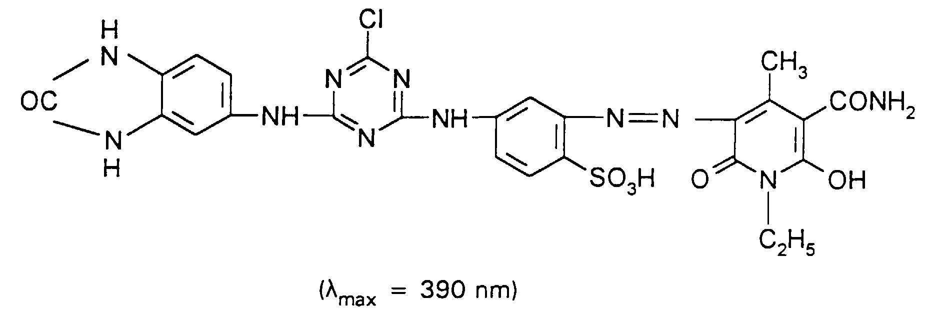 besitzt, wird durch Eindampfen aus der wäßrigen Syntheselösung isoliert. Er färbt beispielsweise Baumwolle in brillanten gelben, echten Farbtönen bei hohem Fixiergrad.

### Beispiel 90

Eine neutrale Lösung von 23,0 Teilen 1-Acetylamino-3-aminobenzol-4-sulfonsäure in 300 Teilen Wasser wird bei 0°C mit 20 Teilen einer 31 %igen wäßrigen Salzsäure versetzt und mit 6,9 Teilen Hatriumnitrit diazotiert. Anschließend gibt man die erhaltenen Suspension zu einer Lösung von 19,6 Teilen N-Ethyl-4-methyl-3-aminocarbonyl-2-hydroxy-pyrid-6-on in 150 Teilen Wasser und führt die Kupplungsreaktion bei 20°C und einen pH-Wert von 5 während drei Stunden zu Ende.

Zu diesem Reaktionsansatz gibt man sodann 30 Vol.-Teile einer 31 %igen wäßrigen Salzsäure und hydrolysiert die Acetylaminogruppe zur Aminogruppe bei 100°C während fünf Stunden. Man stellt danach mit wäßriger Natriumcarbonatlösung einen pH-Wert von 7 ein und kühlt den Ansatz auf 0°C ab. Nach Zugabe von 2,7 Teilen Natriumfluorid und 300 Teilen Eis werden unter intensivem Rühren zunächst innerhalb von fünf Minuten 13,8 Teile Cyanurfluorid und anschließend nach weiteren 15 Minuten 14,9 Teile 5-Benzimidazolin-2-on hinzugegeben. Man stellt einen pH-Wert von 7 ein und rührt noch zwei Stunden bei etwa 20°C nach. Man isoliert den erfindungsgemäßen Azofarbstoff, der konstitutionell dem Farbstoffes des Beispieles 88 entspricht und die gleich guten färberischen Eigenschaften besitzt wie der nach Beispiel 88 hergestellte Azofarbstoff.

### Beispiele 91 bis 122

In den nachfolgenden Tabellenbeispielen sind weitere erfindungsgemäße Azofarbstoffe entsprechend der allgemeinen Formel (B) 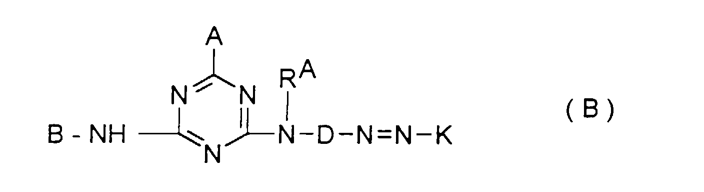 mit Hilfe der daraus ersichtlichen Komponenten beschrieben. Sie lassen sich in einer der erfindungsgemäßen Verfahrensweisen, beispielsweise analog den Angaben der Beispiele 86 bis 90 durch Umsetzung der aus den Formelresten ersichtlichen Ausgangsverbindungen herstellen. Sie besitzen sehr gute faserreaktive Farbstoffeigenschaften und liefern auf den in der Beschreibung genannten Fasermaterialien, wie insbesondere Baumwolle, nach den für faserreaktiven Farbstoffe üblichen Applikations- und Fixierverfahren farbstarke Färbungen und Drucke mit dem in dem jeweiligen Tabellenbeispiel für Baumwolle angegebenen Farbton.

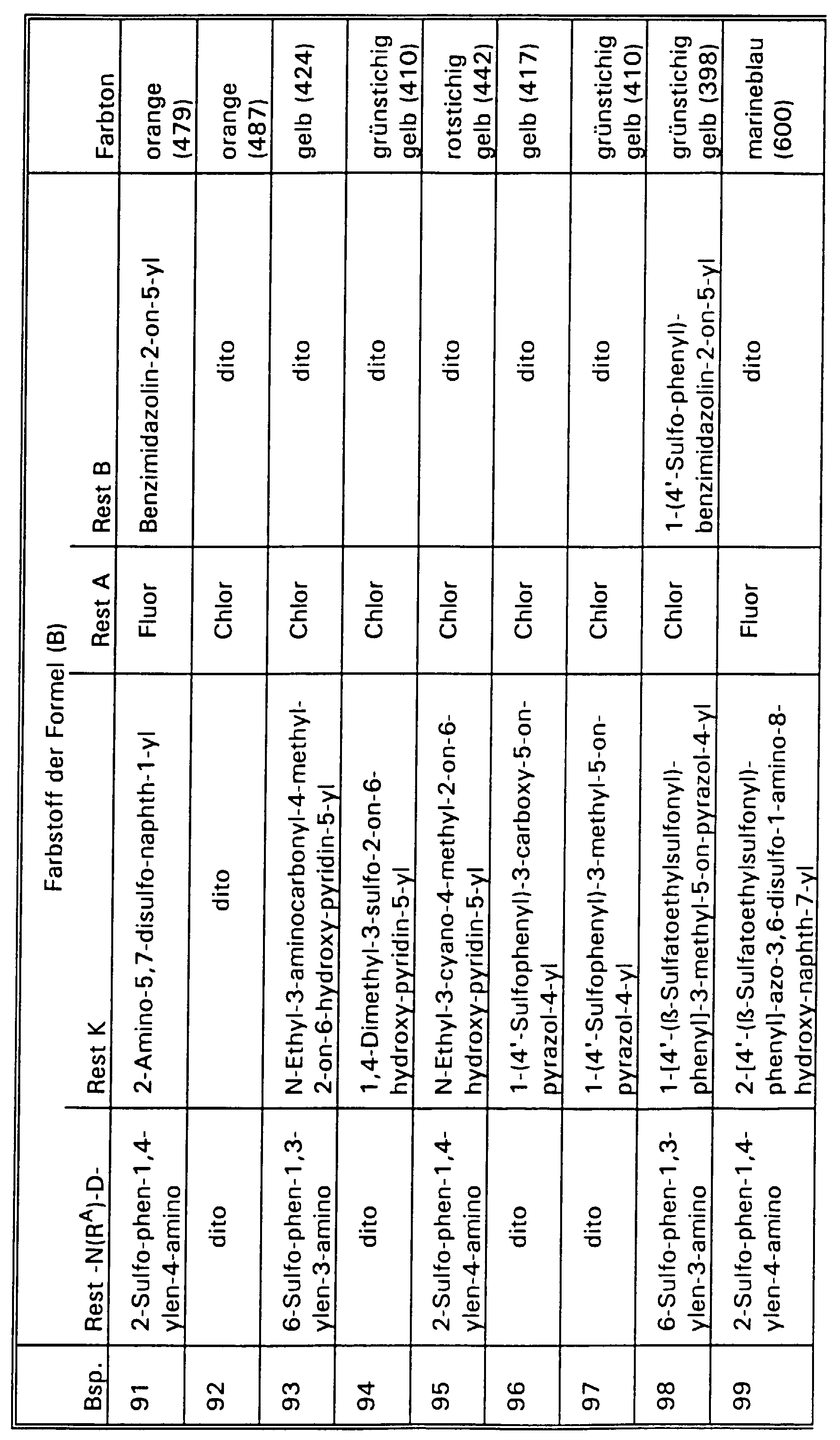

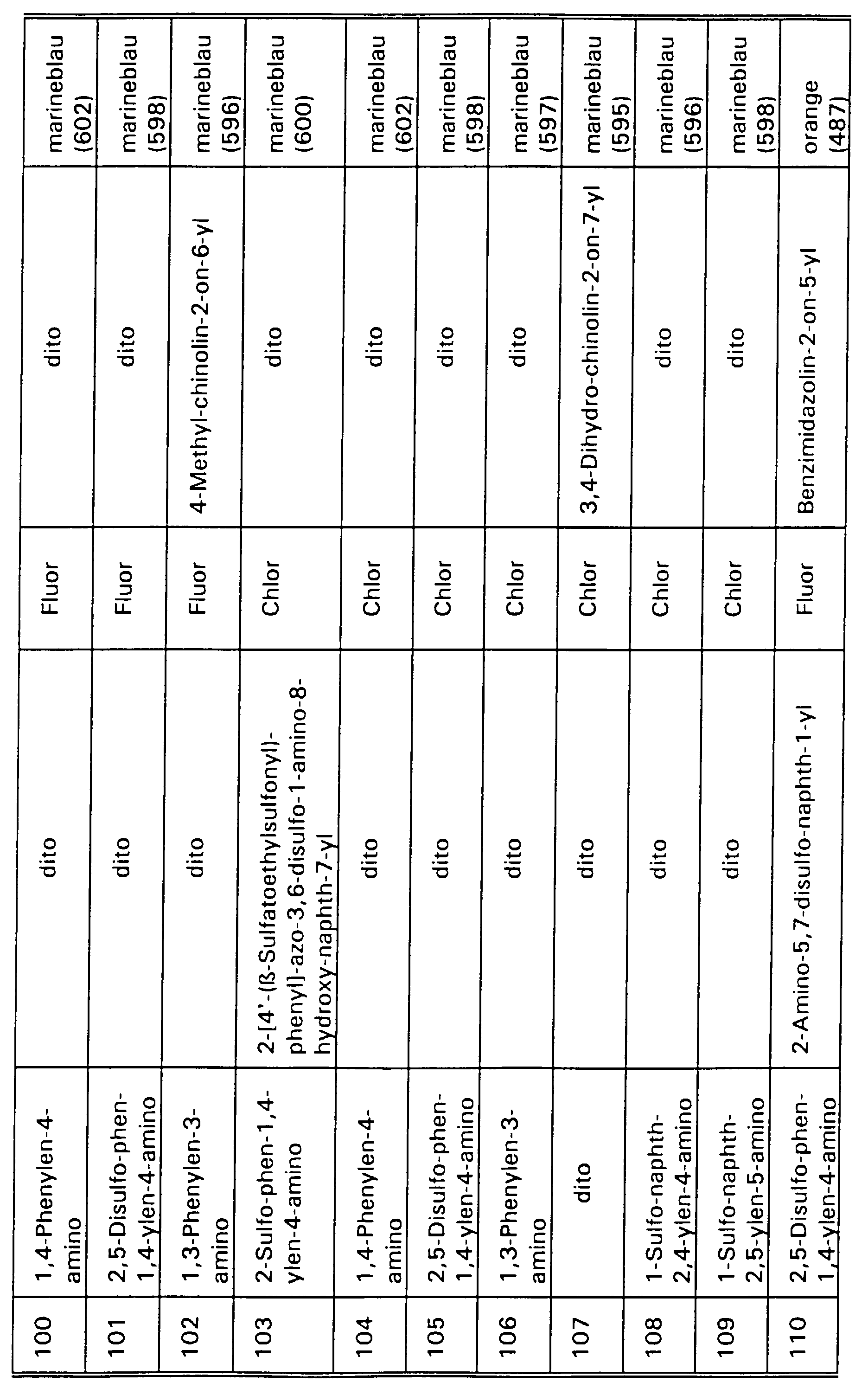

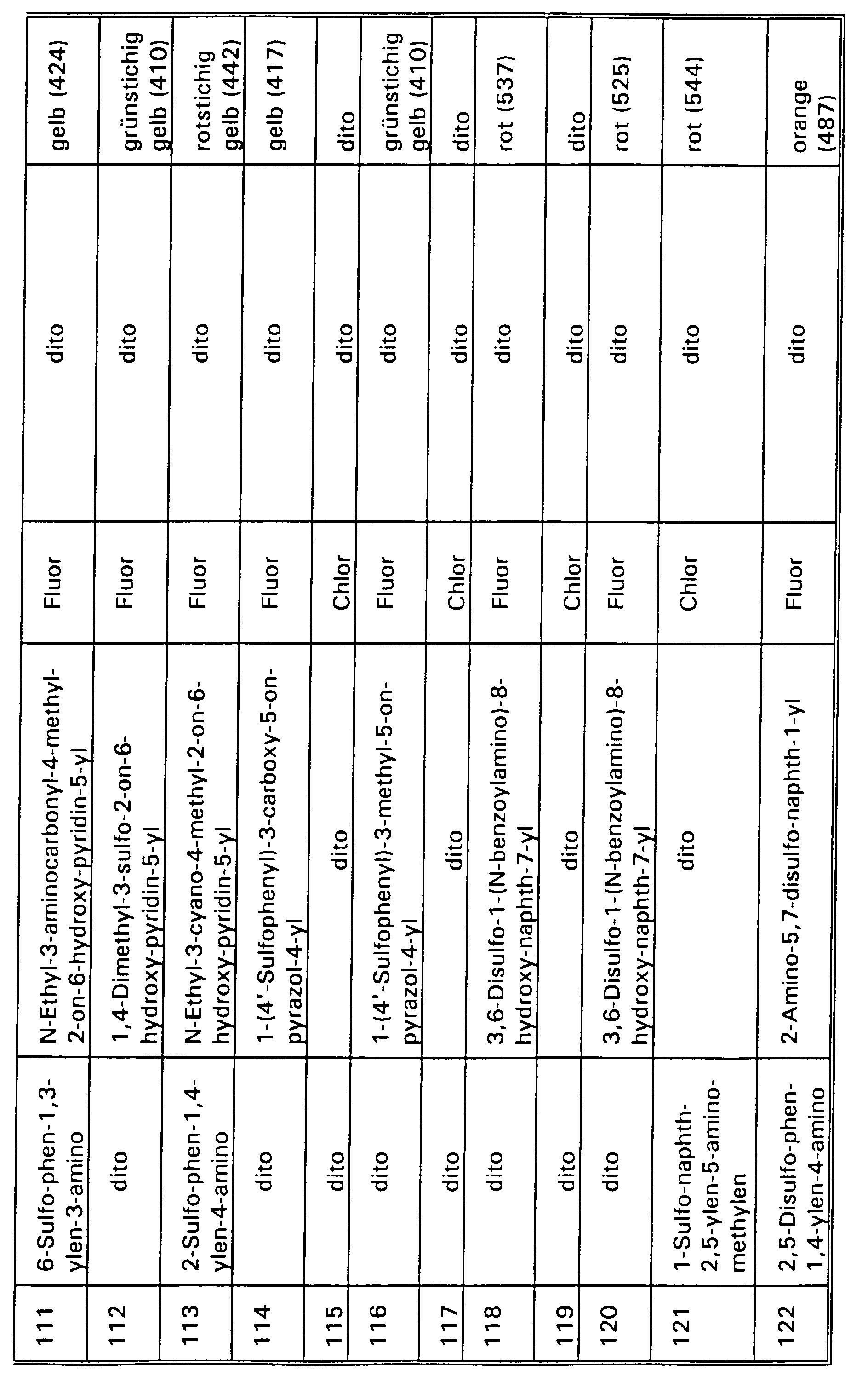

### Beispiel 123

Eine Lösung von 29,8 Teilen der Ausgangsverbindung N-(2-Carboxy-5-sulfophenyl)-N'-(2''-hydroxy-3'-amino-5'-sulfo-phenyl)-ms-phenyl-Kupferformazan wird in einer Mischung aus 300 Teilen Wasser und 300 Teilen Eis innerhalb von etwa 15 Minuten unter gutem Rühren und unter Einhaltung eines pH-Wertes zwischen 6,5 und 7 mittels einer wäßrigen Natriumcarbonatlösung mit einer Lösung von 10 Teilen Cyanurchlorid in 100 Teilen Aceton versetzt. Man rührt danach noch 15 Minuten weiter und gibt sodann 9,0 Teile 5-Amino-benzimidazolin-2-on in 270 Teilen Wasser hinzu und führt die Umsetzung bei einem pH-Wert von 4 und einer Temperatur von 30 bis 35°C innerhalb von etwa 3 Stunden zu Ende.

Der erfindungsgemäße Kupferformazanfarbstoff der Formel (in Form der freien Säure geschrieben) 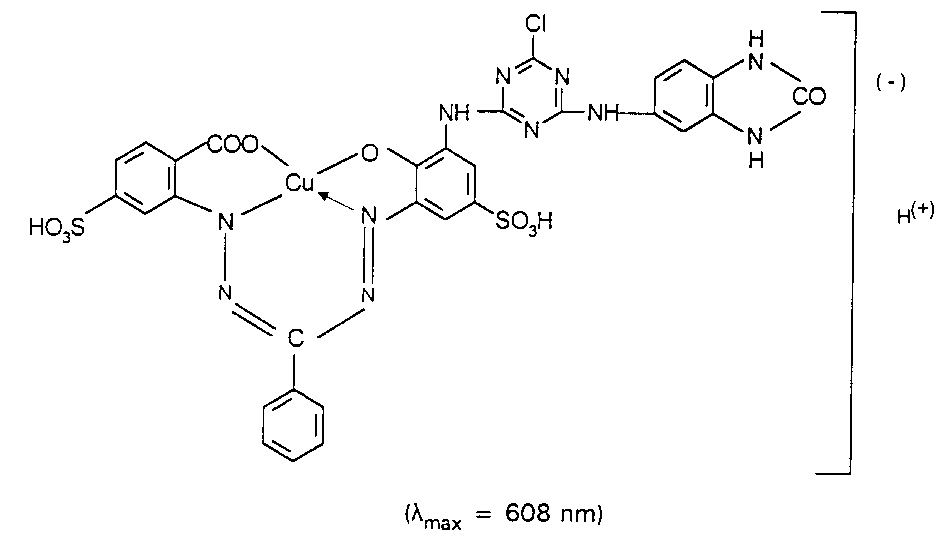 wird aus der Syntheselösung durch Natriumchlorid ausgesalzen. Er färbt beispielsweise Baumwolle nach den in der Technik für faserreaktive Farbstoffe üblichen Färbeweisen in farbstarken, blauen Tönen mit guten Echtheiten.

### Beispiel 124

Eine neutrale Lösung von 25,2 Teilen 1-Amino-4-(2'-methyl-3'-amino-phenylamino)-anthrachinon-2,5'-disulfonsäure wird unter gutem Rühren bei 0°C und unter Einhaltung eines pH-Wertes von 5 innerhalb von 30 Minuten mit 7,1 Teilen Cyanurfluorid versetzt. Man rührt noch einige Zeit bis zur Beendigung der Umsetzung nach, gibt sodann 15,5 Teile 5-Amino-1-(4-sulfo-phenyl)-benzimidazolin-2-on hinzu, führt die Umsetzung bei einem pH-Wert von 8,5 und bei einer Temperatur von 5°C zu Ende und rührt anschließend noch einige Zeit bei einem pH-Wert von 7 und bei 20°C nach.

Der erfindungsgemäße Anthrachinonfarbstoff der Formel (in Form der freien Säure geschrieben) 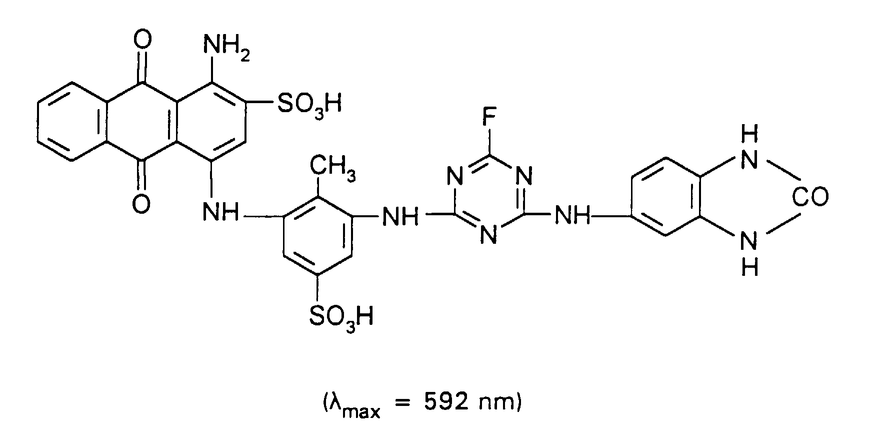 wird durch Aussalzen aus der Syntheselösung mittels Kaliumchlorid isoliert. Er zeigt sehr gute faserreaktive Farbstoffeigenschaften und färbt die in der Beschreibung genannten Materialien, wie beispielsweise Cellulosefasermaterialien, in brillanten blauen Tönen mit guten Echtheitseigenschaften.

### Beispiel 125

Eine neutrale Lösung von 55 Teilen der Triphendioxazinverbindung der Formel 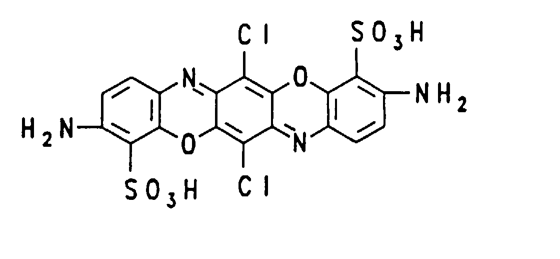 in 500 Teilen Wasser wird bei 0°C und unter Einhaltung eines pH-Wertes zwischen 5 und 6 unter gutem Rühren langsam mit 29 Teilen Cyanurfluorid versetzt. Man rührt noch kurze Zeit nach und gibt sodann 31,4 Teile 5-Amino-benzimidazolin-2-on hinzu und führt die Umsetzung bei 0 bis 10°C unter Einhaltung eines pH-Wertes von 8 bis 9 zu Ende.

Der erfindungsgemäße Triphendioxazinfarbstoff, der, in Form der freien Säure geschrieben, die Formel 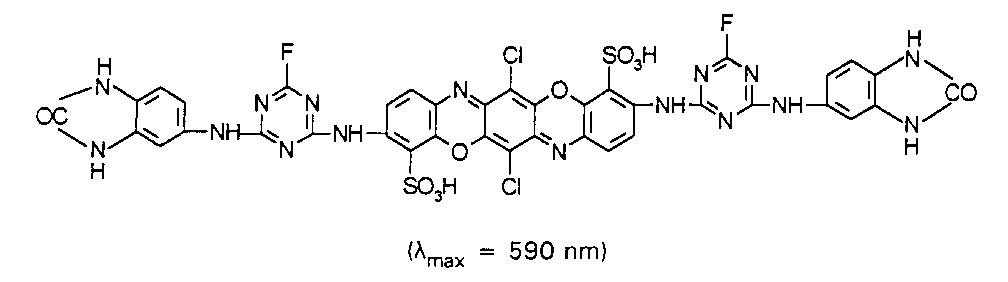 besitzt, wird durch Aussalzen mit Natriumchlorid isoliert. Er zeigt gute faserreaktive Farbstoffeigenschaften und färbt nach den in der Technik für faserreaktive Farbstoffe üblichen Applikations- und Fixierverfahren auf den in der Beschreibung genannten Materialien, wie insbesondere Cellulosefasermaterialien, in farbstarken blauen Tönen mit guten Echtheitseigenschaften.

### Beispiel 126

58,9 Teile 2,9-Diamino-6,13-dichlor-1,8-disulfo-triphendioxazin werden in 1500 Teilen Wasser angerührt und mit einer wäßrigen Lithiumhydroxidlösung auf einen pH-Wert von 7 eingestellt. Man gibt bei 20 bis 25°C 60 Teile Cyanurchlorid hinzu, wobei man den pH-Wert mittels einer wäßrigen Lithiumhydroxidlösung zwischen 4 und 5 hält. Man rührt den Ansatz noch eine Weile weiter, bis die Umsetzung abgeschlossen ist, saugt die ausgefallene Dichlortriazinylamino-Verbindung ab, rührt den feuchten Filterkuchen in 1000 Teile Wasser ein, gibt sodann 30,5 Teile 5-Amino-benzimidazolin-2-on, gelöst in 200 Teilen Wasser, hinzu, erhöht die Temperatur auf 60°C und rührt bei einem pH-Wert zwischen 4 und 5 bis zur vollständigen Umsetzung weiter.

Man isoliert den erfindungsgemäßen Triphendioxazinfarbstoff der Formel (in Form der freien Säure geschrieben) 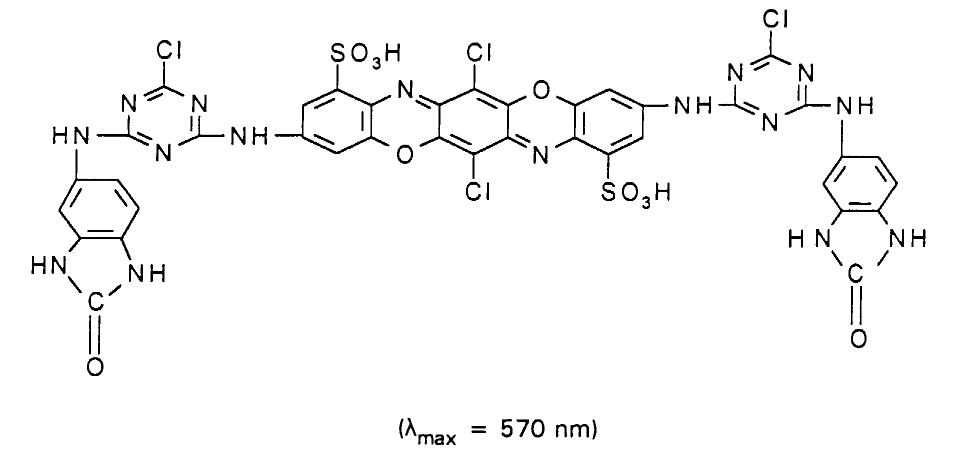 durch Aussalzen mittels Natriumchlorid als Alkalimetallsalz (Natriumsalz). Der erfindunsgemäße Farbstoff zeigt sehr gute faserreaktive Eigenschaften und liefert auf den in der Beschreibung genannten Materialien, insbesondere Cellulosefasermaterialien, nach den in der Technik für faserreaktive Farbstoffe üblichen Anwendungsverfahren farbstarke, brillante rotstichig blaue Färbungen und Drucke in hohen Fixierquoten und guten Echtheitseigenschaften.

### Beispiel 127

Eine neutrale Lösung von 50,3 Teilen der Verbindung 3-(m-Amino-p-sulfophenyl-aminosulfonyl)-kupferphthalocyanin-3',3'',3'''-trisulfonsäure in 500 Teilen Wasser wird bei 0 bis 3°C unter Einhaltung eines pH-Wertes von 6 bis 7 innerhalb von etwa 30 Minuten mit 7,1 Teilen Cyanurchlorid versetzt. Man rührt unter Einhaltung dieser Verfahrensbedingungen noch einige Zeit nach, setzt 7,8 Teile 5-Amino-benzimidazolin-2-on hinzu und führt die Umsetzung bei einem pH-Wert von etwa 5 und einer Temperatur von etwa 35°C durch.

Der erhaltene erfindungsgemäße Kupferphthalocyaninfarbstoff der Formel (in Form der freien Säure geschrieben) 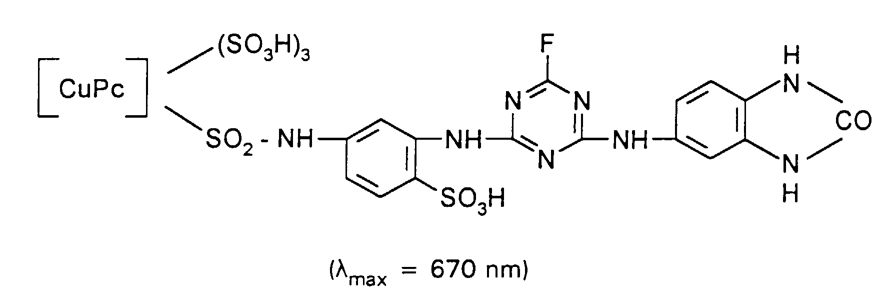 wird durch Natriumchlorid aus der Syntheselösung ausgesalzen. Er färbt beispielsweise Baumwolle, Zellwolle und Regeneratcellulose in farbstarken, türkisblauen, echten Tönen.

### Beispiel 128

Zur Herstellung eines erfindungsgemäßen Kupferphthalocyaninfarbstoffes verfährt man gemäß der Verfahrensweise des Beispieles 126, setzt jedoch anstelle der dort verwendeten Kupferphthalocyanin-Ausgangsverbindung die 3-(p-Amino-m-sulfo-phenyl-aminosulfonyl)-kupferphthalocyanin-3',3'',3'''-trisulfonsäure.

Der erfindungsgemäße Kupferphthalocyaninfarbstoff zeigt in wäßriger Lösung im sichtbaren Bereich ein Absorptionsmaximum bei 670 nm und liefert als Farbstoff mit guten faserreaktiven Eigenschaften beispielsweise auf Baumwolle farbstarke türkisblaue, echte Färbungen und Drucke.

## Patentansprüche

1. Sulfogruppenhaltiger Farbstoff der allgemeinen Formel (1) 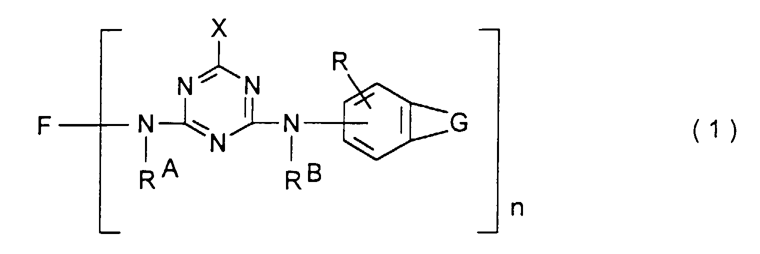 in welcher bedeuten:
F ist der Rest eines sulfogruppenhaltigen Mono-, Dis- oder Polyazofarbstoffes oder eines Schwermetallkomplex-Mono-, -Dis- oder -Trisazofarbstoffes oder eines Anthrachinon-, Azomethin-, Phenazin-, Stilben-, Triphenylmethan-, Xanthen-, Thioxanthen-, Nitroaryl-, Naphthochinon-` Pyrenchinon-, Perylentetracarbimid-, Formazan-, Kupferformazan-, Phthalocyanin-, Kupferphthalocyanin-, Nickelphthalocyanin- oder Kobaltphthalocyanin-Farbstoffes oder eines Triphendioxazin-Farbstoffes;
n ist die Zahl 1 oder 2;
R^{A} ist Wasserstoff oder Alkyl von 1 bis 4 C-Atomen ist, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo, Sulfato oder Phosphato substituiert sein kann;
R^{B} ist Wasserstoff oder Alkyl von 1 bis 6 C-Atomen, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo, Sulfato, Phosphato, Phenyl oder Sulfophenyl substituiert sein kann, oder ist Phenyl, das durch 1, 2 oder 3 Substituenten aus der Gruppe Halogen, Alkyl von 1 bis 4 C-Atomen, Alkoxy von 1 bis 4 C-Atomen, Sulfo und Carboxy substituiert sein kann;
X ist Halogen;
R ist Wasserstoff, Alkyl von 1 bis 4 C-Atomen, insbesondere Methyl, Alkoxy von 1 bis 4 C-Atomen, Halogen oder Sulfo;
G bildet zum Benzolring den Rest eines Heterocyclus, der mindestens eine Carbonamidgruppe der Formel -CO-N(R¹⁰)- enthält, in welcher R¹⁰ Wasserstoff, Alkyl von 1 bis 4 C-Atomen oder gegebenenfalls durch 1 bis 3 Substituenten aus der Gruppe Sulfo, Carboxy, Alkoxy von 1 bis 4 C-Atomen, Alkyl von 1 bis 4 C-Atomen, Halogen, Cyano, Nitro und Amino substituiertes Aryl von 6 bis 10 C-Atomen ist.

2. Farbstoff nach Anspruch 1, dadurch gekennzeichnet, daß F der Rest eines sulfogruppenhaltigen Mono- oder Disazofarbstoffes ist.

3. Farbstoff nach Anspruch 1, dadurch gekennzeichnet, daß F der Rest eines 1:1-Kupferkomplex-Mono- oder -Disazofarbstoffes ist.

4. Farbstoff nach Anspruch 1, dadurch gekennzeichnet, daß F der Rest eines Anthrachinonfarbstoffes ist.

5. Farbstoff nach Anspruch 1, dadurch gekennzeichnet, daß F der Rest eines Kupferformazan-Farbstoffes ist.

6. Farbstoff nach Anspruch 1, dadurch gekennzeichnet, daß F der Rest eines Kupferphthalocyanin- oder Nickelphthalocyanin-Farbstoffes ist.

7. Farbstoff nach Anspruch 1, dadurch gekennzeichnet, daß F der Rest eines Triphendioxazinfarbstoffes ist.

8. Farbstoff nach mindestens einem der Ansprüche 1 bis 7, dadurch gekennzeichnet, daß X Chlor oder Fluor ist.

9. Farbstoff nach mindestens einem der Ansprüche 1 bis 8, dadurch gekennzeichnet, daß R^{A} Wasserstoff ist.

10. Farbstoff nach mindestens einem der Ansprüche 1 bis 9, dadurch gekennzeichnet, daß G eine Gruppe der Formel (a), (b) (c), (d), (e), (f), (g), (h) oder (j) 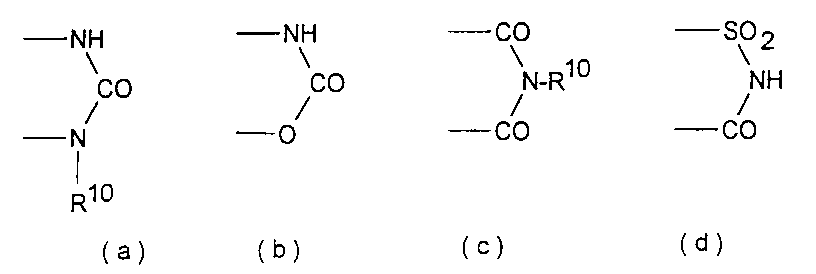 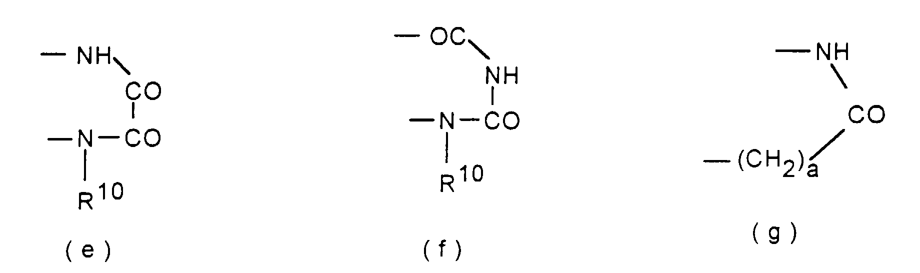 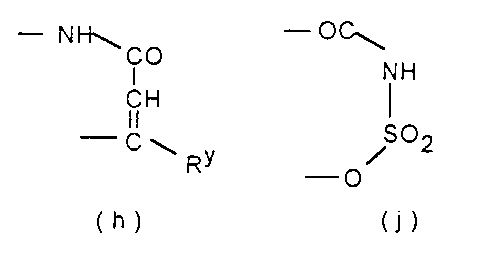 in welchen R¹⁰ die in Anspruch 1 genannte Bedeutung hat, in Formel (g) der Index a für die Zahl 1 oder 2 steht und R^{y} Wasserstoff oder Alkyl von 1 bis 4 C-Atomen ist, das durch Alkoxy von 1 bis 4 C-Atomen, Carboxy, Sulfo, Sulfato oder Phosphato substituiert sein kann, oder Phenyl oder Naphthyl ist.

11. Verfahren zur Herstellung eines Farbstoffes entsprechend der allgemeinen Formel (1) von Anspruch 1, dadurch gekennzeichnet, daß man für den jeweiligen Farbstoff typische Vorprodukte, von denen mindestens eines eine Gruppe der allgemeinen Formel (2) enthält, miteinander umsetzt oder daß man eine Halogen-triazin-Verbindung der allgemeinen Formel (21) 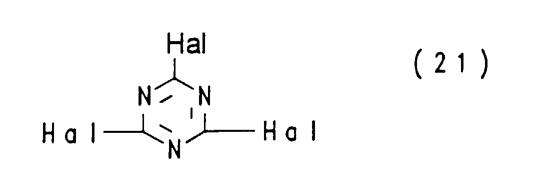 in welcher Hal für Halogen steht, mit einer aminogruppenhaltigen Verbindung der allgemeinen Formel (20) 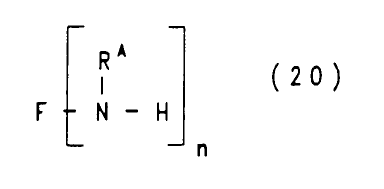 mit F, R^{A} und n der in Anspruch 1 genannten Bedeutungen und einer Aminoverbindung der allgemeinen Formel (22) 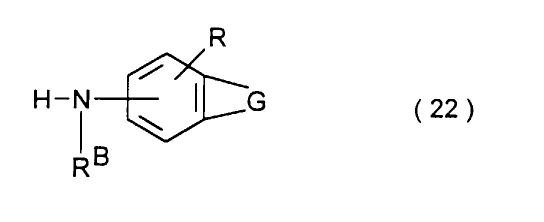 mit R^{B}, R und G der in Anspruch 1 genannten Bedeutungen in beliebiger Reihenfolge umsetzt.

12. Verwendung eines Farbstoffes von Anspruch 1 oder eines nach Anspruch 11 hergestellten Farbstoffes zum Färben (einschließlich Bedrucken) von hydroxy- und/oder carbonamidgruppenhaltigem Material, insbesondere Fasermaterial.

13. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff einen Farbstoff von Anspruch 1 oder einen nach Anspruch 11 hergestellten Farbstoff einsetzt.

## Claims

1. A sulfo-containing dye of the formula (1) 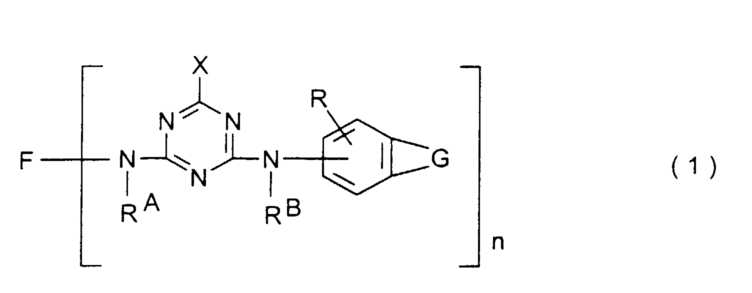 in which:
F is the radical of a sulfo-containing mono-, dis- or polyazo dye, or of a heavy metal complex mono-, dis- or trisazo dye or of an anthraquinone, azomethine, phenazine, stilbene, triphenylmethane, xanthene, thioxanthene, nitroaryl, naphthoquinone, pyrenequinone, perylenetetracarbimide, formazan, copper formazan, phthalocyanine, copper phthalocyanine, nickel phthalocyanine or cobalt phthalocyanine dye or of a triphendioxazine dye;
n is the number 1 or 2;
R^{A} is hydrogen or alkyl of 1 to 4 C atoms which can be substituted by halogen, hydroxyl, cyano, alkoxy of 1 to 4 C atoms, alkoxycarbonyl of 2 to 5 C atoms, carboxyl, sulfamoyl, sulfo, sulfato or phosphato;
R^{B} is hydrogen or alkyl of 1 to 6 C atoms which can be substituted by halogen, hydroxyl, cyano, alkoxy of 1 to 4 C atoms, alkoxycarbonyl of 2 to 5 C atoms, carboxyl, sulfamoyl, sulfo, sulfato, phosphato, phenyl or sulfophenyl, or is phenyl which can be substituted by 1, 2 or 3 substituents from the group consisting of halogen, alkyl of 1 to 4 C atoms, alkoxy of 1 to 4 C atoms, sulfo and carboxyl;
X is halogen;
R is hydrogen, alkyl of 1 to 4 C atoms, especially methyl, alkoxy of 1 to 4 C atoms, halogen or sulfo,
G forms at the benzene ring the radical of a heterocycle which includes at least one carboxamide group of the formula -CO-N(R¹⁰)- in which R¹⁰ is hydrogen, alkyl of 1 to 4 C atoms, or is aryl of 6 to 10 C atoms which is unsubstituted or substituted by 1 to 3 substituents from the group consisting of sulfo, carboxyl, alkoxy of 1 to 4 C atoms, alkyl of 1 to 4 C atoms, halogen, cyano, nitro and amino.

2. The dye as claimed in claim 1, wherein F is the radical of a sulfo-containing mono- or disazo dye.

3. The dye as claimed in claim 1, wherein F is the radical of a 1:1 copper complex mono- or disazo dye.

4. The dye as claimed in claim 1, wherein F is the radical of an anthraquinone dye.

5. The dye as claimed in claim 1, wherein F is the radical of a copper formazan dye.

6. The dye as claimed in claim 1, wherein F is the radical of a copper phthalocyanine or nickel phthalocyanine dye.

7. The dye as claimed in claim 1, wherein F is the radical of a triphendioxazine dye.

8. The dye as claimed in at least one of claims 1 to 7, wherein X is chlorine or fluorine.

9. The dye as claimed in at least one of claims 1 to 8, wherein R^{A} is hydrogen.

10. The dye as claimed in at least one of claims 1 to 9, wherein G is a group of the formula (a), (b), (c), (d), (e), (f), (g), (h) or (j) 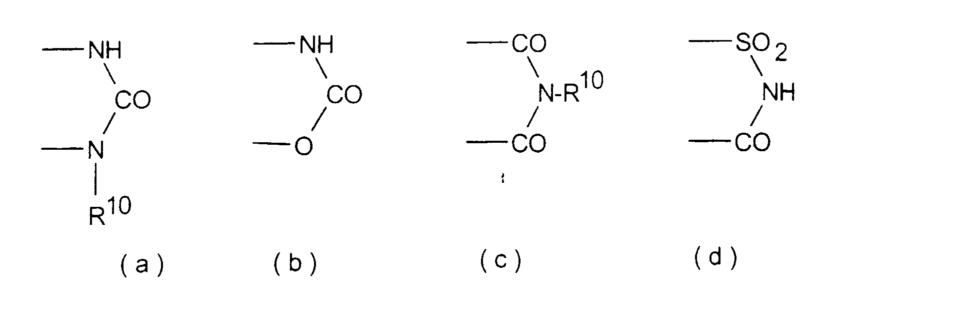 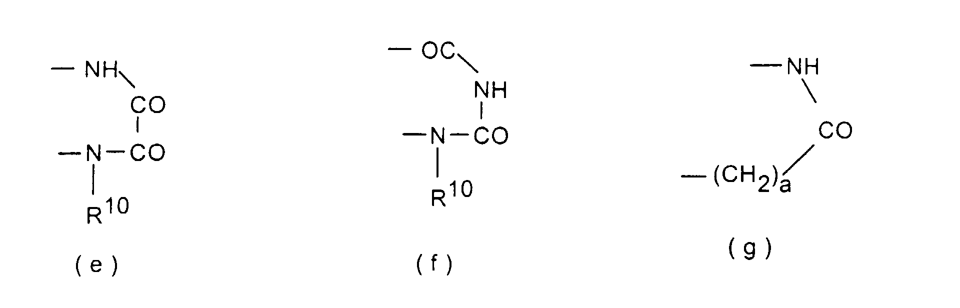 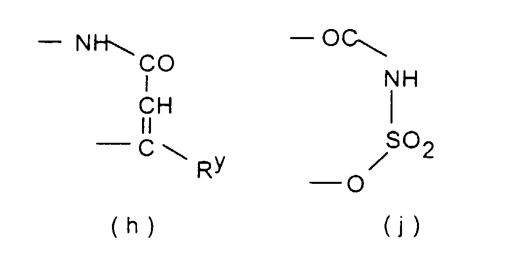 in which R¹⁰ has the meaning given in claim 1, in formula (g) the index a is the number 1 or 2 and R^{y} is hydrogen or alkyl of 1 to 4 C atoms which can be substituted by alkoxy of 1 to 4 C atoms, carboxyl, sulfo, sulfato or phosphato, or is phenyl or naphthyl.

11. A process for preparing a dye of the formula (1) of claim 1, which comprises reacting with one another precursors typical of the respective dye, at least one of which precursors comprises a group of the formula (2), or reacting a halotriazine compound of the formula (21) 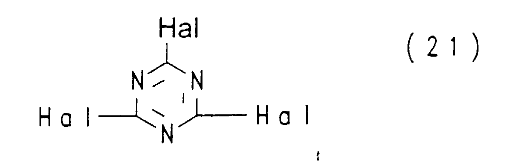 in which Hal is halogen with an amino-containing compound of the formula (20) 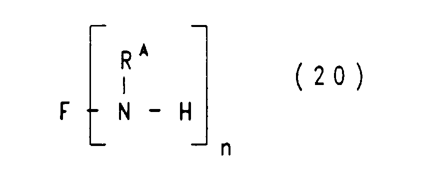 where F, R^{A} and n have the meanings given in claim 1 and with an amino compound of the formula (22) 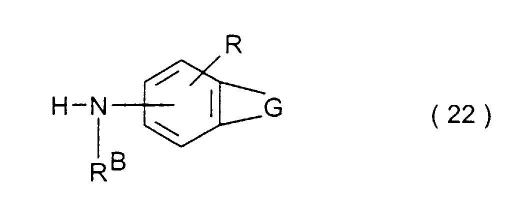 where R^{B}, R and G have the meanings given in claim 1, in any desired sequence.

12. The use of a dye of claim 1 or of a dye prepared as claimed in claim 11 for the dyeing (including printing) of hydroxyl- and/or carboxamido-containing material, especially fiber material.

13. A method of dyeing (including printing) hydroxyl- and/or carboxamido-containing material, especially fiber material, in which a dye is applied to the material and the dye is fixed on the material by means of heat or by means of an alkaline agent or by means of both measures, which comprises employing as the dye a dye of claim 11 or a dye prepared as claimed in claim 11.

## Revendications

1. Colorant contenant des groupements sulfo de formule générale (1) 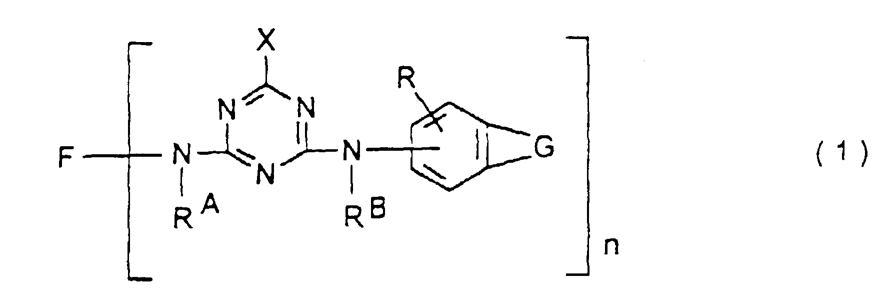 dans laquelle :
F est le radical d'un colorant mono-, di- ou polyazoïque contenant des groupements sulfo ou d'un colorant mono-, di- ou triazoïque de complexe de métal lourd ou d'un colorant d'anthraquinone, d'azométhine, de phénazine, de stilbène, de triphénylméthane, de xanthène, de thioxanthène, de nitroaryle, de naphtoquinone, de pyrènequinone, de pérylènetétracarbimide, de formazan, de formazan de cuivre, de phtalocyanine, de phtalocyanine de cuivre, de phtalocyanine de nickel, ou de phtalocyanine de cobalt ou de triphénodioxazine;
n est le nombre 1 ou 2;
R^{A} est un hydrogène ou un alkyle de 1 à 4 atomes de carbone qui peut être substitué par un halogène, un hydroxyle, un cyano, un alcoxy de 1 à 4 atomes de carbone, un alcoxycarbonyle de 2 à 5 atomes de carbone, un carboxyle, un sulfamoyle, un sulfo, un sulfato ou un phosphato;
R^{B} est un hydrogène ou un alkyle de 1 à 6 atomes de carbone, qui peut être substitué par un halogène, un hydroxyle, un cyano, un alcoxy de 1 à 4 atomes de carbone, un alcoxycarbonyle de 2 à 5 atomes de carbone, un carboxyle, un sulfamoyle, un sulfo, un sulfato, un phosphato, un phényle ou un sulfophényle, ou est un phényle qui peut être substitué par 1, 2 ou 3 substituants parmi le groupe des halogène, alkyle de 1 à 4 atomes de carbone, alcoxy de 1 à 4 atomes de carbone, sulfo et carboxyle;
X est un halogène;
R est un hydrogène, un alkyle de 1 à 4 atomes de carbone, en particulier un méthyle, un alcoxy de 1 à 4 atomes de carbone, un halogène ou un sulfo,
G forme avec le cycle benzénique le radical d'un hétérocycle qui contient au moins un groupement carbonamide de formule -CO-N(R¹⁰)-, dans laquelle R¹⁰ est un hydrogène, un alkyle de 1 à 4 atomes de carbone ou, le cas échéant, un aryle de 6 à 10 atomes de carbone substitué par 1 à 3 substituants du groupe des sulfo, carboxyle, alcoxy de 1 à 4 atomes de carbone, alkyle de 1 à 4 atomes de carbone, halogène, cyano, nitro et amino.

2. Colorant suivant la revendication 1, caractérisé en ce que F est le radical d'un colorant mono- ou diazoïque contenant des groupements sulfo.

3. Colorant suivant la revendication 1, caractérisé en ce que F est le radical d'un colorant mono- ou diazoïque d'un complexe de cuivre 1:1.

4. Colorant suivant la revendication 1, caractérisé en ce que F est le radical d'un colorant d'anthraquinone.

5. Colorant suivant la revendication 1, caractérisé en ce que F est le radical d'un colorant de formazan de cuivre.

6. Colorant suivant la revendication 1, caractérisé en ce que F est le radical d'un colorant de phtalocyanine de cuivre ou de phtalocyanine de nickel.

7. Colorant suivant la revendication 1, caractérisé en ce que F est le radical d'un colorant de triphénodioxazine.

8. Colorant suivant au moins l'une des revendications 1 à 7, caractérisé en ce que X est un chlore ou un fluor.

9. Colorant suivant au moins l'une des revendications 1 à 8, caractérisé en ce que R^{A} est un hydrogène.

10. Colorant suivant au moins l'une des revendications 1 à 9, caractérisé en ce que G est un groupement de formule (a), (b), (c), (d), (e), (f), (g), (h) ou (j) 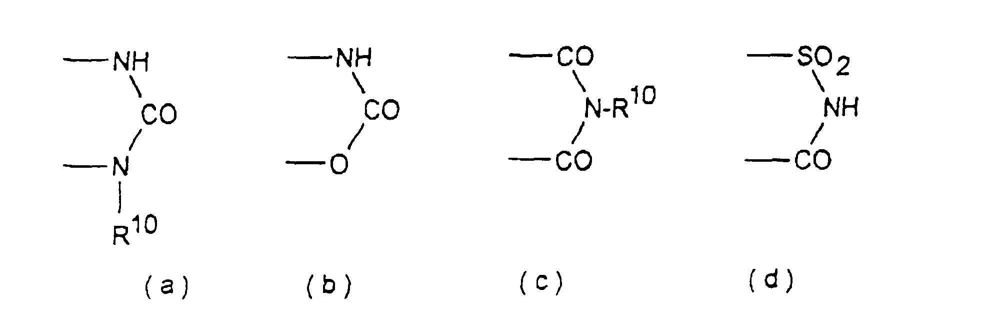 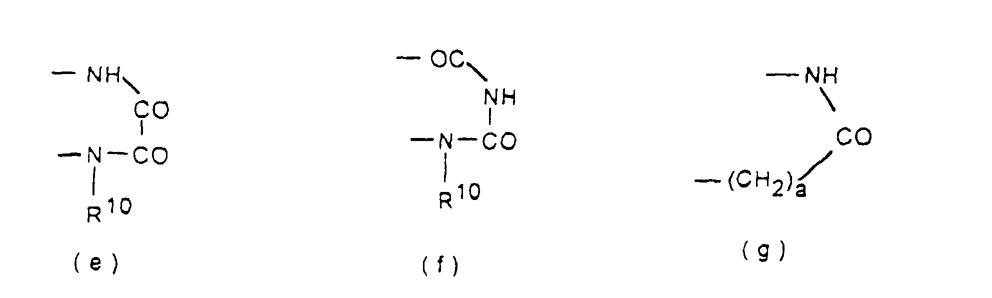 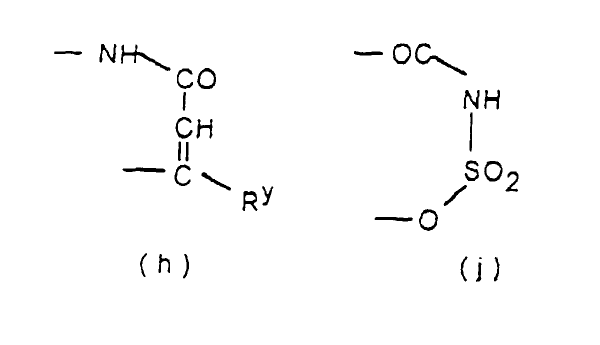 dans lesquelles R¹⁰ a la signification citée à la revendication 1, dans la formule (g) l'indice a est le nombre 1 ou 2 et R^{y} est un hydrogène ou un alkyle de 1 à 4 atomes de carbone qui peut être substitué par un alcoxy de 1 à 4 atomes de carbone, un carboxyle, un sulfo, un sulfato ou un phosphato, ou un phényle ou un naphtyle.

11. Procédé pour la préparation d'un colorant correspondant à la formule générale (1) de la revendication 1, caractérisé en ce qu'on transforme pour chaque colorant des produits préalables typiques l'un avec l'autre dont au moins un contient un groupement de formule générale (2) ou en ce qu'on transforme dans un ordre quelconque un composé halogénotriazine de formule générale (21) 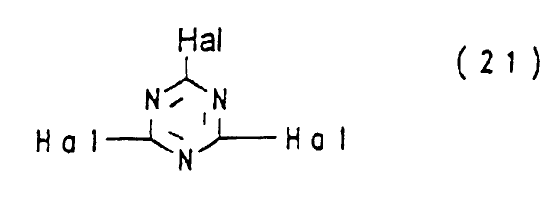 dans laquelle Hal signifie halogène, avec un composé contenant des groupements amino de formule générale (20) 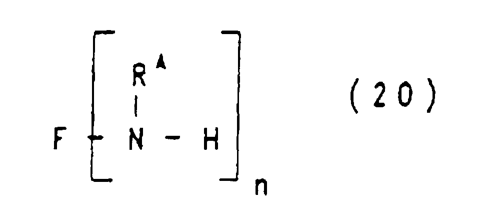 avec F, R^{A} et n ayant les significations citées à la revendication 1 et avec un composé amino de formule générale (22) 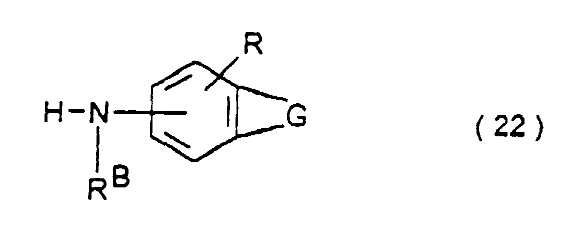 avec R^{B}, R et G ayant les significations citées à la revendication 1.

12. Utilisation d'un colorant de la revendication 1 ou d'un colorant préparé suivant la revendication 11 pour la coloration (y compris l'impression) d'un matériau contenant des groupements hydroxyle et/ou carbonamide, en particulier d'un matériau fibreux.

13. Procédé pour la coloration (y compris l'impression) d'un matériau contenant des groupements hydroxyle et/ou carbonamide, en particulier un matériau fibreux, dans lequel on applique un colorant sur le matériau et on fixe le colorant sur le matériau au moyen de chaleur ou à l'aide d'un agent à action alcaline ou par les deux moyens, caractérisé en ce qu'on utilise comme colorant un colorant suivant la revendication 1 ou un colorant préparé suivant la revendication 11.
